# EUROPEAN PATENT SPECIFICATION

(11) **EP 1 168 158 B1**
(45) Date of publication and mention of the grant of the patent: **10.10.2007**
(21) Application number: 01250212.6
(22) Date of filing: 12.06.2001
(51) Int. Cl.: G06F 9/48

(54) **Context switch architecture and system**
Architektur und Verfahren zur Kontextumschaltung
Architecture et système de commutation de contexte

(30) Priority: 12.06.2000 US 592009
(43) Date of publication of application: 02.01.2002
(73) Proprietor: Broadcom Corporation, Irvine, CA 92617 (US)
(72) Inventor: Lee, Sherman, Irvine, California 92618-3616 (US); Lin, John H., Irvine, California 92618-3616 (US); Chou, Vivian Y., Irvine, California 92618-3616 (US)
(74) Representative: Jehle, Volker Armin

(56) References cited:
- WO-A-00/23891
- US-A- 5 655 132
- US-A- 5 659 749
- US-A- 5 903 919

## Description

Portions of this patent application contain materials that are subject to copyright protection. The copyright owner has no objection to the facsimile reproduction by anyone of the patent document, or the patent disclosure, as it appears in the Patent and Trademark Office file or records, but otherwise reserves all copyright rights whatsoever.

### BACKGROUND

### Field of the Invention

This invention relates to computing systems and, more particularly, to an architecture and system for switching contexts, where the context switching is accelerated through the use of hardware registers to store context data.

### Description of Related Art

The Bluetooth Specification is an open technical specification and a de facto standard for a wireless (radio) communication technology. The Bluetooth technology is a short-range low-power radio link for transmission of digital data and analog voice data. Bluetooth allows the replacement of the numerous and varied proprietary cables that connect one computer or communication device to another with one universal short-range radio link. Users can therefore connect a wide range of computing and telecommunications devices without the need to buy, carry, or connect cables. For example, a computer can communicate with a printer via a radio link instead of a cable. Bluetooth also allows computing devices to connect to a communicating device via a radio link. For example, a computer can communicate with a cell phone via a radio link to access the Internet.

Bluetooth systems connect to each other in piconets, which are formed by a master system connecting with at least one other system sharing the same channel. Most Bluetooth systems can act as either a master or a slave; the terms "master" and "slave" merely refer to the roles played by each device within a particular piconet. One Bluetooth system acts as the master of the piconet. In addition to the master, a piconet may include an additional number of Bluetooth systems that act as slaves. For more details, please refer to "Specification of the Bluetooth System-Core v 1.Ob" available from the Bluetooth Special Interest Group at its web site. Part B, "Baseband Specification", of Vol. I ("Core") ver. 1.Ob of the Bluetooth Specification.

Each master of a Bluetooth piconet can switch contexts from one slave to another. In addition, because a slave can participate in more than one piconet, a slave can switch contests among masters. Traditional approaches render the context-switch process slow and cumbersome. What is needed is a system and method for performing relatively rapid context switches while still retaining an acceptable level of network throughput.

Document US-A-5 655 132 discloses a register file connected to a data memory and an arithmetic logic unit for temporary storage of operands, and a method of managing such register files. In said method, each register has a unique absolute address.

Document US-A-5 659 749 discloses a system and method for performing hardware context switches in a computer-controlled instrumentation system.

Document US-A-5 903 919 discloses a method for selecting one of a plurality of banks of registers in a register file of a data processor.

It is an object of the present invention to provide a method and system of performing a context switch operation to have the ability to quickly switch contexts in order to facilitate fast and easily communication among wireless devices in a network.

This object is achieved by a method as indicated in independent claim 1 and a system as indicated in independent claim 7.

In particular, this object being solved by eliminating the need for context information to be transferred from a host computer to a peripheral system each time a context switch occurs since such a transfer slows down the context-switch operation and burdens the network with transmission of context information.

Advantageous embodiments of the invention are defined in the dependent claims.

An exemplary method of performing a context switch operation involves accessing context data in a first register of a peripheral system, where the first register is associated with a first index register. The method further includes receiving a second index value from a host computer associated with the peripheral system. The host computer's providing of the second index value when the peripheral system had been accessing the first register causes a context switch from the first register to the second register. Accordingly, the method further includes accessing context data in a second register of the peripheral system, where the second register is associated with the second index value. In at least one embodiment of the method, the first and second registers are not architected registers.

In at least one examplary embodiment, accessing the context data in the second register further comprises performing a write function to an identified address within the second register. In at least one other embodiment, accessing the context data in the second register further comprises providing the contents of an identified address within the second register to the host computer. In at least one other embodiment, accessing the context data in the second register further comprises performing a read operation, depending on the value of a control input. In at least one other embodiment, accessing the context data in the second register further comprises performing a write operation, depending on the value of a control input.

At least one examplary embodiment of a system comprises a host computer that includes a microprocessor, at least one peripheral system coupled to the host computer, an interface between the host computer and the peripheral system, and a register access circuit coupled to the peripheral system. The peripheral system includes a first register that is associated with a first index value and also includes a second register that is associated with a second index value. The interface is configured to provide the first and second index values from the host computer to the peripheral system. The register access circuit is configured to access data in the first register if the first index value is provided by the host computer and is further configured to access data in the second register if the second index value is provided by the host computer. In at least one embodiment of the system, the first and second registers are not architected registers.

At least one exemplary embodiment of the peripheral system further includes a state machine, where the state machine includes an address portion, a control portion, and a data portion, where the first and second registers are included in the data portion. At least one embodiment of the address portion includes a register access circuit. At least one other embodiment of the peripheral system further includes a microprocessor. At least one other embodiment of the peripheral system includes at least one index register. At least one other embodiment of the peripheral system includes a plurality of context registers, with each of the plurality of context registers being associated with one of a plurality of index values.

### BRIEF DESCRIPTION OF THE DRAWINGS

**FIG. I** illustrates, in a block diagram, a point-to-point network between two computing devices.
**FIG. 2** illustrates, in a block diagram, a point-to-multipoint network among a plurality of computing devices.
**FIG. 3** is a block diagram illustrating a scatternet that includes multiple piconets with overlapping coverage.
**FIG. 4** is a block diagram illustrating a register architecture for maintaining master and slave context information in a peripheral device.
**FIG. 5** is a block diagram illustrating at least one embodiment of the format of a slave index and slave register.
**FIG. 6** is a block diagram illustrating at least one embodiment of the format of a master index and master register.
**FIG. 7** is a data flow diagram illustrating at least one embodiment of the data flow during the use of a master index to perform context-switching for a slave device.
**FIG. 8** illustrates a data flow diagram illustrating at least one embodiment of the data flow during the use of a slave index to perform context-switching for a master device.
**FIG. 9** illustrates at least one embodiment of a system embodying the context-switch architecture of the present invention.

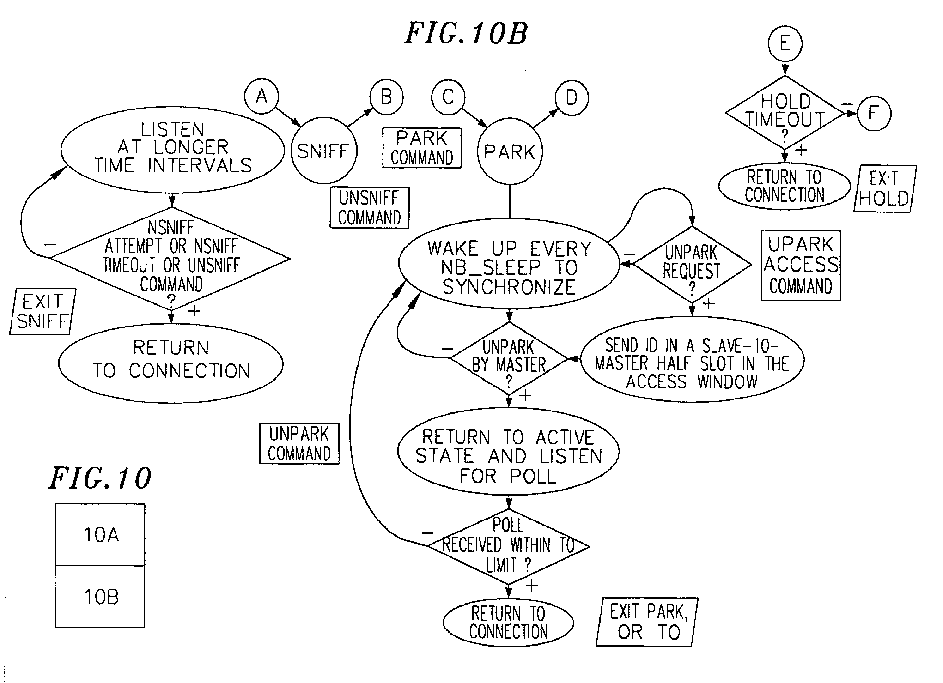

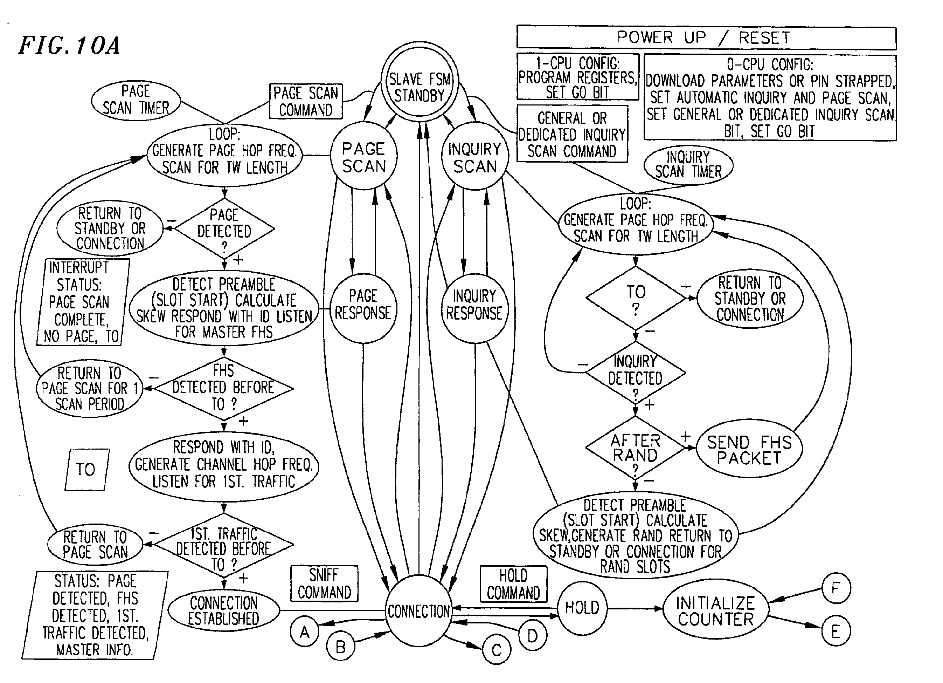

**FIG. 10**, including **FIG. 10a** and **FIG. 10b,** is a state transition diagram illustrating a state machine according to one embodiment of the present invention.
**FIG. 11** is a flowchart illustrating at least one embodiment of a master parameter access module.
**FIG. 12** is a flowchart illustrating at least one embodiment of a slave parameter access module.

### DETAILED DESCRIPTION

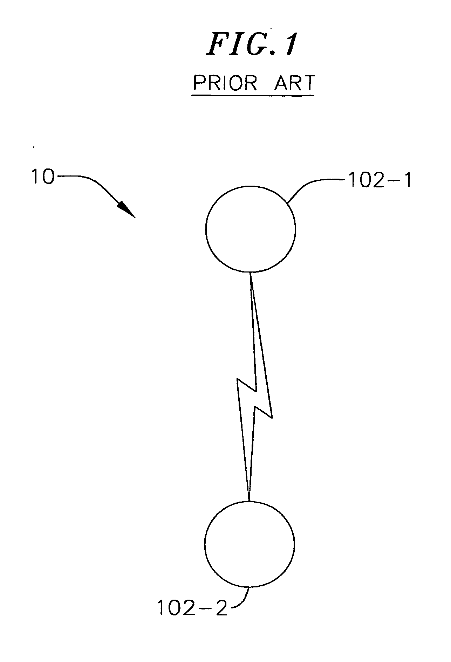

**Figure 1** illustrates a network **10** that includes two computing devices **102-1,102-2.** Network **10** is, for example, a wireless Bluetooth point-to-point piconet where wireless device **102-1** is a master Bluetooth system and wireless device **102-2** is a slave Bluetooth system, where the master **102-1** and slave **102-2** share the same channel. One skilled in the art will recognize that a point-to-point network need not include Bluetooth devices **102-1, 102-2,** but, rather, may comprise any type of computing device.

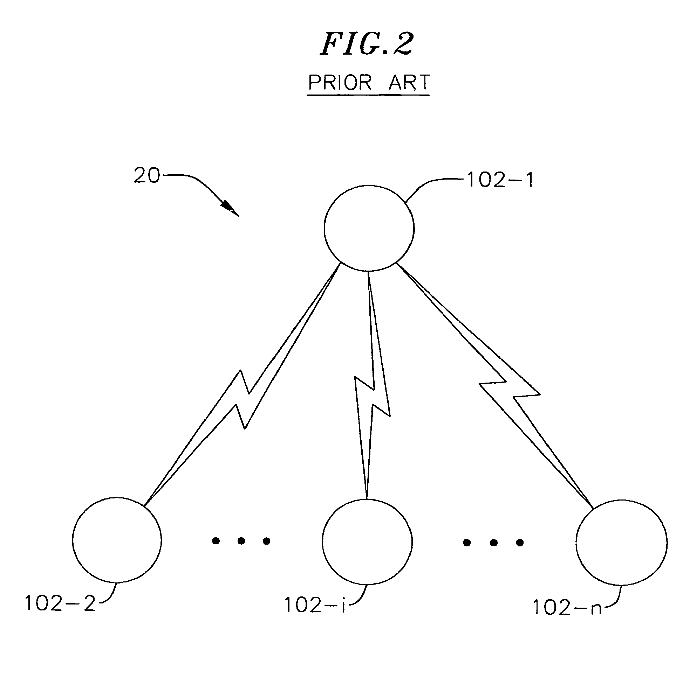

**Figure 2** illustrates a network **20** that includes a plurality of wireless devices **102-1,102-2... 102-i... 102-n** (2 ≤ i ≤ n). Wireless network **20** is, for example, a point-to-multipoint Bluetooth piconet where wireless device **102-1** is a master Bluetooth system and wireless devices **102-2** through **102-n** are slave Bluetooth systems. As with all piconets, the master **102-1** and all the slaves **102-2** through **102-n** communicate over the same channel. In at least one embodiment, up to seven slaves can be active in the piconet **102.** One skilled in the art will recognize that the number of active slaves supported in a piconet depends on many variables and design considerations. Any of a number of slaves can be supported. One skilled in the art will further recognize that a point-to-point network need not include Bluetooth devices **102-1, 102-2,** but, rather, may comprise any type of computing device.

In addition to the active slaves **102-2,102-i** through **102-n** illustrated in **Figure 2,** a point-to-multipoint piconet **20** may include many additional slaves that can remain locked to the master **102-1** in a so-called "parked" state. When a slave does not need to participate on the piconet channel, but still needs to remain synchronized to the channel it can enter the low-power parked state. These parked slaves cannot be active on the piconet channel, but remain synchronized to the master. In at least one embodiment, up to 256 parked slaves may remain locked to the master. For additional information regarding an implementation of the synchronization of master and slave Bluetooth systems, please refer to the commonly assigned application bearing U.S. Patent No. 6,650,880, entitled "Wireless Data Communications Using FIFO For Synchronization Memory," by inventors Sherman Lee, Vivian Y. Chou, and John H. Lin, filed June 12, 2000.

For both active and parked slaves in a single piconet **10, 20,** the master **102-1** controls the channel access. This results in a need for the master **102-1** to switch control from one slave to another as it controls channel access within the piconet. The master **102-1** identifies each slave through a unique network address assigned to each slave. When a transfer of information between two slaves in a piconet **10, 20** is desired, the master **102-1** coordinates transmission between two slaves.

Referring to **Figure 2,** for instance, slave **102-2** could be a wireless personal digital assistant ("PDA") device equipped with a Bluetooth system and slave **102-i** could be a wireless cellular telephone equipped with a Bluetooth system. In such case, the master **102-1** can coordinate communications between the two slaves **102-2, 102-i** over the piconet channel to exchange, for instance, phone number information. To do so, the master **102-1** must switch focus between the first slave **102-2,** commanding it to transmit phone number data to the master **102-1,** and the second slave **102-i,** commanding it to receive phone number data from the master **102-1.** This switch in focus, referred to herein as a "context switch" requires the master to be able to store and access context information regarding each slave in relatively rapid succession.

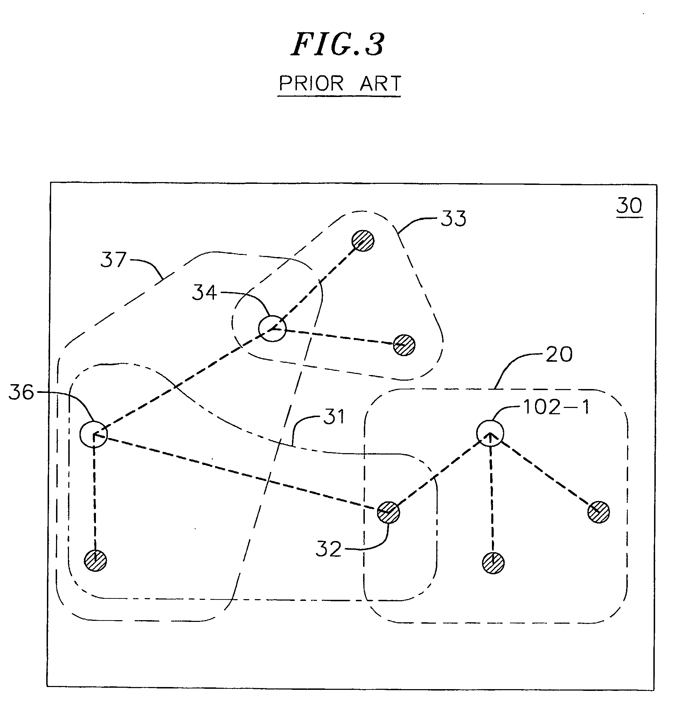

**Figure 3** illustrates that context-switching ability is also required for slaves that participate in more than one piconet. **Figure 3,** illustrates, for instance, a "scatternet" **30,** formed from multiple networks with overlapping coverage. A Bluetooth piconet **31, 33, 20 (Figure 2)** can form part of a larger Bluetooth scatternet **30.** Each piconet **31, 33,20** (Figure 2) can only have a single master **36, 34** and **102-1,** respectively. However, **Figure 3** illustrates that slaves can participate in multiple piconets on a time-division multiplex basis. For instance, in **Figure 3** slave **32** participates in two piconets: piconet **20** having master **102-1** and piconet **31** having master 36. In addition, a master **34** in one piconet **33** can be a slave in another piconet 37.

The discussion above illustrates the need, in a network environment such as, for instance, a wireless network as specified in the Bluetooth Specification, for both masters and slaves to have the ability to quickly switch contexts in order to facilitate orderly, reasonably rapid communication among wireless devices. In a different context, several schemes exist for switching contents among software application programs. These schemes usually involve storing context information in memory and then, during a context switch, loading the information from memory into a particular register or set of registers. Such software-based context-switching schemes are disclosed, for example, in U.S. Pat. No. 6,061,711, entitled "Efficient Context Saving and Restoring in a Multi-Tasking Computing System Environment", and issued to Song et al. and also in U.S. Pat. No. 5,812,823, entitled "Method and System for Performing an. Emulation Context Save and Restore That is Transparent to the Operating System", and issued to Kahle et al. Song '711 and Kahle '823.

In a software-based context-switching scheme, a set of hardware registers is used to contain current context information. When a context switch occurs, the information in the registers for outgoing context is stored from the registers to a memory location, such as a location in main memory or in a cache. The context information for the incoming context is then loaded from a different memory location into the registers. This storing to, and loading from, memory to transfer, via software, data between memory and hardware registers is time-consuming and processor-intensive. To employ such an approach for switching contexts among masters and slaves in a network of computing devices, such as a network of Bluetooth systems, would result severely limited network throughput during the context-switch process.

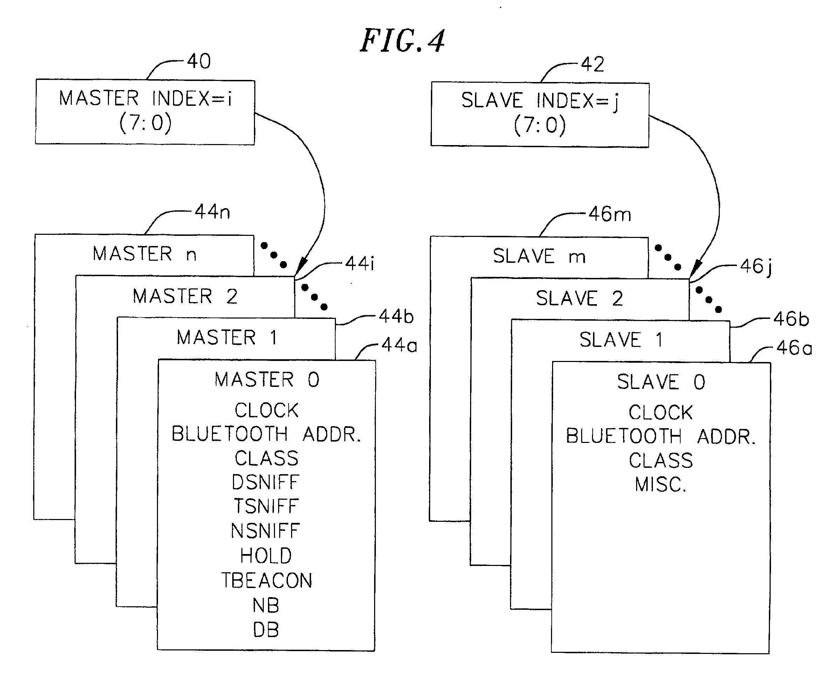

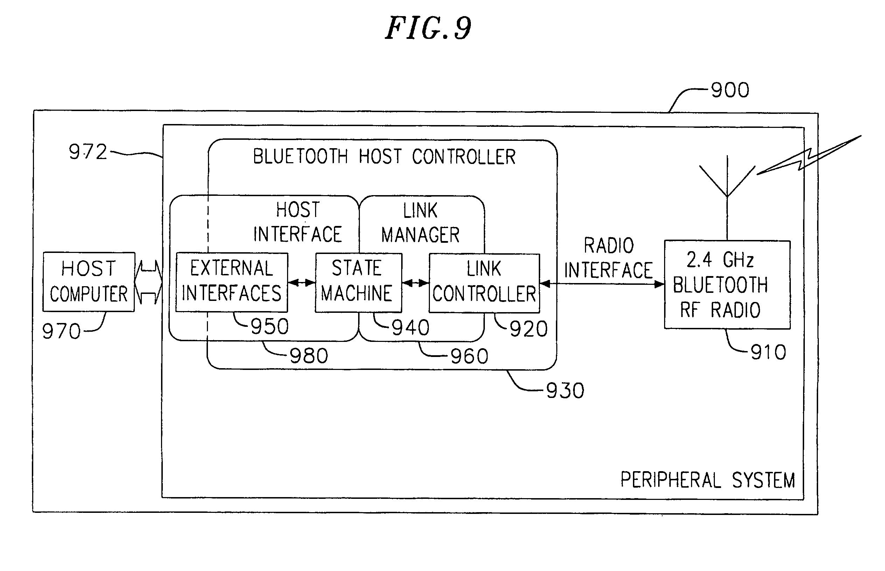

**Figure 4** is a generalized block diagram illustrating a context-switching register architecture according to at least one embodiment of the present invention. A preliminary discussion of general register architectures is appropriate before discussing the particular aspects of the register architecture of the present invention. Computer systems, such as the host computer 970 illustrated in Figure 9, typically have a relatively large, relatively slow main memory. Typically, multiple dynamic random access memory (DRAM) modules comprise the main memory system. The time that it takes to transfer a set of bytes of information from the main memory to the microprocessor ("access time") of modern DRAMs is longer than the clock cycle length of modern microprocessors.

In order to provide a faster means for the microprocessor to access stored information, a set of registers is usually provided within the microprocessor. As used herein, a register is a storage location provided within the microprocessor or a peripheral device, where the storage location may be identified by an instruction as storing an operand. In other words, a register is "programmer visible"; the programmer may code an instruction that has the register as an operand identifier. Since registers are included within the microprocessor or peripheral, and because the register address is coded directly into an instruction, registers can be accessed rapidly.

**Figure** 4 illustrates that the architecture scheme in accordance with at least one embodiment of the present invention includes a plurality of hardware registers **40, 42, 44a-44n, 46a-46m** that maintain context information. In at least one embodiment, the hardware registers **40, 42, 44a-44n, 46a-46m** are provided in a peripheral system **972 (Figure 9)** rather than in the microprocessor of a host computer **970 (Figure 9).** In at least one embodiment, n=8 and m=8, such that eight master registers 44a-44n and eight slave registers **46a-46m** are provided. In at least one other embodiment, which is illustrated in **Figure 4,** four master registers 44a-44n and four slave registers 46a-46n are provided. The architecture illustrated in **Figure 4** also includes a master index **40** and a slave index register **42.** Because many devices can act as either masters or slaves, at least one embodiment of the present invention includes master registers 44a-44n and master index register **40,** as well as slave registers **46a-46m** and slave index register **42** in every network device operating in a master/slave environment. One skilled in the art will recognize that at least one embodiment of the present invention need only include the slave registers **46a-46m** and the slave index register **42,** but not the master registers 44a-44n or the master index register **40,** in devices that only act as masters. Similarly, at least one embodiment of the present invention need include only the master registers **44a-44n** and the master index register **40,** but not the slave registers **46a-46m** or the slave index register **42,** in devices that only act as slaves.

One skilled in the art will further recognize that numerous design considerations affect the number, size and organization of the master registers **44a-44n** and slave registers **46a-46m.** The present architecture is therefore scalable to accommodate any number of master registers **44a-44n** and slave registers **46a-46m.** For instance, while a computing device acting as a master can maintain four slave registers **46a-46m,** the number of slave registers **46a-46m** is, of course, scalable. For example, because a master **102-1 (Figure 1), 36 (Figure** 3) can control up to seven slaves **102-2-102-n** according to ver. **I.Ob** of the Bluetooth Specification, at least one embodiment of the present invention includes seven slave registers **46a-46m** in each Bluetooth system **102-1 (Figure 1), 36 (Figure 3)** that is capable of acting as a master. In at least one other embodiment, a Bluetooth master system **102-1 (Figure 1), 36 (Figure 3)** includes 256 slave registers **46a-46m** in order to maintain context information for 256 parked slaves.

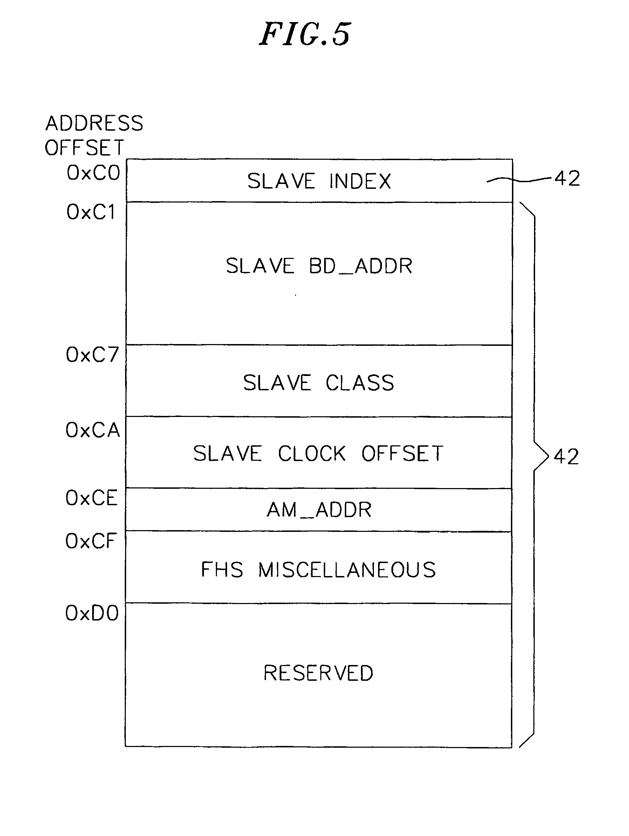

**Figure 5 and Table 1** set forth an exemplary format of the information stored in each slave register **46.** One skilled in the art will recognize that the format of the slave registers **46** will depend on specific design considerations. In general, the slave registers **46** contain any context information and parameters necessary to allow the master system **102-1 (Figure 1), 36 (Figure** 3) to quickly switch contexts among slave systems. The format and the addresses of the information set forth in **Figure 5** and **Table 1** should be taken to be an exemplary format and address scheme only. One skilled in the art will recognize that the fields may be stored in any order, at any register location.

**Table 1**

| *address* | *name* | *reset* | *readable lwritable* | *bit location* | *connection field* | *description* | *# of bits* | *default* |
|---|---|---|---|---|---|---|---|---|
| 0xC1 | NAP_hi | s | R/W | [7:0] | NAP[15:8] | 0xc1 | 8 | x00 |
| | NAP-lo | s | R/W | [7:0] | NAP [7:0] | 0xc2 | 8 | x00 |
| | UAP | s | R/W | [7:0] | UAP[7:0] | 0xc3 | 8 | x00 |
| | LAP_hi | s | R/W | [7:0] | LAP[23:16] | 0xc4 | 8 | x00 |
| | LAP_md | s | R/W | [7:0] | LAP[15:8] | 0xc5 | 8 | x00 |
| | LAP_lo | s | R/W | [7:0] | LAP[7:0] | 0xc6 | 8 | x00 |
| 0xC7 | Ctass_hi | s | R/W | [7:0] | class[23:16] | 0xc7 | 8 | x00 |
| | Ctass_md | s | R/W | [7:0] | class[15:8] | 0xc8 | 8 | x00 |
| | Class_lo | s | R/W | [7:0] | class[7:0] | 0xc9 | 8 | x00 |
| 0xCA | clock offset upper | s | R/W | [7:0] | ctock[27:24] | 0xca | 8 | x00 |
| | clock offset hi | s | R/W | [7:0] | clock[23:16] | 0xcb | 8 | x00 |
| | clock offset md | s | R/W | [7:0] | clock[15:8] | 0xcc | 8 | x00 |
| | clock offset lo | s | R/W | [7:6] | clock[7:0] | 0xcd | 2 | 0 |
| 0xCE | AM_ADDR | s | R/W | [2:0] | AM_ADDR | 0xce | 3 | 0 |
| 0xCF | FHS_misc | s | R/W | [7:6] | Scan Repetition | 0xcf | 2 | 0 |
| | | s | R/W | [5:4] | Scan Period | | 2 | 0 |
| | | s | R/W | [3:1] | Page Scan Mode | | 3 | 0 |

The NAP (Non-significant Address Part), UAP (Upper Address Part), and LAP (Lower Address Part) fields reflected in **Table 1** together comprise the Bluetooth device network address (sometimes referred to herein as the "BD address") for the slave system being tracked in the particular register **46.** The BD address is, in at least one embodiment, 48 bits long.

The class fields (Class_hi, Class_md, Class_lo) reflected in **Table 1** refer to the particular class of Bluetooth slave system being tracked in the particular register **46.** For instance, PC computers, cellular phones, and personal digital assistants represent different classes of Bluetooth slave devices.

The clock offset fields (clock offset upper, clock offset hi, clock offset md, clock offset lo) reflected in **Table 1** represent a delta value between the master's clock and the slave's clock that the slave system maintains in order to synchronize its communications with the master system. This synchronization is required for the hopping scheme provided for in the Bluetooth Specification. The hopping scheme provides that the channel on which the Bluetooth systems in a piconet operate is represented by a pseudo-random hopping sequence through the available channels in the 2.4 GHz ISM band. The hopping sequence is unique for a piconet and is determined by the BD address of the master. The phase in the hopping sequence is determined by the Bluetooth clock of the master system. For this reason, the slave maintains the clock offset fields in order to hop in accordance with the master's clock.

The AM_ADDR field represented in **Table 1** is an active member address field containing the active slave's particular address within the piconet. It is used to distinguish among the active members of a piconet. For instance, a piconet that is capable of containing up to seven active slaves must provide for a unique piconet address for each of the active slaves. **Table 1** illustrates that, in at least one embodiment, the AM_ADDR field is three bits long because three bits are needed to generate a binary representation of the number **7** (i.e., lb' 111').

The FHS_misc field represented in **Table 1** is a field containing the following sub-fields: scan repetition, scan period, and page scan mode. These fields relate to time periods, intervals, and mode for the paging procedure by which connections are established in Bluetooth piconets. A master device sends out a page message to a slave device with which the master is attempting to establish a connection. A slave that is not already connected periodically wakes up in a page scan state and looks for pages that may have been sent to it. In the page scan state, the slave scans for, and receives, page messages. When a page message is successfully received by the slave, there is a synchronization between the master and the slave, thereby establishing a connection between the master and the slave.

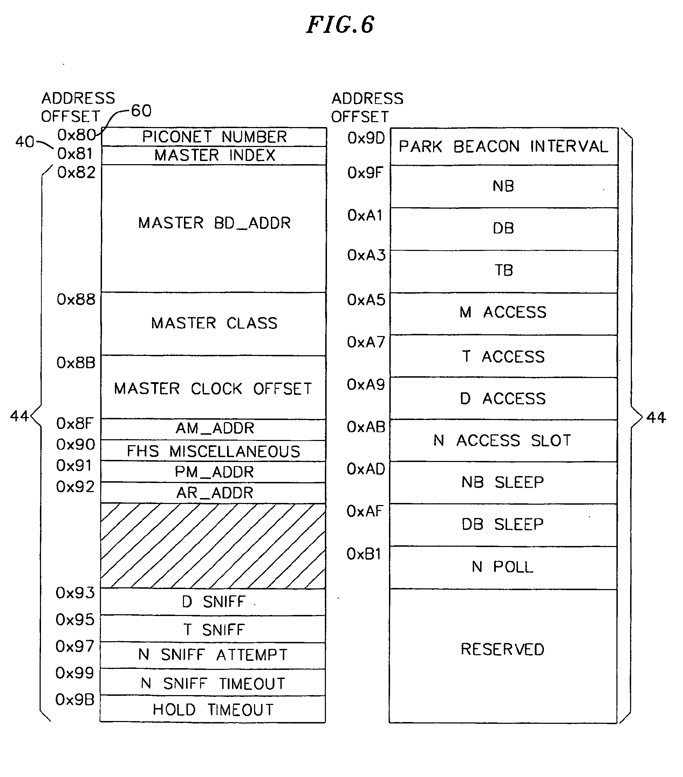

**Figure 6** and **Table 2,** below, set forth an exemplary format of the information stored in each master register **44.** One skilled in the art will recognize that the format of the master registers **44** will depend on specific design considerations. In general, the master registers **44** contain any context information and parameters necessary to allow the slave system **102-2-102-n (Figure 2)** to quickly switch contexts among master systems. The format and the addresses of the information set forth in **Figure 6** and **Table 2** should be taken to be an exemplary format and address scheme only. One skilled in the art will recognize that the fields may be stored in any order, at any register location.

**Table 2**

| *address* | *name* | *reset* | *readable lwritable* | *bit location* | *connection field* | *description* | # *of bits* | *default* |
|---|---|---|---|---|---|---|---|---|
| 0x82 | NAP_hi | s | R/W | [7:0] | NAP[15:8] | 0x82 | 8 | x00 |
| | NAP-lo | s | R/W | [7:0] | NAP [7:0] | 0x83 | 8 | x00 |
| | UAP | s | R/W | [7:0] | UAP[7:0] | 0x84 | 8 | x00 |
| | LAP_hi | s | R/W | [7:0] | LAP[23:16] | 0x85 | 8 | x00 |
| | LAP_md | s | R/W | [7:0] | LAP[15:8] | 0x86 | 8 | x00 |
| | LAP_10 | s | R/W | [7:0] | LAP[7:0] | 0x87 | 8 | x00 |
| 0x88 | Class_hi | s | R/W | [7:0] | class[23:16] | 0x88 | 8 | x00 |
| | Class_md | s | R/W | [7:0] | class[15:8] | 0x89 | 8 | x00 |
| | Class_lo | s | R/W | [7:0] | class[7:0] | 0x8a | 8 | x00 |
| 0x8B | clock offset upper | s | R/W | [7:0] | clock[27:24] | 0x8b | 8 | x00 |
| | clock offset hi | s | R/W | [7:0] | clock[23:16] | 0x8c | 8 | x00 |
| | clock offset md | s | R/W | [7:0] | clock[15:8] | 0x8d | 8 | x00 |
| | clock offset lo | s | R/W | [7:6] | clock[7:0] | 0x8e | 2 | 0 |
| 0x8F | AM_ADDR | s | R/W | [2:0] | AM_ADDR | 0x8f | 3 | 0 |
| 0x90 | FHS_misc | s | R/W | [7:6] | Scan Repetition | 0x90 | 2 | 0 |
| | | | R/W | [5:4] | Scan Period | | 2 | 0 |
| | | | R/W | [3:1] | Page Scan Mode | | 3 | 0 |
| 0x91 | PM_ADDR | s | R/W | [2:0] | assigned PM_ADDR by master | 0x91 | 8 | 0 |
| 0x92 | AR_ADDR | s | R/W | [2:0] | assigned AR_ADDR by master | 0x92 | 8 | 0 |
| 0x93 | Dsniff_hi | s | R/W | [7:0] | connection specific Dsniff | 0x93 | 8 | x00 |
| | Dsniff_lo | s | R/W | [7:0] | | Ox94 | 8 | x00 |
| 0x95 | Tsniff_hi | s | R/W | [7:0] | Tsniff | 0x95 | 8 | x00 |
| | Tsniff_lo | s | R/W | [7:0] | | 0x96 | 8 | x00 |
| 0x97 | N sniff attempt hi | s | R/W | [7:0] | N sniff attempt | 0x97 | 8 | x00 |
| | N sniff attempt lo | s | R/W | [7:0] | | 0x98 | 8 | x00 |
| 0x99 | N sniff timeout hi | s | R/W | [7:0] | N sniff timeout | 0x99 | 8 | x00 |
| | N sniff timeout lo | s | R/W | [7:0] | | 0x9a | 8 | x00 |
| 0x9B | holdTO_hi | s | R/W | [7:0] | holdTO | 0x9b | 8 | x00 |
| | holdTO_lo | s | R/W | [7:0] | | 0x9c | 8 | x00 |
| 0x9D | Tbeacon_hi | s | R/W | [7:0] | Park Beacon interval | 0x9d | 8 | x00 |
| 0x9D | Tbeacon_lo | s | R/W | [7:0] | | 0x9e | 8 | x00 |
| 0x9 | NB_hi | s | R/W | [7:0] | NB | 0x9f | 8 | x00 |
| | NB_lo | s | R/W | [7:0] | | 0xa0 | 8 | x00 |
| 0xA1 | DB_hi | s | R/W | [7:0] | DB | 0xa1 | 8 | x00 |
| | DB _lo | s | R/W | [7:0] | | 0xa2 | 8 | x00 |
| 0xA3 | TB_hi | s | R/W | [7:0] | TB | 0xa3 | 8 | x00 |
| | TB_lo | s | R/W | [7:0] | | 0xa4 | 8 | x00 |
| 0xA5 | Maccess_hi | s | R/W | [7:0] | Maccess | 0xa5 | 8 | x00 |
| | Maccess_lo | s | R/W | [7:0] | | 0xa6 | 8 | x00 |
| 0xA7 | Taccess_hi | s | R/W | [7:0] | Taccess | 0xa7 | 8 | x00 |
| | Taccess_lo | s | R/W | [7:0] | | 0xa8 | 8 | x00 |
| 0xA9 | Daccess_hi | s | R/W | [7:0] | Daccess | 0xa9 | 8 | x00 |
| | Daccess_lo | s | R/W | [7:0] | | 0xaa | 8 | x00 |
| 0xAB | Nacc_slot hi | s | R/W | [7:0] | Nacc_slot | 0xab | 8 | x00 |
| | Nacc_slot lo | s | R/W | [7:0] | | 0xac | 8 | x00 |
| 0xA | NB_sleep hi | s | R/W | [7:0] | NB_sleep | 0xad | 8 | x00 |
| | NB_sleep lo | s | R/W | [7:0] | | 0xae | 8 | x00 |
| 0xAF | DB_sleep hi | s | R/W | [7:0] | DB_sleep | 0xaf | 8 | x00 |
| | DB_sleep lo | s | R/W | [7:0] | | 0xb0 | 8 | x00 |
| 0xB1 | Npoll hi | s | R/W | [7:0] | Npoll | 0xb1 | 8 | x00 |
| | Npoll lo | s | R/W | [7:0] | | 0xb2 | 8 | x00 |

The NAP (Non-significant Address Part), UAP (Upper Address Part), and LAP (Lower Address Part) fields reflected in **Table 2** together comprise the BD address for the master system being tracked in the particular register **44.** The BD address is, in at least one embodiment, 48 bits long.

The class fields (Class_hi, Class_md, Class_lo) reflected in **Table 2** refer to the particular class of Bluetooth master system being tracked in the particular register **44.**

The master clock offset fields (clock offset upper, clock offset hi, clock offset md, clock offset lo) reflected in **Table 2** represent a delta value between the slave's clock and the master's clock. The master can take this value into account when communicating with a slave in order to plan for a more efficient transmission.

The AM_ADDR field represented in **Table 2** is an active member address field containing the master's particular address within the piconet. It is used by the slave when addressing communication packets to the master. The AM_ADDR field in the master register **44** is a 3-bit field as explained above in connection with **Table 1.**

The FHS_misc field represented in **Table 2** is a field containing the following sub-fields: scan repetition, scan period, and page scan mode, as is explained above in connection with **Table 1.**

The PM_ADDR and AR_ADDR fields relate to the park mode. That is, even when a slave is parked, the slave maintains master context data in its master registers **44.** When a slave device transitions from a park mode to a slave mode, the slave gives up its AM_ADDR active member address value. Instead, the parked slave receives two new addresses, assigned by the master, to be used in the park mode: PM_ADDR (parked member address) and AR_ADDR (access request address). PM_ADDR distinguishes a parked slave from other parked slaves. In tracking context data for one or more masters, the parked slave keeps track of its PM_ADDR for each master - the PM_ADDR is used by the master in a master-initiated unpark procedure. The AR_ADDR is a master-assigned address to be used by the slave in a slave-initiated unpark procedure.

The next several fields depicted in **Table 2** relate to a "sniff" mode. These fields include the Dsniff fields (Dsniff_hi, Dsniff_lo), the Tsnifffields(Tsniff_hi, Tsniff_lo), the Nsniff attempt fields (Nsniff attempt hi, Nsniff attempt lo), and the Nsniff timeout fields (N sniff timeout hi, N sniff timeout lo). In the sniff mode, the duty cycle of an active slave's listen activity is reduced because the time slots in which the master can start transmission to a specific slave are reduced to specified time slots. Therefore, when an active slave is in sniff mode, it need only listen during its assigned sniff slots. These so-called sniff slots are spaced regularly within an interval of *Tsniff.* The slave must listen at the *Dsniff* slot every sniff period, *Tsniff,* for an *N_{sniff allempt}* number of times. If the slave receives a packet during its sniff period, it should continue listening as long as it continues to receive packets. Once the slave stops receiving packets, it should continue listening for *Nsniff timeout* more slots or the remaining of the *N_{sniff attempt}* number of slots, whichever is greater.

The hold timeout fields (holdTO hi, holdTO_lo) relate to a hold mode. A slave can be put into a hold mode wherein the slave is still active but its communication abilities on the channel are temporarily limited. During the hold "mode, the slave keeps its active member address (AM_ADDR). Before the slave enters the hold mode, the slave and master agree on the time duration that the slave is to remain in the hold mode. This time value is stored in the hold timeout fields.

The remaining fields represented in **Table 2** relate to the beacon channel. To support parked slaves, the master establishes a beacon channel when one or more slaves are parked. The beacon channel is used for the transmission from the master to the parked slave of information that the slave can use for re-synchronization. The beacon channel is also used to carry messages to the parked slaves to change the beacon parameters and to carry general broadcast messages to the parked slaves. Finally, the beacon channel is used for the unparking of one or more parked slaves.

**Figure 9** illustrates the organization of at least one embodiment of a Bluetooth system **900,** which is relevant to the following discussion. **Figure 9** illustrates that a Bluetooth system **900,** such as a cell phone or a PDA, consists of a host computer **970** and a peripheral system **972.** The peripheral system **972** includes an analog component and a digital component. The analog component is a radio unit **910.** For additional details concerning at least one aspect of at least one embodiment of the radio unit **910,** please refer to co-pending application U.S. Pat. No. 6,560,449 , by inventor Albert Liu, entitled "Image-Rejection I/Q Demodulators", filed June 12,2000. For additional details concerning the operation of at least one aspect of at least one other embodiment of the radio unit **910,** please refer to co-pending U.S. Pat. No. 6,778, 594, by inventor Albert Liu, entitled "Receiver Architecture Employing Low Intermediate Frequency And Complex Filtering", filed June 12, 2000.

The digital component of the peripheral system **972** is the host controller **930.** A computing device such as those **102-1,102-2** through **102-n** depicted in **Figures 1** and **2** need not necessarily contain all of the elements depicted in **Figure 9** in order to practice the present invention.

The host controller **930** includes hardware components (circuitry) **920, 940, 950** and software components **960, 980.** The external interface **950** performs link management and provides interface functions with a host computer **970.** The host **970** communicates with the host controller **930** via the software of the host interface **980** as it operates on the external interface hardware **950.** The host **970** receives asynchronous event notifications when a significant event has occurred. The host **970** parses the notification to determine what event has occurred. A more detailed discussion of the host interface **980** can be found at Part H:1, "Host Controller Interface Functional Specification" of ver. 1.0b of the Bluetooth Specification.

The link controller **920** performs Bluetooth baseband processing and handles physical layer protocols. The Link Manager software **960** discovers other remote link manager programs and utilizes the services of the link controller **920** to communicate with them.

**Figure 9** illustrates that the Link Manager software **960** runs on the state machine **940.** The state machine **940** provides hardware circuits that provide access to the register architecture discussed above in connection with **Figure 4.**

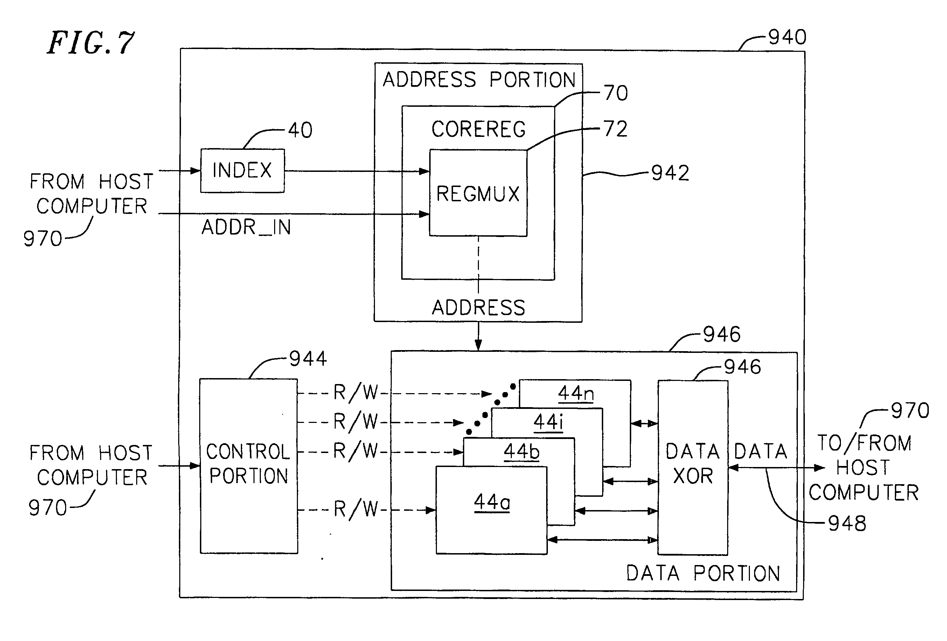

**Figures 7, 8** and **9** illustrate that the state machine **940** includes a control portion **944,** a data portion 946, and an address portion **942.** The data portion of the state machine **940** includes the master registers **44a-44n,** the master index register **40,** the slave registers **46a-46m,** and the slave index register **42.** The address portion **942** of the state machine **940** includes circuits referred to as the Corereg circuit **970** and the Regmux circuit **972.**

**Figure 7** is a block diagram depicting the use of the master index to perform context-switching for a slave device. **Figure 7** illustrates that the contents of the master index register **40** are used to select which of the master registers **44** the slave wishes to access. For instance, if the slave wishes to access a first master register **44a,** then a value of 1 b'00000000' is loaded by the host **970** into the master index register **40.** For each of the remaining master registers **44b-44n,** a corresponding index value is loaded into the master index register **40** when the slave needs to retrieve context data stored in that particular master register **44b-44n.** Once the master index register **40** is loaded with the appropriate value, then the Corereg circuit **70** and Regmux circuit **72** perform logic, described below, to read from, or write to, the master register **44** of interest. A context switch, when a slave desires to switch contexts among masters, is thus performed simply by the host computer's 970 changing of the value in the master index register **40.**

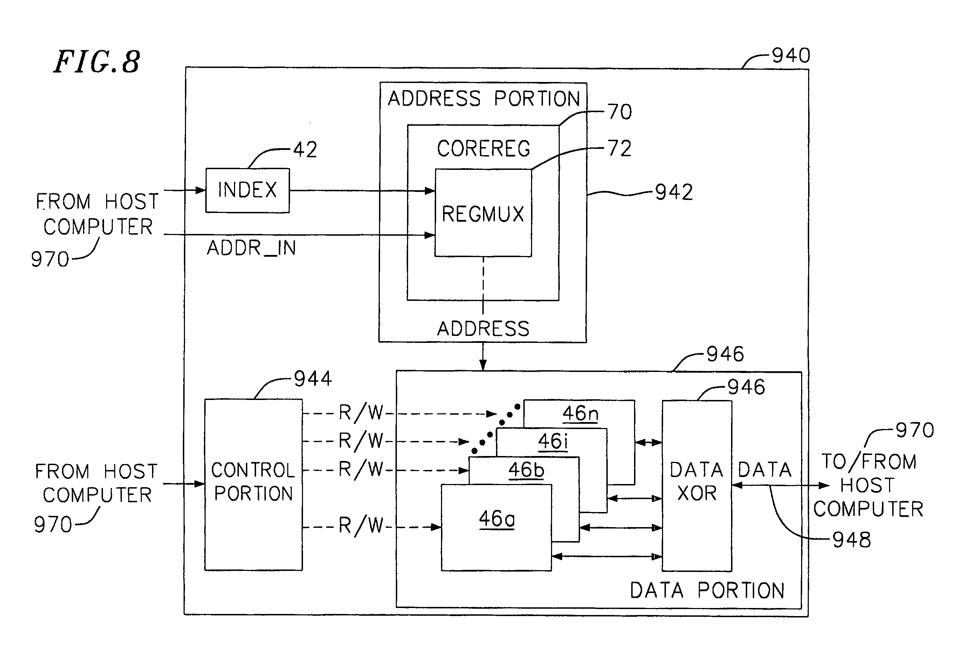

**Figure 8** is a block diagram depicting the use of the slave index to perform context-switching for a master device. **Figure 8** illustrates that the contents of the slave index register **42** are used to select which of the slave registers **46** the master wishes to access. For instance, if the master wishes to access a third master register **46c,** then a value of lb' 00000011' is loaded into the slave index register **42.** For each of the remaining slave registers, a corresponding index value is loaded into the slave index register **42** when the master wishes to retrieve context data stored in that particular master register.

**Figures 8** and **9** illustrate that, once the host computer **970** loads the slave index register **42** with the appropriate value, then the Corereg circuit **70** and Regmux circuit **72** perform logic, described below, to read from, or write to, the slave register **46** of interest. A context switch, when a master desires to switch contexts among slaves, is thus performed simply by the host computer's **970** changing of the value in the slave index register **42** so that the Corereg **70** and Regmux **72** circuits can operate to retrieve and/or modify the specified contents of the slave register **46** of interest.

The discussion above illustrates that master system having a slave index **42** and one or more slave registers **46** can quickly perform context-switching among slaves. Similarly, **Figure 7** illustrates that a slave system having a master index **40** and one or more master registers **44** can quickly perform context-switching among masters. Because the information described above in **Table 1** is stored in the slave registers **46,** and the information described above in **Table 2** is stored in the master registers **44,** the context information need not be stored in software data structures nor stored on the microprocessor of the host computer **970.** This allows the context data to be accessed more quickly than if it were transferred from memory to registers upon a context switch.

While software running on the host computer **970** does not need to store the context information, it still needs to be able to identify and access the particular context data for the incoming slave that a master is interested in switching to, and must be able to identify and access the particular context data for the incoming master that a slave is interested in switching to. This function of identifying and accessing the context information for the incoming slave or master is accomplished through the use of a slave index 42 and master index **40,** respectively. In at least one embodiment, the slave index **42** is located at register memory location 0xC0 and the master index **40** is located at register memory location 0x81.

It is significant to note, as the preceding discussion illustrates, that the present context-switch registers **40, 42, 44a-44n, 46a-46m** are provided in the peripheral system **972** rather than in the host computer 970 of a computing device **900.** With such a scheme, there is no need for the context information to be transferred from the host computer **970** to the peripheral system **972.** This is in direct contrast to, and provides many advantages over, systems that retain context data in the host system. One such system is disclosed in U.S. Pat. No. 5,926,646, entitled "Context-Dependent Memory-Mapped Registers for Transparent Expansion of Register File," and issued to Pickett et al. (hereinafter referred to as "Pickett '646a"). Pickett '646 provides within a microprocessor an expanded set of registers in addition to the architected set of registers. In contrast to the Pickett '646 approach, the present architecture does not require that the context information be moved from registers (architected or otherwise) in the host computer **970** to the peripheral system **972** each time a context switch occurs. Such transfer slows down the context-switch operation and burdens the network with transmission of context information. The present architecture therefore provides for versatility in network systems by permitting the use of slower, lower performance host computers **970** while still supporting relatively fast context switches.

**Figure 7, Figure** 8, and **Figure 9** illustrate that the Corereg circuit **700** is a logic circuit included in the address portion **942** of the state machine **940.** The Corereg circuit **700** performs logic to access the desired location within a master register **44** or slave register **46.** At least one embodiment of the Corereg register access circuit 70 may be implemented, for example, by Verilog source code listed in Appendix A.

The Corereg register access circuit **70** receives various input values that are provided by software running on the host system **970.** One such input value is an Addr_in value, which represents the particular address of the desired field within the master register **44** or slave register **46** of interest. Another input value is the index value in either the master index register **40** or the slave index register **42.** For purposes of illustration, reference is made to **Figures 3** and **7** and **Tables 1** and **2.** For instance, a slave system **32** may switch contexts from a first master **102-1** (whose context information is tracked, say, in master register **44a)** to a second master **36** (whose context information is tracked, say, in master register **44b).** In at least one embodiment, an index value of 4b'0000' represents the first master register **44a** while an index value of 4b'0001' represents the second master register **44b.** In order to switch the contexts, then, then link controller **920 (Figure 9)** replaces the index value of 4b.'000' with an index value of4b'0001' in the master index register **40.** In this manner, a context switch has occurred.

The Addr_in input address is the address of the particular field within a slave register **46** or master register **44.** For instance, **Table 1** indicates that the link controller **920 (Figure 9)** would set Addr_in to a value of 4b'0xCE' if a master needed to read or modify the AM_ADDR field for a particular active slave.

**Figure 7** and **Figure 8** illustrate that the Corereg module **70** includes logic provided by the Regmux 72 circuit. In at least one embodiment, the Regmux circuit **72** is a circuit defined by the Verilog source code listed in Appendix B and is a mux circuit that, given the proper index value and Addr_in value, returns the specific register location of interest.

One skilled in the art will recognize that logic performed by the Corereg **70** and Regmux **72** circuits may be performed by hardware modules, or may be implemented as software modules, firmware modules, or any combination thereof. One skilled in the art will further recognize, that such processing may be implemented as a single hardware or software module that includes various logical functions, rather than separate modules. If implemented in software modules, the software can be executed, for instance, by an embedded CPU that is used instead of the state machine **940.**

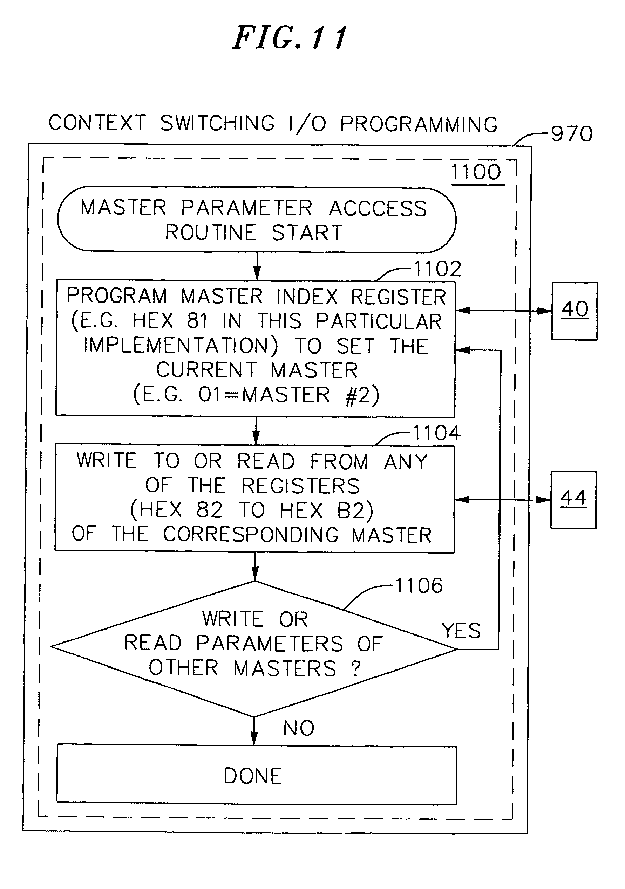

**Figure 11** is a flowchart illustrating a master parameter access software module **1100** that invokes the logic of the state machine **940** to access information in a master register **44.** The master parameter access module **1100** contains machine-executable instructions that are executed, for example, on the host computer **970.**

**Figure 11** illustrates that the host **970,** when executing operation **1102,** loads the appropriate index value into the master index register **40.** For instance, if the master register of interest **44** is a second master register (where the index value for a first master register is zero), then a value of4b'01' is loaded by the host **970** into the master index register **40** in operation **1102.** The host computer **970** then executes operation **1104.** Operation **1104** invokes the Corereg logic circuit **70 (Figure 7)** to write or read from the register of interest **44.** Operation **1104** includes a read path and a write path.

**Figures 9** and 11 illustrate that, during the read path of operation **1104,** the host computer **970** provides the following inputs and then invokes the Corereg logic circuit **70:**
- provide the Addr_in address value that identifies the address of field of interest within the register of interest, and
- provide a read control input, which is a read strobe indicating that the contents of the indicated register field should be put onto the data lines **948.**

During the write path of operation **1104,** the host computer **970** provides the following inputs and then invokes the logic of the Corereg logic circuit **70:**
- provide the Addr_in address value that identifies the address of field of interest within the register of interest,
- provide a data value to be written to the indicated register field, and
- provide a write control input, which is a write strobe indicating that the data value should be written to the contents of the indicated register field.

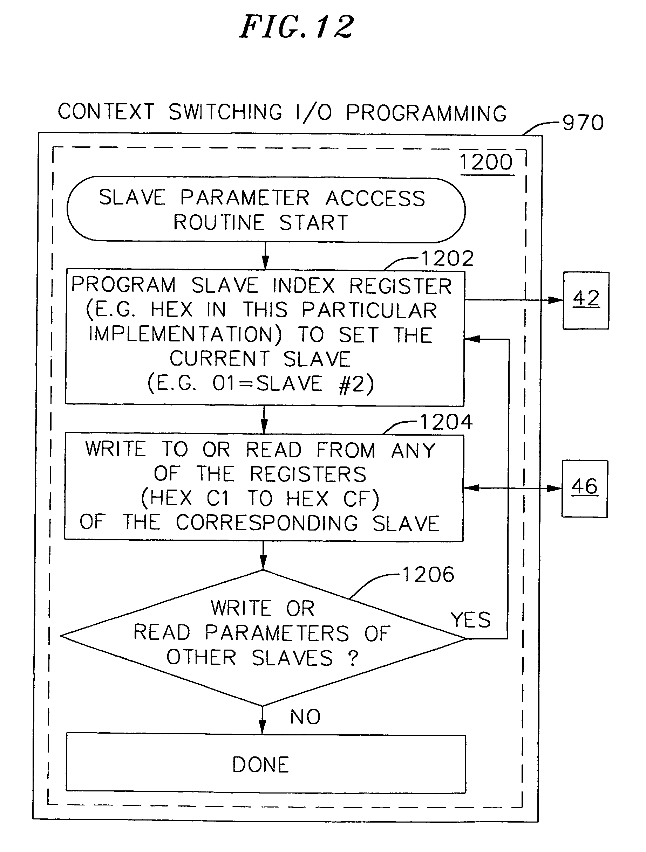

**Figure 12** is a flowchart illustrating a slave parameter access software module **1200** that invokes the logic of the state machine **940** to access information in a slave register **46.** The slave parameter access module **1200** contains machine-executable instructions that are executed, for example, on the host computer **970.**

**Figure 12** illustrates that the host computer **970,** when executing operation **1202,** loads the appropriate index value into the slave index register **42.** For instance, if the slave register of interest **46** is a second slave register (where the index value for a first slave register is zero), then a value of 4b'01' is loaded by the host **970** into the slave index register **42** in operation **1202.** The host computer **970** then executes operation **1204.** Operation **1204** invokes the Corereg logic circuit **70 (Figure 7)** to write or read from the register of interest **46.** Operation **1204** includes a read path and a write path.

**Figures 9** and **12** illustrate that, during the read path of operation **1204,** the host computer 970 provides the following inputs and then invokes the Corereg logic circuit **70:**
- provide the Addr_in address value that identifies the address of field of interest within the register of interest, and
- provide a read control input, which is a read strobe indicating that the contents of the indicated register field should be put onto the data lines 948.

During the write path of operation 1204, the host computer 970 provides the following inputs and then invokes the logic of the Corereg logic circuit 70:
- provide the Addr_in address value that identifies the address of field of interest within the register of interest,
- provide a data value to be written to the indicated register field, and
- provide a write control input, which is a write strobe indicating that the data value should be written to the contents of the indicated register field.

One skilled in the art will recognize that, although the master parameter access module **1100** and the slave parameter access module **1200** have been described as a series of sequential operations, the operations need not necessarily be performed in the order discussed. Instead, the operations may be performed in any order that preserves the functionality described herein. For instance, the respective inputs of the read and write paths may be provided in any order in operations **1104** and **1204.** One skilled in the art will further recognize that operations that have been shown as separate operations may be performed in the same logical group on instructions.

The computer-readable instructions included in the present invention can be implemented as software instructions on a computer-readable tangible medium such as any magnetic storage medium, including disk and tape storage medium; an optical storage medium, including compact disk memory and a digital video disk storage medium; a nonvolatile memory storage memory; a volatile storage medium; or data transmission medium including packets of electronic data and electromagnetic waves modulated in accordance with the instructions.

Additional information concerning a type of microarchitecture that can be employed in the architecture described herein is disclosed in U.S. Pat, No. 6,804,772 , by inventors Sherman Lee, Vivian Y. Chou and John H. Lin, entitled "Dynamic Field Patchable Microarchitecture".

Although the invention has been described with reference to particular embodiments, the description is only an example of the invention's application and should not be taken as a

Although the invention has been described with reference to particular embodiments, the description is only an example of the invention's application and should not be taken as a limitation. For example, although the above disclosure refers to the Bluetooth specification, the context-switching architecture disclosed herein may be used in any network environment where context-switching among computing devices is performed. For example, the present invention may be employed in any network, such as a client/server network, and need not necessarily be employed in a master/slave network environment. Similarly, the registers described herein need not contain master and slave data, but can rather contain any context data. Various other adaptations and combinations of features of the embodiments disclosed are within the scope of the invention as defined by the following claims.

### APPENDIX A

```
 //*************************************************************************
 ****
 // RCS HEADER -- DO NOT ERASE
 // $Author: vivian $
 // $Id: corereg.v,v 1.5 2000/05/05 04:09:23 vivian Exp $
 // Pivotal Technologies
 //*************************************************************************
 ***

 'define REVISION 8'hl
 'define STEP      8'hl
 'define     GLAP  24'h9e8b33
 'define     DLAP  24'h0

 module      corereg (

       regd_o, nintr_o, reset,
       ownnap, ownuap, ownlap, ownsr, ownsp, ownpagemode, ownclass,
       auto_pscan_enable, autoistype, auto_iscan_enable, dvroute,
 region,
       rx_setup, tx_setup, dci,
      loopback, rawdmode, starttimer, resendrx, nextrx,
      page, dinq, ginq, pscanbit, discan, giscan, flush, gotoconn,
 disconn,
      exitpage, exitinq, exitpscan,exitiscan,
      unpark,park,unsniff,sniff,hold, glap, dlap, plap, puap,
      psclkoffset, txamaddr, rxtype_reg,
      txtype, txlength, tbeacon,nb,db,tb,
      maccess,taccess,daccess,nacc_slot,nb_sleep,db_sleep,npoll,
      tiw_reg,tii_req,tpw_reg,tpi_reg,page_reg,
      pageresp_reg, newconn_reg, inquiry_reg, inqresp_reg,
      superv_reg, nbc, npage, tx_reg, fifoadr,
      tsco1, dsco1, tsco2, dsco2, tsco3, dsco3,
      airmode1, airmode2, airmode3, piconetnum, extmuap, extmlap,
      extmclk, extmamaddr, ml_pmaddr, ml_araddr,
      ml_dsniff, ml_tsniff, ml_nsniffatt, ml_nsniff_timer,
      ml_hold_timer, ml_tbeacon, ml -nb, ml_db, ml_tb,
      ml_maccess, ml_taccess, ml_daccess,
      ml_nacc_slot, ml_nb_sleep, ml_db_sleep, ml_npoll,
      authen_key, encryp_key, encryp_length, encryp_rand,
      freq_out, loadclk, ok2send, carrier_setup, isrand_seed,
 isrand_init,
      s1_uap, s1_lap, s1_delk, s1_amaddr,
      s2_uap, s2_lap, s2_dclk, s2_amaddr,
      s3_uap, s3_lap, s3_dclk, s3_amaddr,
      s4_uap, s4_lap, s4_dclk, s4_amaddr,
      s5_uap, s5_lap, s5_dclk, s5_amaddr,
      s6_uap, s6_lap, s6_dclk, s6_amaddr,
      s7_uap, s7_lap, s7-dclk, s7_amaddr,
      s8_uap, s8_lap, s8_dclk, s8_amaddr,
 //114 op

      clk16, nreset_i,
      txto, tx_done, clkl2_p0tl, clk12_plt0, ps_done, is_done,
      tpi_up, tii_up, fhs_detected, page-done, inq_done,
 inqresp_detected,
      supervto, exit_park, parkto, exit_hold, exit_sniff,
 nsniffatt done,
      nsniffto, crc_fail, fec_fail, inqrespto, sendfhs,
 inq_detected,
      newconnto, pagerespto, first_poll_recvd, page_detected,
      pollresp_detected, id2_detected, pageresp_detected,
      newrxtype, newrxflow, newrxarqn, newrxseqn,
      rx_done, rxd_fifo_empty, txa_fifo_full, rxa_fifo_full,
      got_tx, txa_fifo_empty, rxa_fifo_empty,
      mstates, sstates, fifodout,
      freq_index,
      adrin, din, astrobe, dwrite, psres_mode, loadfhs0, loadfhs1,
      dpdata, packet_end, sm_sendid, sendpoll, con_slave, clkn,
 start tx
 //63 ip
    );

 output     [7:0] regd_o;
 output     nintr_o;
 output     reset;
 output     [15:0]     ownnap;
 output     [7:0] ownuap;
 output     [23:0]    ownlap;
 output     [23:0]    ownclass;
 output     [1:0]     ownsr,ownsp;
 output     [2:0]     ownpagemode;
 output           auto_pscan_enable, autoistype,
 auto_iscan_enable, dvroute, region;
 output     [7:0] rx_setup, tx_setup;
 output     [7:0] dci;
 output loopback, rawdmode, starttimer;
 output resendrx, nextrx, page, dinq, ginq, pscanbit,
 discan, giscan;
 output gotoconn, disconn;
 output flush,exitpage,exitinq,exitpscan,exitiscan;
 output unpark,park,unsniff,sniff,hold;
 output     [23:0]     glap, dlap, plap;
 output     [7:0] puap;
 output     [27:0]    psclkoffset;
 output     [2:0] txamaddr;
 output     [3:0]     txtype;
 output     [15:0]    txlength;
 //////output [23:0]        recvdlap;
 //////output [2:0] recvdamaddr;
 output     [3:0] rxtype_reg;
 //////output rxflow, rxarqn, rxseqn;
 output     [15:0]   tbeacon,nb,db,tb;
 output     [15:0]
    maccess,taccess,daccess,nacc_slot,nb_sleep,db_sleep,npoll;
 output     [15:0]    tiw_reg,tii_reg,tpw_reg,tpi_reg,page_reg;
 output     [15:0]
    pageresp_reg, newconn_reg, inquiry_reg, inqresp_reg;
 output     [15:0]    superv_reg;
 output     [7:0] nbc, npage, tx_reg;
 output     [15:0]    fifoadr;
 output     [7:0] tsco1, dsco1, tsco2, dsco2, tsco3, dsco3;
 output     [1:0] airmode1, airmode2, airmode3;
 output     [7:0] piconetnum;
 //////output     [15:0]     ml_nap;
 output     (7:0) extmuap;
 output     [23:0]     extmlap;
 //////output [23:0]     ml class;
 output     [27:0]     extmclk;
 output     [2:0] extmamaddr, ml_pmaddr, ml_araddr;
 //////output [1:0]         ml_sr,ml_sp;
 //////output [2:0]         ml _pagemode;
 output     [15:0]     ml_dsniff, ml_tsniff, ml_nsniffatt,
 ml_hsniff_timer;
 output     [15:0]     ml_hold_timer, ml_tbeacon, ml_nb, ml_db,
 ml_tb;
 output     [15:0]     ml_maccess, ml_taccess, ml_daccess;
 output     [15:0]     ml_nacc_slot, ml_nb_sleep, ml_db_sleep,
 ml_npoll;
 output     [127:0]     authen_key, encryp_key;
 output     [7:0] encryp_length, encryp_rand;

 //////output     [15:0]     s1_nap:
 output     [7:0] s1_uap:
 output     [23:0]     s1_lap:
 //////output     [23:0]     s1_class;
 output     [27:0]     s1_dclk;
 output     [2:0] s1_amaddr;
 //////output     [1:0]     s1_5r,s1_sp;
 //////output     [2:0]     s1_pagemode;

 //////output     [15:0] s2_nap;
 output     [7:0]     s2_uap;
 output     [23:0] s2_lap;
 //////output     [23:0]     s2_class;
 output     [27:0] s2_dclk;
 output     [2:0] s2_amaddr;
 //////output [1:0] s2_sr,s2_sp;
 //////output [2:0] s2_pagemode;

 //////output     [15:0]     s3_nap;
 output     [7:0] s3_uap;
 output     [23:0]     s3_lap;
 //////output     [23:0]     s3_class;
 output     [27:0]     s3_dclk;
 output     [2:0] s3_amaddr;
 //////output     [1:0]     s3_sr,s3_sp;
 //////output     [2:0]     s3_pagemode;

 //////output     [15:0]     s4_nap;
 output     [7:0] s4_uap;
 output     [23:0] s4_lap;
 //////output     [23:0]     s4_class;
 output     [27:0]     s4_dclk;
 output     [2:0] s4_amaddr;
 //////output [1:0] s4_sr,s4_sp;
 //////output [2:0] s4_pagemode;
 //////output     [15:0]     s5_nap:
 output     [7:0] s5 uap;
 output     [23:0]     s5_lap;
 //////output     [23:0]     s5_class;
 output     [27:0]     s5_dclk;
 output     [2:0]     s5_amaddr;
 //////output     [1:0]     s5_sr,s5_sp;
 //////output     [2:0]     s5_pagemode;

 //////output     [15:0]    s6_nap;
 output     [7:0] s6_uap;
 output     [23:0] s6_lap;
 //////output     [23:0]     s6_class;
 output     [27:0]     s6_dclk;
 output     [2:0] s6_amaddr;
 //////output     [1:0]     s6_sr,s6_sp;
 //////output     [2:0]     s6_pagemode;

 //////output     [15:0]    s7_nap;
 output     [7:0] s7_uap;
 output     [23:0] s7_lap;
 //////output     [23:0]     s7_class;
 output     [27:0] s7_dclk;
 output     [2:0] s7_amaddr;
 //////output     [1:0]     s7_sr,s7_sp;
 //////output     [2:0]     s7_pagemode;

 //////output     [15:0]    s8_nap;
 output     [7:0] s8_uap:
 output     [23:0] s8_lap;
 //////output     [23:0]     s8_class;
 output     [27:0] s8_dclk:
 output     [2:0] s8_amaddr;
 //////output     [1:0]     s8_sr,s8_sp;
 //////output     [2:0]     s8_pagemode;

 output     [15:0]     freq_out;
 output loadclk; reg loadclk;
 output     [15:0]     carrier_setup; reg [15:0]
   carrier setup;
 output     ok2send;
 output     [5:0] isrand_seed;
 output     isrand-init;

 input clk16, nreset_i;
 input txto, tx_done, clk12_p0t1, clk12_p1t0, ps_done, is_done;
 input tpi_up, tii_up, fhs_detected, page_done, inq_done,
 inqresp_detected;
 input supervto, exit_park, parkto, exit_hold, exit_sniff,
 nsniffatt_done;
 input nsniffto, crc_fail, fec_fail, inqrespto, sendfhs,
 inq_detected;
 input newconnto, pagerespto, first_poll_recvd, page_detected;
 input pollresp_detected, id2_detected, pageresp_detected;
 input [3:0] newrxtype;
 input newrxflow, newrxarqn, newrxseqn;
 input txa_fifo_full, rxa_fifo_full;
 input got_tx, rxd_fifo_empty, txa_fifo_empty, rxa_fifo_empty;
 input [4:0] mstates, sstates;
 input [7:0] fifodout;
 input [6:0] freq_index;
 input [7:0] adrin, din;
 input astrobe, dwrite;
 input psres_mode, loadfhs0, loadfhsl;
 input [71:0]     dpdata;
 input packet_end, sm_sendid, sendpoll;
 input con_slave;
 input [27:0]     clkn;
 input rx_done, start_tx;

 wire   dwrite;
 wire   [15:0]     ioadr;
 wire   hreset, reset, softrst;
 wire   (7:0) fifostat;
 wire   ff_full, ff_empty;

 reg   [7:0] regd_o;
 reg   [7:0] regdata;
 reg   [7:0] upperadr;
 reg   softrst2, softrst1;
 reg   astrb1, astrb2;
 reg   gotoconn, disconn;
 reg   ok2send, ok2sendl;
 reg isrand_init:

 integer i, j;

 'include "regmux.v"

 /*** interrupt generation ***/
 assign    nintr_o = -1 ({intstat1,intstat2,intstat3} &
 ~{intmask1,intmask2,intmask3});

 /*** reset generation ***/
 assign    hreset = -nreset_i;
 assign    reset = ~nreset_i I softrst;

 /*** output data ***/
 always @(posedge clk16)
    regd_o <= (astrobe | astrb1 | astrb2) ? ioadr[7:0] :
 regdata;

 always@(posedge clk16)
    (astrb2, astrb1) <= (astrb1, astrobe);

 assign    ioadr = (upperadr, adrin);
 always @(adrin or hop_index or security_index or master index or
 slave_index)
       casex (adrin)
       8'h2c:     upperadr = hop_index;
       8'h7f:     upperadr = security_index;
       8'h82:     upperadr = master_index;
       8'h83:     upperadr = master_index;
       8'h84:     upperadr = master_index;
       8'h85:     upperadr = master_index;
       8'h86:     upperadr = master_index;
       8'h88:     upperadr = master_index;
       8'h89:     upperadr = master_index;
       8'h8a:     upperadr = master_index;
       8'h8b:     upperadr = master_index;
       8'h8c:     upperadr = master_index;
       8'h8d:     upperadr = master_index;
       8'h8e:     upperadr = master_index;
       8'h8f:     upperadr = master_index;
       8'h9x:     upperadr = master_index;
       8'hax:     upperadr = master_index;
       8'hb0:     upperadr = master_index;
       8'hb1:     upperadr = master_index;
       8'hb2:     upperadr = master_index;

       8'hc1:     upperadr = slave_index;
       8'hc2:     upperadr = slave_index;
       8'hc3:     upperadr = slave_index;
       8'hc4:     upperadr = slave_index;
       8'hc5:     upperadr = slave_index;
       8'hc6:     upperadr = slave_index:
       8'hc7:     upperadr = slave_index;
       8'hc8:     upperadr = slave_index;
       8'hc9:     upperadr = slave_index;
       8'hca:     upperadr = slave_index;
       8'hcb:     upperadr = slave_index;
       8'hcc:     epperadr = slave_index;
       8'hcd:     upperadr = slave_index;
       8'hce:     upperadr = slave_index;
       8'hcf:     upperadr = slave_index;
       default:   upperadr = 8'h0;
       endcase

 always @(posedge clk16 or posedge hreset)
       if(hreset) ownnap <= 16'h0;
       else ownnap <= ((dwrite & ownnap_hi_sel) ? din :
 ownnap[15:8],
                   (dwrite & ownnap_lo_sel) ? din : ownnap[7:01]);

 always @(posedge clk16 or posedge hreset)
       if(hreset) ownuap <= 8'h0;
       else ownuap <= (dwrite & ownuap_sel) ? din : ownuap;

 always @(posedge clk16 or posedge hreset)
       if(hreset) ownlap <= 24'h0;
       else ownlap <= {(dwrite & ownlap_hi_sel) ? din :
 ownlap[23:16],
               (dwrite & ownlap_md_sel) ? din : ownlap[15:8],
               (dwrite & ownlap_lo_sel) ? din : ownlap[7:0]};
 always @(posedge clkl6 or posedge hreset)
       if(hreset) ownclass <= 24'hO;
       else ownclass <= {(dwrite & ownclass_hi_sel) ? din :
 ownclass[23:16],
               (dwrite & ownelass_rod_sel) ? din :
 ownclass[15:8],
               (dwrite & ownclass_lo_sel) ? din :
 ownclass[7:0]};

 assign       ownfhsmisc = {ownsr, ownsp, ownpagemode, 1'b0};
 always @(posedge clkl6 or posedge hreset)
       if(hreset) {ownsr,ownsp,ownpagemode} <= 7'b0;
       else (ownsr,ownsp,ownpagemode) <= (dwrite & ownfhsmise-sel)
 ? din[7:1]: {ownsr,ownsp,ownpagemode};

 assign    config = {auto_pscan_enable, autoistype,
 auto_iscan_enable, 3'b0, dvroute, region};
 always @(posedge clk16 or posedge hreset)
       if(hreset) {auto_pscan_enable, autoistype,
 auto_iscan_enable, dvroute, region} <= 5'b0;
       else {auto_pscan_enable, autoistype, auto_iscan_enable,
 dvroute, region} <= (dwrite & config_sel) ? {din[7:5],din[1:0]} :
 {auto_pscan_enable, autoistype, auto_iscan_enable, dvroute,
 region};

 always @(posedge clk16 or posedge hreset)
       if(hreset) rx_setup <= 8'h01;
       else rx_setup <= (dwrite & rx_setup_sel) ? din : rx_setup;

 always @(posedge clk16 or posedge hreset)
       if(hreset) tx_setup <= 8'h01;
       else tx_setup <= (dwrite & tx_setup_sel) ? din : tx_setup;

 always @(posedge clk16 or posedge hreset)
       if(hreset) carrier_setup <= 16'h0001;
       else carrier_setup <=
              {(dwrite & carrier_hi_sel) ? din :
 carrier_setup[15:8],
             (dwrite & carrier_lo_sel) ? din :
 carrier_setup[7:0]};

 always @(posedge clk16 or posedge hreset)
       if(hreset) dci <= 0;
       else dci <= (dwrite & dci_sel) ? din : dci;
 // cmdi
 assign      cmd1 =
 (1'b0,force_freq,loopback,rawdmode,starttimer,3'b0);
 always @(posedge clkl6)
     {softrst2, softrst1} <= {softrst1, dwrite & cmd1_sel &
 din[0]}:
 assign      softrst = softrst1 |softrst2;

 always @(posedge clkl6)
      gotoconn <= dwrite & cmdl_sel & din[1];

 always @(posedge clkl6)
      disconn <= dwrite & cmdl_sel & din [2];

 always @(posedge clk16 or posedge reset)
      if(reset) {force_freq,loopback, rawdmode, starttimer} <=
 4'b0;
      else (force_freq,loopback,rawdmode,starttimer) <= (dwrite &
 cmd1_sel) ? din[6:3] : {force_freq,loopback,rawdmode, starttimer};

 //start cmds
 assign     startcmd =
 (2'b0,page,dinq,ginq,pscanbit,discan,giscan);
 always @(posedge clk16)
      {resendrx, nextrx, page,dinq,ginq,pscanbit,discan,giscan} <=
 {8((dwrite & startcmd_sel)}) & din;

 //stop cmds
 assign     stopcmd =
 {l'bO,flush,exitpage,l'bO,exitinq,exitpscan,l'bO,exitiscan};
 always @(posedge clkl6)
      {flush,exitpage,exitinq,exitpscan,exitiscan} <= {6{(dwrite &
 stopcmd_sel)}} & {din[6:5],din[3:2],din[0]}:

 //power saving modes
 assign     psaving = { 3'bO.unpark, park, unsniff, sniff, hold};
 always @(posedge clkl6) (unpark,park,unsniff,sniff,hold) <=
 {5{(dwrite & psaving_sel)}} & din[4:0];

 //general inquiry LAP
 always @(posedge clk16 or posedge hreset)
      if (hreset) glap <= 'GLAP;
      else glap <=     ((dwrite & glap_hi_sel) ? din :
 glap[23:16],
               (dwrite & glap_md_sel) ? din : glap[15:8],
               (dwrite & glap_lo_sel) ? din : glap[7:0]);

 //dedicated inquiry LAP
 always @(posedge clkl6 or posedge hreset)
      if(hreset) dlap <= 'DLAP;
      else dlap <= {(dwrite & dlap_hi_sel) ? din :
 dlap[23:16],
                 (dwrite & dlap_md_sel) ? din : dlap[15:8],
                 (dwrite & dlap_lo-sel) ? din : dlap[7:0]):

 //paged slave LAP
 always @(posedge clk16 or posedge reset)
      if(reset) plap <= 0;
      else plap <=     {(dwrite & plap_hi_sel) ? din :
 plap[23:16],
                 (dwrite & plap_md_sel) ? din : plap[15:8],
                 (dwrite & plap_lo_sel) ? din : plap[7:0]);

 //paged slave UAP
 always @(posedge clkl6 or posedge reset)
        if(reset)   puap <= 0;
        else puap <=       (dwrite & puap_sel) ? din : puap;

 //Rx forced frequency
 always @(posedge clk16 or posedge reset)
      if(reset)   forced_rx <= 0;
      else forced_rx <= (dwrite & forced_rx_sel) ? din :
 forced_rx;

 //Tx forced frequency
 //always @(posedge clk16 or posedge reset)
 //   if(reset)   forced_tx <= 0;
 //   else forced_tx <= (dwrite & forced_tx_sel) ? din :
 forced_tx;

 //paged slave's clock offset
 always @(posedge clk16 or posedge reset)
      if(reset)   psclkoffset <= 0;
      else psclkoffset <=
           {(dwrite & pslave_clk1_sel) ? din[3:0] :
 psclkoffset[27:24],
           (dwrite & pslave_clk2_sel) ? din : psclkoffset[23:16],
           (dwrite & pslave_clk3_sel) ? din : psclkoffset[15:8],
           (dwrite & pslave_clk4_sel) ? din : psclkoffset[7:0]};

 //transmit AMADDR
 always @(posedge clk16 or posedge reset)
     if(reset) txamaddr <= 0;
     else txamaddr <= (dwrite & txamaddr_sel) ? din[2:0] :
 txamaddr;

 //transmit type, reset when transmission start
 assign txtypereg = {3'b0,txtype};
 always @(posedge clk16 or posedge reset)
      if(reset I start_tx)     txtype <= 5'bO;
      else if(sm_sendid I sendpoll sendfhs)
           case({sm_sendid, sendpoll, sendfhs))
                 3'b100:     txtype <= 5'b1000;
                 3'b010:     txtype <- 5'b00001;
                 3'b001:     txtype <= 5'b00010;
          endcase
       else if(dwrite & tx_type_sel) txtype <= din[4:0];

 //ok2send from LM
 always @(posedge clk16)
       {ok2send, ok2send1} <= (ok2send1, ((dwrite & tx_type_sel) &
 din[51])};

 //transmit length
 always @(posedge clk16 or posedge reset)
      if(reset) txlength <= 0;
      else txlength <=
          {(dwrite & tx_length_hi_sel) ? din : txlength[15:8],
          (dwrite & tx_length_lo_sel) ? din : txlength[7:0]};

 //seed for inquiry scan random number generator, programmed
 always @(posedge clk16 or posedge reset)
      if(reset)                     isrand_seed <= 0;
      else if(dwrite & isrand_seed_sel) isrand_seed <= din;

 always @(posedge clk16) isrand_init <= dwrite & isrand_seed_sel;

 //interrupt status - more TBD

 assign      intstat3 = {pintstat3(4), 3'b0, pintstat3[3:0]);
 always @(posedge clk16 or posedge reset)
     if(reset [ dwrite & intrst3_sel & din[7])
           pintstat3[4] <= 0;
     else if(txto)
           pintstat3[4] <= 1;

 always @(posedge clk16 or posedge reset)
     if(reset I dwr,ite & intrst3_sel & din[3])
           pintstat3[3] <= 0:
     else if(tx_done)
           pintstat3[3] <= 1;

 //not reset if there's a concurrent rx_done
 always @(posedge clk16 or posedge reset)
    if(reset)
           pintstat3[2] <= 0;
    else if(rx_done)
           pintstat3[2] <= 1;
    else if(dwrite & intrst3_sel & din[2])
           pintstat3[2] <= 0;

 always @(posedge clk16 or posedge reset)
    if(reset I dwrite & intrst3_sel & din[1])
           pintstat3[1] <= 0;
    else if(clk12_p0t1)
             pintstat3[1] <= 1;

 always @(posedge clk16 or posedge reset)
      if(reset | dwrite & intrst3_sel & din[0])
             pintstat3[0] <= 0;
      else if(clk12_plt0)
             pintstat3[0] <= 1;

 always @(posedge clk16 or posedge reset)
     if(reset | ps_done | dwrite & intrstl_sel & din[7])
                  intstatl[7]<= 0;
   else if(tpi_up) intstatl[7] <= 1;

 always @(posedge clk16 or posedge reset)
     if(reset | is_done | dwrite & intrstl-sel & din[6])
                  intstatl[6] <= 0;
     else if(tii_up) intstatl[6] <= 1;

 always @(posedge clk16 or posedge reset)
     if(reset | dwrite & intrstl_sel & din[51])
                       intstatl[5] <= 0;
     else if(ps_done) intstatl[5] <= 1;

 always @(posedge clk16 or posedge reset)
     if(reset | dwrite & intrstl_sel & din[4])
                       intstat1[4] <= 0;
     else if(fhs_detected) intstatl[4] <= 1;

 always @(posedge clk16 or posedge reset)
     if (reset | dwrite & intrstl_sel & din[3])
                       intstatl[3] <= 0;
     else if(page_done) intstatl[3] <= 1;

 always @(posedge clk16 or posedge reset)
     if(reset | dwrite & intrstl_sel & din[21])
                      intstatl[2] <= 0;
     else if(is_done) intstatl[2] <= 1;

 always @(posedge clk16 or posedge reset)
     if(reset | dwrite & intrstl_sel & din[1])
                       intstatl[1] <= 0;
     else if(inq_done) intstatl[1] <= 1;

 always @(posedge clk16 or posedge reset)
     if(reset | dwrite & intrstl_sel & din[0])
                            intstatl[0] <= 0;
     else if(inqresp_detected) intstatl[0] <= 1;

 assign intstat2 = (pintstat2, ff_full, ff_empty);
 always @(posedge clk16 or posedge reset)
     if(reset dwrite & intrst2_sel & din[7])
                       pintstat2[7] <= 0;
    else if(supervto)  pintstat2[7] <= 1;
 always @(posedge clk16 or posedge reset)
       if(reset | dwrite & intrst2_sel & din[6])
                              pintstat2[6] <= 0;
       else if(exit_park | parkto) pintstat2[6] <= 1;

 always @(posedge clkl6 or posedge reset)
       if(reset | dwrite & intrst2_sel & din[5])
                         pintstat2[5] <= 0;
       else if(exit_hold) pintstat2[5] <= 1;

 always @(posedge clkl6 or posedge reset)
       if(reset | dwrite & intrst2_sel & din[4])
                         pintstat2[4] <= 0;
       else if(exit_sniff nsniffatt_done ) | nsniffto)
                         pintstat2[4] <= 1;

 always @(posedge clkl6 or posedge reset)
       if(reset I dwrite & intrst2_sel & din[3])
                      pintstat2[3] <= 0;
       else if(crc_fail) pintstat2[3] <= 1;

 always @(posedge clkl6 or posedge reset)
       if(reset | dwrite & intrst2_sel & din[2])
                        pintstat2[2] <= 0;
       else if(fec_fail) pintstat2[2] <= 1;

 //interrupt mask
 always @(posedge clk16 or posedge hreset)
       if(hreset) intmask3 <= 0;
       else intmask3 <= (dwrite & intmask3_sel) ?
 {din[7],3'b0,dint[3:0]} : intmask3;
 always @(posedge clk16 or posedge hreset)
       if(hreset) intmask2 <= 8'b0000_0011;
   din : intmask2;
 always @(posedge clk16 or posedge hreset)
       if(hreset) intmask1 <= 0;
       else intmask1 <= (dwrite & intmaskl_sel) ? din : intmask1;

 //inquiry scan status, reset by interrupt reset1 bit 2
 always @(posedge clk16 or posedge reset)
       if(reset | dwrite & intrst1_sel & din[2])
                         iscanstat[2] <= 0;
       else if(inqrespto) iscanstat[2] <= 1;

 always @(posedge clk16 or posedge reset)
       if(reset I dwrite & intrstl_sel & din[2])
                         iscanstat[1] <= 0;
       else if(sendfhs) iscanstat[1] <= 1;

 always @(posedge clk16 or posedge reset)
       if(reset I dwrite & intrstl_sel & din[2])
                         iseanstat[0] <= 0;
       else if(inq_detected) iscanstat[0] <= 1;

 //page scan status, reset by interrupt reset1 bit 5
 assign pscanstat = {ppscanstat[4:3], 3'b0, ppscanstat[2:0]};
 always @(posedge clk16 or posedge reset)
      if(reset I dwrite & intrstl_sel & din[5])
                        ppscanstat[4] <= 0;
      else if(newconnto) ppscanstat[4] <= 1;

 always @(posedge clk16 or posedge reset)
      if(reset I dwrite & intrst1_sel & din[5])
                        ppscanstat[3] <= 0;
      else if(pagerespto) ppscanstat[3] <= 1;

 always @(posedge clk16 or posedge reset)
      if(reset I dwrite & intrst1_sel & din[5])
                              ppscanstat[2] <= 0;
      else if(first_poll_recvd) ppscanstat[2] <= 1;

 always @(posedge clk16 or posedge reset)
      if(reset I dwrite & intrstl_sel & din[5])
                        ppscanstat[1] <= 0;
      else if(fhs_detected) ppscanstat[1] <= 1;

 always @(posedge clk16 or posedge reset)
      if(reset I dwrite & intrstl_sel & din[5])
                        ppscanstat[0] <= 0;
      else if(page_detected) ppscanstat[0] <= 1;

 //page status, reset by interrupt reset1 bit 3
 assign pagestat = (ppagestat[4:3], 3'b0, ppagestat[2:0]);
 always @(posedge clk16 or posedge reset)
      if(reset I dwrite & intrstl_sel & din[3])
                        ppagestat[4] <= 0;
      else if(newconnto) ppagestat[4] <= 1;

 always @(posedge clk16 or posedge reset)
      if(reset I dwrite &intrstl_sel & din[3])
                        ppagestat[3] <= 0;
      else if(pagerespto) ppagestat[3] <= 1;

 always @(posedge clk16 or posedge reset)
      if(reset I dwrite & intrstl_sel & din[3])
                             ppagestat[2] <= 0;
      else if(pollresp_detected) ppagestat[2] <= 1;

 always @(posedge clk16 or posedge reset)
      if(reset I dwrite & intrstl_sel & din[3])
                        ppagestat[1] <= 0;
      else if(id2_detected) ppagestat[1] <= 1;

 always @(posedge clk16 or posedge reset)
       if(reset | dwrite & intrstl_sel & din[3])
                              ppagestat[0] <- 0;
       else if (pageresp_detected) ppagestat[0] <= 1;

 //psaving state status, reset by interrupt reset bit 5,6,7
 always @(posedge clk16 or posedge reset)
       if(reset I dwrite & intrst2_sel & din[5])
                         psavstat[0] <= 0;
       else if(exit_hold) psavstat[0] <= 1;

 always @(posedge clk16 or posedge reset)
       if(reset I dwrite & intrst2_sel & din[6])
                         psavstat[1] <= 0;
       else if(exit_park) psavstat[1] <= 1;

 always @(posedge clk16 or posedge reset)
       if(reset I dwrite & intrst2_sel & din[6])
                        psavstat[2] <= 0;
       else if(parkto) psavstat[2] <= 1;

 always @(posedge clk16 or posedge reset)
       if(reset I dwrite & intrst2_sel & din[7])
                        psavstat[3] <= 0;
      else if(nsniffatt_done) psavstat[3] <= 1;

 always @(posedge clk16 or posedge reset)
      if(reset I dwrite & intrst2_sel & din[7])
                        psavstat[4] <= 0;
      else if(nsniffto) psavstat[4] <= 1;

 always @(posedge clk16 or posedge reset)
      if(reset I dwrite & intrst2_sel & din[7])
                        psavstat[5] <= 0;
      else if(exit_sniff) psavstat[5] <= 1;

 //received LAP
 always @(posedge clk16 or posedge reset)
      if(reset) recvdlap <= 0;
      else recvdlap <= (loadfhs0) ? dpdata[57:34] : recvdlap;

 //received AM_ADDR
 always @(posedge clk16 or posedge reset)
      if(reset) recvdamaddr <= 0;
      else recvdamaddr <= (loadfhs1) ? dpdata[42:40] :
 recvdamaddr;

 //received Type, Flow, ARQN, SEQN
 assign recvdstat = {rxtype_reg, rxflow, rxarqn, rxseqn};
 always @(posedge clkl6 or posedge reset)
      if(reset) {rxtype_reg, rxflow, rxarqn, rxseqn} <= 7'b0;
      else {rxtype_reg, rxflow, rxarqn, rxseqn} <= (packet_end) ?
 (newrxtype, newrxflow, newrxarqn, newrxseqn) : (rxtype_ reg,
 rxflow, rxarqn, rxseqn);

 //master state parameters

 always @(posedge clk16 or posedge hreset)
      if(hreset) tbeacon <= 16'h0;
     else tbeacon <= {(dwrite & tbeacon_hi_sel) ? din :
 tbeacon[15:8],
                   (dwrite & tbeacon_lo_sel) ? din :
 tbeacon[7:0]};

 always @(posedge clk16 or posedge hreset)
      if(hreset) nb <= 16'h0;
      else nb <= {(dwrite & nb_hi_sel) ? din : nb[15:8],
                 (dwrite & nb_lo_sel) ? din : nb[7:0]};

      if(hreset) db <= 16'hO;
       else db <= {(dwrite & db_hi_sel) ? din : db[15:8],
            (dwrite & db_Io_sel) ? din : db[7:0]);

 always @(posedge clkl6 or posedge hreset)
     if(hreset) tb <= 16'h0;
     else tb <= {(dwrite & tb_hi_sel) ? din : tb[15:8],
                (dwrite & tb_lo_sel) ? din : tb[7:0]};

 always @(posedge clkl6 or posedge hreset)
     if(hreset) maccess <= 16'h0;
     else maccess <= {(dwrite & maccess_hi_sel) ? din :
 maccess[15:8],
                   (dwrite & maccess_lo_sel) ? din :
 maccess[7:0]};

 always @(posedge clkl6 or posedge hreset)
     if(hreset) taccess <= 16'h0;
     else taccess <= {(dwrite & taccess_hi_sel) ? din :
 taccess[15:8],
                   (dwrite & taccess_lo_sel) ? din :
 taccess[7:0]};

 always @(posedge clk16 or posedge hreset)
     if(hreset) daccess <= 16'h0;
     else daccess <= {(dwrite & daccess_hi_sel) ? din :
 daccess[15:8],
                   (dwrite & daccess_lo_sel) ? din :
 daccess[7:0]};

 always @(posedge clk16 or posedge hreset)
     if(hreset) nacc_slot <= 16'h0;
     else nacc_slot <= {(dwrite & nacc_slot_hi_sel) ? din :
 nacc_slot[15:8],
                     (dwrite & nacc_slot_lo_sel) ? din :
 nacc_slot[7:0]};
 
 always @(posedge clk16 or posedge hreset)
      if(hreset) nb_sleep <= 16'hO;
      else nb_sleep <= {(dwrite & nb_sleep_hi_sel) ? din :
 nb_sleep[15:8],
                   (dwrite & nb_sleep_lo_sel) ? din :
 nb_sleep[7:0]};
 always @(posedge clk16 or posedge hreset)
      if(hreset) db_sleep <= 16'hO;
      else db_sleep <= {(dwrite & db_sleep_hi_sel) ? din :
 db_sleep[15:8],
                   (dwrite & db_sleep_lo_sel) ? din :
 db_sleep[7:0]};
 always @(posedge clk16 or posedge hreset)
      if(hreset) npoll <= 16'h0;
      else npoll <= {(dwrite & npoll_hi_sel) ? din :
 npoll[15:8],
                  (dwrite & npoll-lo-sel) ? din : npoll[7:0]};

 //timers

 always @(posedge clk16 or posedge hreset)
      if(hreset) tiw_reg <= 16'h0;
      else tiw_reg <= ((dwrite & tiw_reg_hi_sel) ? din :
 tiw_reg[15:8],
 (dwrite & tiw_reg_lo_sel) ? din :
 tiw-reg[7:0]);

 always @(posedge clk16 or posedge hreset)
      if(hreset) tii_reg <= 16'h0;
      else tii_reg <= {(dwrite & tii_reg_hi_sel) ? din :
 tii_reg[15:8],
                 (dwrite & tii_reg_lo_sel) ? din :
 tii_reg(7:0)};

 always @(posedge clkl6 or posedge hreset)
      if(hreset) tpw_reg <= 16'h0;
      else tpw_reg <= {(dwrite & tpw_reg_hi_sel) ? din :
 tpw_reg[15:8],
                 (dwrite & tpw_reg_lo_sel) ? din :
 tpw_reg[7:0]};

 always @(posedge clk16 or posedge hreset)
      if(hreset) tpi_reg <= 16'h0;
   else tpi_reg <= {(dwrite & tpi_reg_hi_sel) ? din :
 tpi_reg[15:8],
 (dwrite & tpi_reg_lo_sel) ? din :
 tpi_reg[7:0]};

 always @(posedge clk16 or posedge hreset)
     if(hreset) page reg <= 16'h0;
     else page_reg <=
           ((dwrite & page_reg_hi_sel) ? din : page_reg[15:8],
            (dwrite & page_reg_lo_sel) ? din : page_reg[7:0]};
 
 always @(posedge clkl6 or posedge hreset)
     if(hreset) pageresp_reg <= 16'h0;
     else pageresp_reg <=
          {(dwrite & pageresp_reg_hi_sel) ? din :
 pageresp_reg[15:8],
           (dwrite & pageresp_reg_lo_sel) ? din :
 pageresp_reg(7:01);

 always @(posedge clk16 or posedge hreset)
     if(hreset) newconn_reg <= 16'h0;
     else newconn_reg <=
          {(dwrite & newconn_reg_hi_sel) ? din :
 newconn_reg[15:8],
     (dwrite & newconn_reg_lo_sel) ? din :
 newconn_reg[7:0]};

 always @(posedge clkl6 or posedge hreset)
     if (hreset) inquiry_reg <= 16'h0;
     else inquiry_reg <=
          {(dwrite & inquiry_reg_hi_sel) ? din :
 inquiry_reg[15:8],
           (dwrite & inquiry_reg_lo_sel) ? din :
 inquiry_reg[7:0]};

 always @(posedge clkl6 or posedge hreset)
    if(hreset) inqresp_reg <= 16'h0;
    else inqresp_reg <=
          {(dwrite & inqresp_reg_hi_sel) ? din :
 inqresp_reg[15:8],
           (dwrite & inqresp_reg_lo_sel) ? din :
 inqresp_reg[7:0]}:

 always @(posedge clk16 or posedge hreset)
    if (hreset) superv_reg <= 16'h0;
    else superv_reg <=
          ((dwrite & superv_reg_hi_sel) ? din :
 superv_reg[15:8],
           (dwrite & superv_reg_lo_sel) ? din :
 superv_reg[7:0]);

 always @(posedge clk16 or posedge hreset)
    if(hreset) nbc <= 8'h0;
    else nbc <= (dwrite & nbc_sel) ? din : nbc;

 always @(posedge clk16 or posedge hreset)
    if(hreset) npage <= 8'h0;
    else npage <= (dwrite & npage_sel) ? din : npage;

 always @(posedge clk16 or posedge hreset)
    if(hreset) tx_reg <= 8'h0;
    else tx_reg <= (dwrite & tx_reg_sel) ? din : tx_reg;

 //SCO
 always @(posedge clk16 or posedge reset)
     if(reset) tscol <- 8'h0;
     else tscol <= (dwrite & tscol_sel) ? din : tscol;

 always @(posedge clk16 or posedge reset)
     if(reset) dscol <= 8'h0;
     else dscol <= (dwrite & dscol_sel) ? din : dscol;

 always @(posedge clk16 or posedge reset)
     if(reset) airmodel <= 8'h0;
     else airmode1<= (dwrite & airmode1_sel) ? din[1:0] :

 airmode1;
 always @(posedge clk16 or posedge reset)
     if(reset) tsco2 <= 8'h0;
     else tsco2 <= (dwrite & tsco2_sel) ? din : tsco2;

 always @(posedge clk16 or posedge reset)
     if(reset) dsco2 <= 8'h0;
     else dsco2 <= (dwrite & dsco2_sel) ? din : dsco2;

 always @(posedge clk16 or posedge reset)
     if(reset) airmode2 <= 8'h0;
    else airmode2 <= (dwrite & airmode2_sel) ? din [1:0] :

 airmode2;
 always @(posedge clk16 or posedge reset)
    if(reset) tsco3 <= 8'h0;
    else tsco3 <= (dwrite & tsco3_sel) ? din : tsco3;

 always @(posedge clk16 or posedge reset)
    if(reset) dsco3 <= 8'h0;
    else dsco3 <= (dwrite & dsco3_sel) ? din : dsco3;

 always @(posedge clk16 or posedge reset)
    if(reset) airmode3 <= 8'h0;
    else airmode3 <= (dwrite & airmode3_sel) ? din [1:0] :

 airmode3;
 //hop frequency / power level index reg
 always @(posedge clk16 or posedge reset)
    if(reset) hop_index <= 0;
    else hop_index <= (dwrite & hop_index_sel) ? din :

 hop_index;
 always @(posedge clkl6 or posedge hreset)
    for (i=0; i<79; i=i+1)
    if(hreset) {hopfreq_hi[i], hopfreq_lo[i]} <= 0;
    else (hopfreq_hi[i],hopfreq_lo[i]) <=
          {(dwrite & hopfreq_hi_sel[i]) ? din : hopfreq hi[i],
           (dwrite & hopfreq_lo_sel[i]) ? din : hopfreq_lo[i]);

 always @(posedge clk16 or posedge hreset)
    for (j=0; j<64; j=j+1)
    if(hreset) power[j] <= 0;
    else power[j] <= (dwrite & power_sel[j]) ? din : power[j];

 //freq selection
 assign   freq_out = (force_freq) ? (hopfreq_hifforced-rx],
 hopfreq_lo{forced_rx]} : {hopfreq_hitfreq_index },
 hopfreq_lo[freq_index]};

 //FIFO status
 assign   fifostat = {got_tx, txa_fifo_full, ~rxd_fifo_empty,
 rxa_fifo_full, ~got_tx, txa_fifo_empty, rxd_fifo_empty,
 rxa_fifo_empty}; '
 assign   ff_full = fifostat[3:0];
 assign   ff_empty= I fifostat[7:4];

 'include "secureg.v"
 'include "extmaster.v"
 'include "extslave.v"
 //'include "freqreg.v"

 endmodule
```

### APPENDIX B

```
 //********************************************************************************
 ***
 // RCS HEADER -- DO NOT ERASE
 // $Author: vivian $
 // SId: regmux.v,v 1.2 2000/05/02 20:53:06 vivian Exp S
 // Pivotal Technologies
 //********************************************************************************
 ***
 
 //include file in corereg.v
 
 wire revision_sel;
 wire stepping_sel:
 wire ownnap_hi_sel;
 wire ownnap_lo_sel;
 wire ownuap_sel;
 wire ownlap_hi_sel;
 wire ownlap_md_sel;
 wire ownlap_lo_sel;
 wire ownclass_hi_sel;
 wire ownclass_md_sel;
 wire ownclass lo sel;
 wire ownfhsmisc_sel;
 wire config_sel;
 wire rx_setup_sel;
 wire tx_setup_sel:
 wire carrier hi sel;
 wire carrier_lo_sel;
 wire cmdl_sel;
 wire startcmd_sel;
 wire stopcmd_sel;
 wire psaving_sel;
 wire glap_hi_sel;
 wire glap_md_sel;
 wire glap_lo_sel;
 wire dlap_hi_sel;
 wire dlap_md_sel;
 wire dlap_lo_sel;
 wire plap_hi_sel;
 wire plap_md_sel;
 wire plap_lo_sel;
 wire puap_sel;
 wire forced_rx_sel;
 wire dci_sel;
 wire pslave_clk1_sel;
 wire pslave_clk2_sel;
 wire pslave_clk3_sel;
 wire pslave_clk4_sel;
 wire txamaddr_sel;
 wire tx_type_sel;
 wire tx_length hi sel;
 wire tx_length_lo_sel;
 wire isrand_seed_sel;
 wire intstat3_sel;
 wire intmask3_sel;
 wire intrst3_sel;
 wire intstatl_sel;
 wire intmaskl_sel;
 wire intrstl_sel;
 wire intstat2_sel;
 wire intmask2_sel;
 wire intrst2_sel;
 wire iscanstat sel;
 wire pscanstat_sel;
 wire pagestatus_sel;
 wire psavstat_sel;
 wire recvdlap_up_sel;
 wire recvdlap_md_sel;
 wire recvdlap_lo_sel;
 wire recvdamaddr_sel;
 wire recvdstat_sel;
 wire mstates_sel;
 wire sstates_sel:
 wire tbeacon_hi_sel;
 wire tbeacon_lo sel;
 wire nb_hi_sel;
 wire nb lo sel;
 wire db_hi_sel;
 wire db_lo_sel;
 wire tb_hi_sel;
 wire tb_lo_sel;
 wire maccess_hi_ sel;
 wire maccess_lo_sel;
 wire taccess_hi sel;
 wire taccess_lo_sel
 wire daccess_hi_sel
 wire daccess_lo_sel;
 wire nacc slot_hi_ sel;
 wire nacc_slot_lo_sel;
 wire nb_sleep_hi_sel;
 wire nb_sleep_lo_sel;
 wire db_sleep_ hi_sel;
 wire db_sleep_lo_sel:
 wire npoll_hi_sel;
 wire npoll_lo_sel;
 wire tiw_reg_hi_sel;
 wire tiw_reg_lo_sel;
 wire tii_reg_hi_sel;
 wire tii_reg_lo_sel;
 wire tpw_reg_hi_sel;
 wire tpw_reg_lo_sel;
 wire tpi_reg_hi_sel;
 wire tpi_reg_lo_sel;
 wire page_reg_hi_sel;
 wire page_reg_lo sel;
 wire pageresp_reg_hi_sel;
 wire pageresp_reg_lo_sel;
 wire newconn_reg_hi_sel;
 wire newconn_reg_lo_sel:
 wire inquiry_reg_hi_sel;
 wire inquiry_reg_lo_sel;
 wire inqresp_reg_hi_sel;
 wire inqresp_reg_lo_sel;
 wire nbc_sel;
 wire npage_sel;
 wire tx_reg_sel;
 wire superv_reg_hi_sel;
 wire superv_reg_lo_sel;
 wire fifoadr_hi_sel;
 wire fifoadr_lo_sel;
 wire fifo data_sel;
 wire fifo_status_sel;
 wire tscol_sel;
 wire dscol_sel:
 wire airmodel_sel;
 wire tsco2_sel:
 wire dsco2_sel;
 wire airmode2_sel;
 wire tsco3_sel;
 wire dsco3_sel;
 wire airmode3_sel;
 wire piconetnum_sel;
 wire master_index_sel;
 wire m1_nap_hi_sel;
 wire m1_nap_lo_sel;
 wire m1_uap_sel.:
 wire m1_lap_hi_sel:
 wire m1_lap_md_sel;
 wire m1_lap_lo_sel;
 wire m1_class_hi_sel;
 wire m1_class_md_sel;
 wire m1_class_lo_sel;
 wire m1_dclk_up_sel;
 wire m1_dclk_hi_sel;
 wire m1_dclk_md_sel;
 wire m1_dclk_lo_sel;
 wire m1_amaddr_sel;
 wire m1_fhsm1sc_sel;
 wire m1_pmaddr_sel;
 wire m1_araddr_sel;
 wire m1_dsniff_hi_sel;
 wire m1_dsniff_lo_sel;
 wire ml_tsniff_hi_sel;
 wire ml_tsniff_lo_sel;
 wire ml_nsniffatt_hi_sel;
 wire ml_nsniffatt_lo_sel;
 wire ml_nsniff_timer hi_sel;
 wire ml_nsniff_timer_lo_sel;
 wire ml_hold_timer_hi_sel;
 wire ml_hold_timer_lo_sel;
 wire ml_tbeacon_hi_sel;
 wire ml_tbeacon_lo_sel;
 wire ml_nb_hi_sel;
 wire ml_nb_lo_sel;
 wire ml_db_hi_sel;
 wire ml_db_lo_sel;
 wire ml_tb_hi_sel;
 wire m1_tb_lo_sel;
 wire m1_maccess_hi_sel;
 wire m1_maccess_lo_se;
 wire m1_taccess_hi_sel;
 wire m1_taccess_lo_sel;
 wire m1_daccess_hi_sel;
 wire m1_daccess_lo_sel;
 wire m1_nacc_slot_hi_sel;
 wire m1_nacc_slot_lo_sel;
 wire m1_nb_sleep_hi_sel;
 wire m1_nb_sleep_lo_sel:
 wire m1_db_sleep hi_sel;
 wire m1_db_sleep_lo sel:
 wire m1_npoll_hi_sel;
 wire m1_npoll_lo_sel;
 wire security_index_sel;
 wire authen_keyl_sel;
 wire authen_key2_sel;
 wire authen_key3_sel;
 wire authen_key4_sel;
 wire authen_key5_sel;
 wire authen_key6_sel;
 wire authen_key7_sel;
 wire authen_key8_sel;
 wire authen_key9_sel;
 wire authen key10_sel;
 wire authen_key11_sel;
 wire authen_key_12_sel;
 wire authen_key13_sel;
 wire authen_key14_sel:
 wire authen_key15_sel;
 wire authen_key16_sel;
 wire encryp_keyl_sel
 wire encryp_key2_sel
 wire encryp_key3_sel
 wire encryp_key4_sel;
 wire encryp_key5_sel;
 wire encryp_key6_sel
 wire encryp_key7_sel
 wire encryp_key8_sel;
 wire encryp_key9_sel;
 wire encryp_key10_sel;
 wire encryp_key11_sel;
 wire encryp_key12_sel;
 wire encryp_keyl3_sel;
 wire encryp_keyl4_sel;
 wire encryp_key15_sel;
 wire encryp_key16_sel;
 wire encryp_length_sel;
 wire encryp_rand_sel;
 wire hop_index_sel;
 wire [78:0] hopfreq_hi_sel;
 wire [78:0] hopfreq_lo_sel;
 wire [63:0] power_sel;
 wire slave_index_sel:
 wire sl_nap_hi_sel;
 wire sl_nap_lo_sel;
 wire s1_uap_sel;
 wire s1_lap_hi_sel;
 wire s1_lap_md_sel;
 wire s1_lap_lo_sel;
 wire s1_class_hi_sel;
 wire s1_class_md_sel;
 wire s1_class_lo_sel;
 wire s1_dclk_up_sel;
 wire s1_dclk_hi_sel;
 wire s1_dclk_md_sel;
 wire s1_dclk_lo_sel;
 wire s1_amaddr_sel;
 wire s1_fhsmisc_sel;
 wire s2_nap_hi_sel;
 wire s2_nap_lo_sel;
 wire s2_uap_sel;
 wire s2_lap_hi_sel;
 wire s2_lap_md_sel;
 wire s2_lap_lo_sel;
 wire s2_class_hi_sel;
 wire s2_class_md_sel;
 wire s2_class_lo_sel;
 wire s2_dclk_up_sel;
 wire s2_dclk_hi_sel;
 wire s2_dclk_md_sel;
 wire s2 dclk_lo_sel;
 wire s2_amaddr_sel;
 wire s2_fhsmisc_sel;
 wire s3_nap_hi_sel;
 wire s3_nap_lo_sel;
 wire s3_uap_sel;
 wire s3_lap_hi_sel;
 wire s3_lap_md_sel;
 wire s3_lap_lo_sel;
 wire s3_class_hi_sel;
 wire s3_class_md_sel;
 wire s3_class_lo_sel;
 wire s3_dclk_up_sel;
 wire s3_dclk_hi_sel;
 wire s3_dclk_md_sel;
 wire s3_dclk lo_sel;
 wire s3_amaddr_sel;
 wire s3_fhsmisc_sel;
 wire s4_nap hi_sel;
 wire s4_nap_lo_sel;
 wire s4_uap_sel;
 wire s4_lap_hi_sel;
 wire s4_lap_md_sel;
 wire s4_lap_lo sel;
 wire s4_class_hi_sel;
 wire s4_class_md_sel;
 wire s4_class_lo_sel;
 wire s4_dclk_up_sel;
 wire s4_dclk_hi_sel;
 wire s4_dclk_md_sel;
 wire s4_dclk_lo_sel;
 wire s4_amaddr_sel;
 wire s4_fhsmisc_sel;
 wire s5_nap_hi_sel;
 wire s5_nap_lo_sel;
 wire s5_uap_sel;
 wire s5_lap_hi_sel;
 wire s5_lap_md_sel;
 wire s5_lap_lo_sel;
 wire s5_class_hi_sel:
 wire s5_class_md_sel;
 wire s5_class_lo_sel;
 wire s5_dclk_up_sel;
 wire s5_dclk_hi_sel;
 wire s5_dclk_md_sel;
 wire s5_dclk_lo_sel;
 wire s5_amaddr_sel;
 wire s5_fhsmisc_sel;
 wire s6_nap_hi_sel;
 wire s6_nap_lo_sel;
 wire s6_uap_sel;
 wire s6_lap_hi_sel;
 wire s6_lap_md_sel:
 wire s6_lap_lo_sel;
 wire s6_class_hi_sel;
 wire s6_class_md_sel;
 wire s6_class_lo_sel;
 wire s6_dclk_up_sel;
 wire s6_dclk_hi_sel;
 wire s6_dclk_md_sel;
 wire s6_dclk_lo_sel;
 wire s6_amaddr_sel;
 wire s6_fhsmisc_sel;
 wire s7_nap_hi_sel;
 wire s7_nap_lo_sel;
 wire s7_uap_sel;
 wire s7_lap_hi_sel;
 wire s7_lap_md_sel
 wire s7_lap_lo_sel;
 wire s7_class_hi_sel;
 wire s7_class_md_sel;
 wire s7_class_lo_sel:
 wire s7_dclk_up_sel;
 wire s7_dclk_hi_sel;
 wire s7_dclk_md_sel:
 wire s7_dclk_lo_sel;
 wire s7_amaddr_sel;
 wire s7_fhsmisc_sel;
 wire s8_nap_hi_sel;
 wire s8_nap_lo_sel;
 wire s8_uap_sef;
 wire s8_lap_hi_sel;
 wire s8_lap_md_sel;
 wire s8_1ap_lo_sel;
 wire s8_class_hi_sel;
 wire s8_class_md_sel;
 wire s8_class_lo_sel;
 wire s8_dclk _up_sel;
 wire s8_dclk_hi_sel;
 wire s8_dclk_md_sel;
 wire s8_dclk_lo_sel;
 wire s8_amaddr_sel;
 wire s8_fhsmisc_sel;

 reg    [15:0]    ownnap;
 reg    [7:0]    ownuap;
 reg    [23:0]    ownlap;
 reg    [23:0]    ownclass;
 wire   [7:0] ownfhsmisc; reg [1:0] ownsr,ownsp; reg [2:0]
 ownpagemode;
 wire   [7:0] config;          reg auto_pscan_enable, autoistype,
 auto_iscan_enable, dvroute, region;
 reg    [7:0] rx_setup, tx_setup;
 reg    [7:0] dci;
 wire   [7:0] cmdl:          reg force_freq, loopback, rawdmode,
 starttimer;
 wire   [7:0] startcmd;      reg resendrx, nextrx, page, dinq, ginq,
 pscanbit, discan, giscan;
 wire   [7:0] stopcmd;       reg
 flush,exitpage,exitinq,exitpscan,exitiscan;
 wire   [7:0] psaving;       reg unpark,park,unsniff,sniff,hold;
 reg    [23:0]      glap, dlap, plap;
 reg    [7:0] puap;
 reg    [7:0] forced_rx;
 reg    [27:0]      psclkoffset;
 reg    [2:0] txamaddr;
 wire   [7:0] txtypereg;    reg [4:0] txtype;
 reg    [15:0]      txlength;
 reg    [5:0]      isrand_seed;
 wire   [7:0] intstat3;    reg [4:0] pintstat,3;
 reg    [7:0] intmask3;
 wire   [7:0] intstat2;    reg [7:2] pintstat2;
 reg    [7:0] intmask2;
 reg    [7:0] intstatl, intmask1;
 reg    [2:0] iscanstat;
 wire   [7:0] pscanstat;   reg [4:0] ppscanstat;
 wire   [7:0] pagestat;    reg [4:0] ppagestat;
 reg    [5:0] psavstat;
 reg    [23:0] recvdlap;
 reg    [2:0] recvdamaddr;
 wire   [7:1] recvdstat;
 reg    [3:0] rxtype_reg;
 reg rxflow, rxarqn, rxseqn;
 reg    [15:0]    tbeacon,nb,db,tb;
 reg    [15:0]
    maccess,taccess,daccess,nacc_slot,nb_sleep,nb_sleep,npoll;
 reg    [15:0]    tiw_reg,tii_reg,tpw_reg,tpi_reg,page_reg;
 reg    [15:0]
     pageresp_reg,newconn_reg,inquiry_reg,inqresp_reg;
 reg    [15:0]    superv_reg;
 reg    [7:0] nbc, npage, tx_reg;
   dsco1, tsco2, dsco2, tsco3, dsco3;
 reg    [7:0] piconetnum;
 reg    (7:0) master_index;
 reg    (15:0)       extmnap, m1_nap;
 reg    (7:0)        extmuap, m1_uap;
 reg    [23:0]       extmlap, m1_lap;
 reg    [23:0]       m1_class;
 reg    [27:0]       extmclk, m1_dclk;
   
 reg    [2:0] m1_pmaddr, m1_araddr;
 wire   [7:0]       m1_fhsmisc; reg [1:0] m1_sr,m1_sp; reg [2:0]
 ml_pagemode;
 reg    [15:0]       m1_dsniff, m1_tsniff, m1_nsniffatt,
 m1_nsniff_timer;
 reg    [15:0]       m1_hold_timer, m1_tbeacon, m1_nb, m1_db, m1_tb;
   
 reg [15:0] m1_nacc_slot, m1_nb_sleep, m1_db_sleep,
 m1_npoll;
 reg [7:0] security_index;
 reg [127:0]       authen_key, encryp_key;
 reg [7:0] encryp_length, encryp_rand;
 reg [7:0] hop_index;
 reg    [7:0] hopfreq_hi [78:0];
 reg [7:0] hopfreq_lo [78:0];
 reg    [7:0] power [63:0];

 reg    [7:0] slave_index;
 reg    [15:0]    s1_nap:
 reg    [7:0]     s1_uap;
 reg    [23:0]    s1_lap:
   
 reg    [27:0]    s1_dclk;
 reg    [2:0] s1_amaddr;
 wire   [7:0] s1_fhsmisc; reg [1:0] s1_sr,s1_sp; reg [2:0]
 s1_pagemode;

 reg    [15:0]   s2_nap;
 reg    [7:0]    s2_uap;
 reg    [23:0]   s2_lap;
 reg    [23:0]    s2_class;
 reg    [2:0] s2_amaddr;
 wire   [7:0] s2_fhsmisc; reg [1:0] s2_sr,s2_sp; reg [2:0]
 s2_pagemode;

 reg    [15:0]   s3_nap:
 reg    [7:0]    s3_uap:
 reg    [23:0]   s3_class;
 reg    [27:0]    s3_dclk;
 reg    [2:0] s3_amaddr;
 wire   [7:0] s3_fhsmisc; reg [1:0] s3_sr,s3_sp; reg [2:0]
 s3_pagemode;

 reg    [15:0]    s4_nap;
 reg    [7:0]     s4_uap;
 reg    [23:0]    s4_lap;
 reg    [27:0]    s4_dclk;
 reg    [2:0] s4 amaddr;
 wire   [7:0] s4_fhsmisc; reg [1:0] s4_sr,s4_sp; reg [2:0]
 s4_pagemode;

 reg    [7:0]     s5_uap;
 reg    [23:0]    s5_lap;
 reg    [23:0]    s5_class;
 reg    [27:0]    s5_dclk;
 reg    [2:0]     s5_amaddr;
 wire   [7:0]    s5 fhsmisc; reg [1:0] s5-sr,s5-sp; reg [2:0]
 s5_pagemode;

 reg    [15:0]    s6_nap;
 reg    [7:0]     s6_uap;
 reg    [23:0]    s6_lap;
 reg    [23:0]    s6_class;
 reg    [27:0]    s6_dclk;
 reg    [2:0]     s6_amaddr:
 wire   [7:0]     s6_fhsmisc: reg [1:0] s6_sr,s6_sp; reg [2:0]
 s6_pagemode;

 reg    [15:0]    s7_nap;
 reg    [7:0]     s7-uap;
 reg    [23:0]   s7- class;
 reg    [27:0]    s7_dclk;
 reg    [2:0]    s7_amaddr;
 wire   [7:0]    s7_fhsmisc; reg [1:0] s7_sr,s7_sp; reg [2:0]
 s7_pagemode;

 reg    [15:0]    s8_nap;
 reg    [7:0]     s8_uap;
 reg    [23:0]    s8_lap;
 reg    [23:0]    s8_class;
 reg    [27:0]    s8_dclk;
 reg    [2:0]     s8_amaddr;
 wire   [7:0]     s8_fhsmisc; reg [1:0] s8_sr,s8_sp; reg [2:0]
 s8_pagemode;



 /*** reg out data ***/
 always @(revision_sel
 or stepping_sel
 or ownnap_hi_sel or ownnap
 or ownnap_lo_sel
 or ownuap_sel or ownuap
 or ownlap_hi_sel or ownlap
 or ownlap_md_sel
 or ownlap_lo_sel
 or ownclass_hi_sel or ownclass
 or ownclass md sel
 or ownclass lo sel
 or ownfhsmisc_sel or ownfhsmisc
 or config_sel or config
 or rx _setup_sel or rx setup
 or tx_setup_sel or tx_setup
 or dci_sel or dci
 or carrier_hi_sel or carrier_setup
 or carrier_lo_sel
 or cmdl_sel or cmdl
 or startcmd_sel or startcmd
 or stopcmd_sel or stopcmd
 or psaving_sel or psaving
 or glap_hi_sel or glap
 or glap_md_sel
 or glap_lo_sel
 or dlap_hi_sel or dlap
 or dlap_md_sel
 or dlap_lo_sel
 or plap_hi_sel or plap
 or plap_md_sel
 or plap_lo_sel
 or puap_sel or puap
 or forced_rx_sel or forced_rx
 //or forced_tx_sel or forced_tx
 or pslave_clk1_sel or psclkoffset
 or pslave_clk2_sel
 or pslave_clk3_sel
 or pslave_clk4_sel
 or txamaddr_sel or txamaddr
 or tx_type_sel or txtypereg
 or tx_length_hi_sel or txlength
 or tx_length_lo_sel
 or isrand_seed_sel or isrand_seed
 or intstat3_sel or intstat3
 or intmask3_sel or intmask3
 or intrst3_sel
 or intstat1_sel or intstat1
 or intmaskl_sel or intmask1
 or intrst1_sel
 or intstat2_sel or intstat2
 or intmask2_sel or intmask2
 or intrst2_sel
  or iscanstat_sel or iscanstat
 or pscanstat_sel or pscanstat
 or pagestatus_sel or pagestat
 or psavstat_sel or psavstat
 or recvdlap_up_sel or recvdlap
 or recvdlap_md_sel
 or recvdlap_lo_sel
 or recvdamaddr sel or recvdamaddr
 or recvdstat_sel or recvdstat
 or mstates_sel or mstates
 or sstates sel or sstates
 or tbeacon_hi_sel or tbeacon
 or tbeacon_lo_sel
 or nb_hi_sel or nb
 or nb_lo_sel
 or db_hi_sel or db
 or db_lo_sel
 or tb_hi_sel or tb
 or tb_lo_sel
 or maccess_hi_sel or maccess
 or maccess_lo_sel
 or taccess_hi_sel or taccess
 or taccess_lo_sel
 or daccess_hi_sel or daccess
 or daccess_lo sel
 or nacc_slot_hi_sel or nacc_slot
 or nacc_slot_lo_sel
 or nb_sleep_hi_sel or nb_sleep
 or nb_sleep_lo_sel
 or db_sleep_hi_sel or db_sleep
 or db_sleep_lo_sel
 or npoll_hi sel or npoll
 or npoll_lo_sel
 or tiw_reg_hi_sel or tiw_reg
 or tiw_reg_lo_sel
 or tii_reg_hi_sel or tii_reg
 or tii_reg_lo_sel
 or tpw_reg_hi_sel or tpw_reg
 or tpw_reg_lo_sel
 or tpi_reg_hi_sel or tpi_reg
 or tpi_reg_lo_sel
 or page_reg_hi_sel or page_reg
 or page_reg_lo_sel
 or pageresp_reg_hi_sel or pageresp_reg
 or pageresp_reg_lo_sel
 or newconn_reg_hi_sel or newconn_reg
 or newconn_reg_lo_sel
 or inquiry_reg_hi_sel or inquiry_reg
 or inquiry_reg_lo_sel
 or inqresp_reg_hi_sel or inqresp_reg
 or inqresp_reg_lo_sel
 or nbc_sel or nbc
 or npage_sel or npage
 or tx_reg_sel or tx_reg
 or superv_reg_hi_sel or superv_reg
 or superv_reg_lo_sel
 or fifoadr_hi_sel or fifoadr
 or fifoadr_lo_sel
 or fifo_data_sel or fifodout
 or fifo_status_sel or fifostat
 or tsco1_sel or tsco1
 or dscol_sel or dsco1
 or airmodel_sel or airmode1
 or tsco2_sel or tsco2
 or dsco2_sel or dsco2
 or airmode2_sel or airmode2
 or tsco3_sel or tsco3
 or dsco3_sel or dsco3
 or airmode3_sel or airmode3
 or piconetnum_sel or piconetnum
 or master_index_sel or master_index
 or m1_nap_hi_sel or m1_nap
 or m1_nap_lo_sel
 or m1_uap_sel or m1_uap
 or m1_lap_hi_sel or m1_lap
 or m1_lap_md_sel
 or m1_lap_lo_sel
 or m1_class_hi_sel or m1_class
 or m1_class_md_sel
 or m1_class lo_sel
 or m1_dclk_up_sel or m1_dclk
 or m1_dclk_hi_sel
 or m1_dclk_md_sel
 or m1_dclk_lo_sel
 or m1_amaddr_sel or m1_amaddr
 or m1_fhsmisc_sel or m1_fhsmisc
 or m1_pmaddr_sel or m1_pmaddr
 or m1_araddr_sel or m1_araddr
 or m1_dsniff_hi_sel or m1_dsniff
 or m1_dsniff_lo_sel
 or m1_tsniff_hi_sel or m1_tsniff
 or m1_tsniff_lo_sel
 or m1_nsniffatt_hi_sel or m1_nsniffatt
 or m1_nsniffatt_lo_sel
 or m1_nsniff_timer_hi_sel or m1_nsniff_timer
 or m1_nsniff_timer_lo_sel
 or m1_hold_timer_hi_sel or m1_hold_timer
 or m1_hold_timer_lo_sel
 or m1_tbeacon_hi_sel or m1_tbeacon
 or m1_tbeacon_lo_sel
 or m1_nb_hi_sel or m1_nb
 or m1_nb_lo_sel
 or m1_db_hi_sel or m1_db
 or m1_db_lo_sel
 or m1_tb_hi_sel or ml_tb
 or m1_tb_lo_sel
 or m1_maccess_hi_sel_or m1-maccess
 or m1_maccess_lo_sel
 or m1_taccess_hi_sel or m1_taccess
 or m1_taccess_lo_sel
 or m1_daccess_hi_sel or m1_daccess
 or m1_daccess_lo_sel
 or m1_nacc_slot_hi sel or m1_nacc_slot
 or m1_nacc_slot_lo_sel
 or m1_nb_sleep_hi_sel or m1_nb_sleep
 or m1_nb_sleep_lo_sel
 or m1_db_sleep_hi_sel or m1_db_sleep
 or m1_db_sleep_lo_sel
 or m1_npoll_hi_sel or m1_npoll
 or m1_npoll_lo_sel
 or security_index_sel or security_index
 or authen_keyl sel or authen_key
 or authen_key2_sel
 or authen_key3_sel
 or authen key4_sel
 or authen_key5_sel
 or authen_key6-sel
 or authen_key7_sel
 or authen_key8_sel
 or authen_key9_sel
 or authen_key10_sel
 or authen_key11_sel
 or authen_key12_sel
 or authen_key13_sel
 or authen_key14_sel
 or authen_key15_sel
 or authen_key16_sel
 or encryp_key1_sel or encryp_key
 or encryp_key2_sel
 or encryp_key3_sel
 or encryp_key4_sel
 or encryp_key5_sel
 or encryp_key6_sel
 or encryp_key7_sel
 or encryp_key8_sel
 or encryp_key9 sel
 or encryp_key10_sel
 or encryp_key11_sel
 or encryp_key12_sel
 or encryp_key13_sel
 or encryp_key14_sel
 or encryp_key15_sel
 or encryp_key16_sel
 or encryp_lenqth_sel or eneryp_length
 or encryp_rand_sel or encryp_rand
 or hop_index_sel or hop_index
 or hopfreq_hi_sel or hopfreq_lo_sel
 or hopfreq_hi[0]
 or hopfreq_lo[0]
 or hopfreq_hi[1]
 or hopfreq_lo[1]
 or hopfreq_hi[2]
 or hopfreq_lo[2]
 or hopfreq_hi[3]
 or hopfreq_lo[3]
 or hopfreq_hi[4]
 or hopfreq_lo[4]
 or hopfreq_hi[5]
 or hopfreq_lo[5]
 or hopfreq_hi[6]
 or hopfreq_lo[6]
 or hopfreq_hi[7]
 or hopfreq_lo[7]
 or hopfreq_hi[8]
 or hopfreq_lo[8]
 or hopfreq_hi[9]
 or hopfreq_lo[9]
 or hopfreq-hi[10]
 or hopfreq_lo[10]
 or hopfreq_hi[11]
 or hopfreq_lo[11]
 or hopfreq_hi[12]
 or hopfreq_lo[12]
 or hopfreq_hi[13]
 or hopfreq_lo[13]
 or hopfreq_hi[14]
 or hopfreq__lo[14]
 or hopfreq_hi[15]
 or hopfreq_lo[15]
 or hopfreq_hi[16]
 or hopfreq_lo[16]
 or hopfreq_hi[17]
 or hopfreq_lo[17]
 or hopfreq_hi[18]
 or hopfreq_lo[18]
 or hopfreq_hi[19]
 or hopfreq_lo[19]
 or hopfreq_hi[20]
 or hopfreq_lo[20]
 or hopfreq_hi[21]
 or hopfreq_lo[21]
 or hopfreq_hi[22]
 or hopfreq_lo[22]
 or hopfreq_hi[23]
 or hopfreq_lo[23]
 or hopfreq_hi[24]
 or hopfreq_lo[24]
 or hopfreq_hi[25]
 or hopfreq_lo[25]
 or hopfreq_hi[26]
 or hopfreq_lo[26]
 or hopfreq_hi[27]
 or hopfreq_lo[27]
 or hopfreq_hi[28]
 or hopfreq_lo[28]
 or hopfreq_hi[29]
 or hopfreq_lo[29]
 or hopfreq_hi[30]
 or hopfreq_lo[30]
 or hopfreq_hi[31]
 or hopfreq_lo[31]
 or hopfreq_hi[32]
 or hopfreq_lo[32]
 or hopfreq_hi[33]
 or hopfreq_lo[33]
 or hopfreq_hi[34]
 or hopfreq_lo[34]
 or hopfreq_hi[35]
 or hopfreq_lo[35]
 or hopfreq_hi[36]
 or hopfreq_lo[36]
 or hopfreq_hi[37]
 or hopfreq_lo[37]
 or hopfreq_hi[38]
 or hopfreq_lo[38]
 or hopfreq_hi[39]
 or hopfreq_lo[39]
 or hopfreq_hi[40]
 or hopfreq_lo[40]
 or hopfreq_hi[41]
 or hopfreq_lo[41]
 or hopfreq_hi[42]
 or hopfreq_lo[42]
 or hopfreq_hi[43]
 or hopfreq_lo[43]
 or hopfreq_hi[44]
 or hopfreq_lo[44]
 or hopfreq_hi[45]
 or hopfreq_lo[45]
 or hopfreq_hi[46]
 or hopfreq_lo[46]
 or hopfreq_hi[47]
 or hopfreq_lo[47]
 or hopfreq_hi[48]
 or hopfreq_lo[48]
 or hopfreq_hi[49]
 or hopfreq_lo[49]
 or hopfreq_hi[50]
 or hopfreq_lo[50]
 or hopfreq_hi[51]
 or hopfreq_lo[51]
 or hopfreq_hi[52]
 or hopfreq_lo[52]
 or hopfreq_hi[53]
 or hopfreq_lo[53]
 or hopfreq_hi[54]
 or hopfreq_lo[54]
 or hopfreq_hi[55]
 or hopfreq_lo[55]
 or hopfreq_hi[56]
 or hopfreq_lo[56]
 or hopfreq_hi[57]
 or hopfreq_lo[57]
 or hopfreq_hi[58]
 or hopfreq_lo[58]
 or hopfreq_hi[59]
 or hopfreq_lo(59]
 or hopfreq_hi[60]
 or hopfreq_lo[60]
 or hopfreq_hi[61]
 or hopfreq_lo[61]
 or hopfreq_hi[62]
 or hopfreq_lo[62]
 or hopfreq_hi[63]
 or hopfreq_lo[63]
 or hopfreq_hi[64]
 or hopfreq_lo[64]
 or hopfreq_hi[65]
 or hopfreq_lo[65]
 or hopfreq_hi[66]
 or hopfreq_lo[66]
 or hopfreq_hi[67]
 or hopfreq_lo[67]
 or hopfreq_hi[68]
 or hopfreq_lo[68]
 or hopfreq_hi[69]
 or hopfreq_lo[69]
 or hopfreq_hi[70]
 or hopfreq_lo[70]
 or hopfreq_hi[71]
 or hopfreq_lo[71]
 or hopfreq_hi[72]
 or hopfreq_lo[72]
 or hopfreq_hi[73]
 or hopfreq_lo[73]
 or hopfreq_hi[74]
 or hopfreq_lo[74]
 or hopfreq_hi[75]
 or hopfreq_lo[75]
 or hopfreq_hi[76]
 or hopfreq_lo[76]
 or hopfreq_hi[77]
 or hopfreq_lo[77]
 or hopfreq_hi[78]
 or hopfreq_lo[78]
 or power_sel
 or power[0]
 or power[1]
 or power[2]
 or power[3]
 or power[4]
 or power[5]
 or power[6]
 or power[7]
 or power[8]
 or power[9]
 or power[10]
 or power[11]
 or power[12]
 or power[13]
 or power[14]
 or power[15]
 or power[16]
 or power[17]
 or power[18]
 or power[19]
 or power[20]
 or power[21]
 or power[22]
 or power[23]
 or power[24]
 or power[25]
 or power[26]
 or power[27]
 or power[28]
 or power[29]
 or power[30]
 or power[31]
 or power[32]
 or power[33]
 or power[34]
 or power[35]
 or power[36]
 or power[37]
 or power[38]
 or power[39]
 or power[40]
 or power[41]
 or power[42]
 or power[43]
 or power[44]
 or power[45]
 or power[46]
 or power[47]
 or power[48]
 or power[49]
 or power[50]
 or power[51]
 or power[52]
 or power[53]
 or power[54]
 or power[55]
 or power[56]
 or power[57]
 or power[58]
 or power[59]
 or power[60]
 or power[61]
 or power[62]
 or power[63]
 or slave_index_sel or slave_index
 or s1_nap_hi_sel or s1_nap
 or s1_nap_lo_sel
 or s1_uap_sel or s1 uap
 or s1_lap_hi_sel or s1_lap
 or s1_lap_md_sel
 or s1_lap_lo_sel
 or s1_class_hi_sel or s1_class
 or s1_class_md_sel
 or s1_class_lo_sel
 or s1_dclk_up_sel or s1_dclk
 or s1_dclk_hi_sel
 or s1_dclk_md_sel
 or s1_dclk_lo_sel
 or s1_amaddr_sel or s1_amaddr
 or s1_fhsmisc_sel or s1_fhsmisc

 or s2_nap_hi_sel or s2_nap
 or s2_nap_lo_sel
 or s2_uap_sel or s2_uap
 or s2_lap_hi_sel or s2_lap
 or s2_lap_md_sel
 or s2_lap_lo_sel
 or s2_class_hi_sel or s2_class
 or s2_class md_sel
 or s2_class_lo_sel
 or s2_dclk_up_sel or s2_dclk
 or s2_dclk_hi_sel
 or s2_dclk_md_sel
 or s2_dclk_lo_sel
 or s2_amaddr_sel or s2_amaddr
 or s2 fhsmisc sel or s2 fhsmisc

 or s3_nap_hi_sel or s3_nap
 or s3_nap_lo_sel
 or s3_uap_sel or s3_uap
 or s3_lap_hi_sel or s3_lap
 or s3_lap_md_sel
 or s3_lap_lo_sel
 or s3_class_hi_sel or s3_class
 or s3_class_md_sel
 or s3_class_lo_sel
 or s3_dclk_up_sel or s3_dclk
 or s3_dclk_hi_sel
 or s3_dclk_md_sel
 or s3_dclk_lo_sel
 or s3_amaddr_sel or s3_amaddr
 or s3_fhsmisc_sel or s3_fhsmisc

 or s4_nap_hi_sel or s4_nap
 or s4_nap_lo_sel
 or s4_uap_sel or s4_uap
 or s4_lap_hi_sel or s4_lap
 or s4_lap_md_sel
 or s4_lap_lo_sel
 or s4_class_hi_sel or s4_class
 or s4_class_md_sel
 or s4_class_lo_sel
 or s4_dclk_up_sel or s4_dclk
 or s4_dclk_hi_sel
 or s4_dclk_md_sel
 or s4_dclk_lo_sel
 or s4_amaddr_sel or s4_amaddr
 or s4_fhsmisc_sel or s4 fhsmisc

 or s5_nap hi_sel or s5_nap
 or s5_nap lo_sel
 or s5_uap_sel or s5_uap
 or s5_lap_hi_sel or s5_lap
 or s5_lap_md_sel
 or s5_lap_lo_sel
 or s5_class_hi_sel or s5_class
 or s5_class_md_sel
 or s5_class_lo_sel
 or s5_dclk_up_sel or s5_dclk
 or s5_dclk_hi_sel
 or s5_dclk_md_sel
 or s5_dclk_lo_sel
 or s5_amaddr_sel or s5_amaddr
 or s5_fhsmisc_sel or s5_fhsmisc

 or s6_nap_hi_sel or s6 nap
 or s6_nap_lo_sel
 or s6_uap_sel or s6_uap
 or s6_lap_hi_sel or s6_lap
 or s6_lap_md_sel
 or s6_lap_lo_sel
 or s6_class_hi sel or s6_class
 or s6_class_md_sel
 or s6_class_lo_sel
 or s6_dclk_up_sel or s6_dclk
 or s6_dclk_hi_sel
 or s6_dclk_md_sel
 or s6-dclk-lo-sel
 or s6_amaddr_sel or s6_amaddr
 or s6_fhsmisc_sel or s6_fhsmisc

 or s7_nap_hi_sel or s7_nap
 or s7_nap_lo_sel
 or s7_uap_sel or s7_uap
 or s7_lap_hi_sel or s7_lap
 or s7_lap_md_sel
 or s7_lap_lo_sel
 or s7_class_hi_sel or s7_class
 or s7_class_md_sel
 or s7_class_lo_sel
 or s7_dclk_up_sel or s7_dclk
 or s7_dclk_hi_sel
 or s7_dclk_md_sel
 or s7_dclk_lo_sel
 or s7_amaddr_sel or s7_amaddr
 or s7_fhsmisc_sel or s7_fhsmisc

 or s8_nap_hi_sel or s8_nap
 or s8_nap_lo_sel
 or s8_uap_sel or s8_uap
 or s8_lap_hi_sel or s8_lap
 or s8_lap_md_sel
 or s8_lap_lo_sel
 or s8_class_hi_sel or s8_class
 or s8_class_md_sel
 or s8_class_lo_sel
 or s8_dclk_up_sel or s8_dclk
 or s8_dclk_hi_sel
 or s8_dclk_md_sel
 or s8_dclk_lo_sel
 or s8_amaddr_sel or s8_amaddr
 or s8 fhsmisc sel or s8 fhsmisc

 )
 case(l'b1)

    revision_sel:            regdata = 'REVISION;
    stepping_sel:            regdata = 'STEP;
    ownnap_hi_sel:           regdata = ownnap[15:8];
    ownnap_lo_sel:           regdata = ownnap [7:0]:
    ownuap_sel:              regdata = ownuap;
    ownlap_hi_sel:           regdata = ownlap[23:16];
    ownlap_md_sel:           regdata = ownlap[15:8];
    ownlap_lo_sel:           regdata = ownlap[7:0];
    ownclass_hi_sel:    regdata = ownclass[23:16];
    ownclass_md_sel:    regdata = ownclass[15:8];
    ownclass_lo_sel:    regdata = ownclass[7:0];
    ownfhsmisc_sel:     regdata = ownfhsmisc;
    config_sel:              regdata = config;
    rx_setup_sel:            regdata = rx_setup;
    tx_setup_sel:            regdata = tx setup;
    carrier_hi_sel:          regdata = carrier_setup[15:8];
    carrier_lo sel:          regdata = carrier_setup[7:0];
    cmdl_sel:           regdata = cmdl;
     startcmd_sel:          regdata = startcmd;
     stopcmd_sel:           regdata = stopcmd;
    psaving_sel:            regdata = psaving;
    glap_hi_sel             regdata = glap[23:16];
    glap_md_sel             regdata = glap[15:8];
    glap_lo_sel:            regdata = glap[7:0];
    dlap_hi_sel:            regdata = dlap[23:16];
    dlap_md_sel:            regdata = dlap[15:8];
    dlap_lo_sel:            regdata = dlap[7:0];
    plap_hi_sel:            regdata = plap[23:16];
    plap_md_sel:            regdata = plap[15:8];
    plap_lo_sel:            regdata = plap[7:0];
    puap_sel:            regdata = puap;
    forced_rx_sel:          regdata = forced_rx;
    dci_sel: regdata = dci;
    pslave_clkl_sel:    regdata = {4'b0,psclkoffset[27:29]};
    pslave_clk2_sel:    regdata = psclkoffset[23:16];
    pslave_clk3_sel:    regdata = psclkoffset[15:8];
    pslave_clk4_sel:    regdata = psclkoffset[7:0];
    txamaddr_sel:          regdata = {5'b0,txamaddr};
    tx_type_sel:           regdata = txtypereg;
    tx_length_hi_sel:          regdata = txlength[15:8];
    tx_length_lo_sel:          regdata = txlength[7:0];
    isrand_seed_sel:    regdata = {2'bO, isrand_seed};
    intstat3_sel:          regdata = intstat3;
    intmask3_sel:          regdata = intmask3;
    intrst3_sel:           regdata = 8'b0;
    intstatl_sel:          regdata = intstat1;
    intmaskl_sel:          regdata = intmask1;
    intrstl_sel:           regdata = 8'b0;
    intstat2_sel:          regdata = intstat2;
    intmask2 sel:          regdata = intmask2;
    intrst2_sel:           regdata = 8'b0;
    iscanstat_sel:    regdata = {5'b0,iscanstat};
    pscanstat_sel:    regdata = pscanstat;
    pagestatus_sel:    regdata = pagestat;
    psavstat_sel:          regdata = {2'b0,psavstat};
    recvdlap_up_sel    regdata = recvdlap(23:16);
    recvdlap_md_sel:    regdata = recvdlap[15:8];
    recvdlap_lo_sel     regdata = recvdlap[7:0];
    recvdamaddr_sel:    regdata = {5'b0, recvdamaddr};
    recvdstat_sel:          regdata = {recvdstat, 1'b0};
   mstates_sel:             regdata = {3'b0,mstates};
   sstates_sel:             regdata = {3'b0,sstates};
   tbeacon_hi_sel:    regdata = tbeacon[15:8];
   tbeacon_lo_sel:    regdata = tbeacon[7:0];
   nb_hi_sel:         regdata = nb[15:8];
   nb_lo_sel:         regdata = nb[7:0];
   db_hi_sel:         regdata = db[15:8];
   db_lo_sel:         regdata = db[7:0];
   tb_hi_sel:         regdata = tb[15:8];
   tb_lo_sel:         regdata = tb[7:0];
   maccess_hi_sel:    regdata = maccess[15:8];
   maccess_lo_sel:    regdata = maccess[7:0];
   taccess_hi_sel:    regdata = taccess[15:8];
   taccess_lo_sel:    regdata = taccess[7:0];
   daccess_hi_sel:    regdata = daccess[15:8];
     daccess_lo_sel:  regdata = daccess[7:0];
     nacc_slot_hi_sel:    regdata = nacc_slot[15:8];
     nacc_slot_lo_sel:    regdata = nacc_slot[7:0];
     nb_sleep_hi_sel: regdata = nb_sleep[15:8];
     nb_sleep_lo_sel: regdata - nb_sleep[7:0];
     db_sleep_hi_sel: regdata = db_sleep[15:8];
     db_sleep_lo_sel: regdata = db_sleep[7:0];
     npoll_hi_sel:       regdata = npoll[15:8];
     npoll_lo_sel:       regdata = npoll[7:0];
     tiw_reg_hi_sel: regdata = tiw_reg[15:8];
     tiw_reg_lo_sel: regdata = tiw_reg[7:0];
     tii_reg_hi sel: regdata = tii_reg[15:8];
     tii_reg_lo_sel: regdata = tii_reg[7:0];
     tpw_reg_hi_sel: regdata = tpw_reg[15:8];
     tpw_reg_lo_sel: regdata = tpw_reg[7:0];
     tpi_reg_hi_sel: regdata = tpi_reg[15:8];
     tpi_reg_lo_sel: regdata = tpi_reg[7:0];
     page_reg_hi_sel:regdata = page_reg[15:8];
     page_reg_lo_sel:regdata = page_reg[7:0];
     pageresp_reg_hi_sel:   regdata = pageresp_reg[15:8];
     pageresp_reg_lo_sel:   regdata = pageresp_reg[7:0];
     newconn_reg_hi_sel:    regdata = newconn_reg[15:8];
     newconn_reg_lo_sel:    regdata = newconn_reg[7:0];
     inquiry_reg_hi_sel:    regdata = inquiry_reg[15:8];
     inquiry_reg_lo_sel:    regdata = inquiry_reg[7:0];
     inqresp reg hi sel:    regdata = inqresp reg[15:8];
     inqresp_reg_lo_sel:    regdata = inqresp_reg[7:0];
     nbc_sel:        regdata = nbc;
     npage_sel:      regdata = npage;
     tx_reg_sel:     regdata = tx_reg;
     superv_reg_hi_sel:    regdata = superv_reg[15:8];
     superv_reg_lo_sel:    regdata = superv_reg[7:0];
     fifoadr_hi_sel: regdata = fifoadr[15:8];
     fi foadr_lo_sel:regdata = fifoadr[7:0];
     fifo_data_sel:       regdata. = fifodout;
     fifo_status_sel:regdata = fifostat;
     tsco1_sel:      regdata = tsco1;
     dsco1_sel:      regdata = dsco1;
     airmode1_sel:        regdata = {6'b0,airmode1};
     tsco2_sel:      regdata = tsco2;
     dsco2_sel:      regdata = dsco2;
     airmode2_sel:        regdata = {6'b0,airmode2};
     tsco3_sel:      regdata = tsco3;
     dsco3_sel:      regdata = dsco3;
     airmode3_sel:        regdata = {6'b0,airmode3};
     piconetnum_sel: regdata = piconetnum;
     master_index_sel:    regdata = master_index;
     m1_nap_hi_sel:       regdata = m1_nap[15:8];
     m1_nap_lo_sel:       regdata = m1_nap[7:0];
     m1_uap_sel:          regdata = m1_uap;
     m1_lap_hi_sel:       regdata = m1_lap[23:16);
     m1_lap_md_sel:       regdata = m1_lap[15:8];
     m1_lap_lo_sel:       regdata = m1_lap[7:0];
     m1_class_hi_sel:     regdata = m1_class[23:16];
     m1_class_md_sel:regdata = m1_classt[15:8];
     m1_class_lo_sel:regdata = m1_class[7:0];
     m1_dclk_up_sel: regdata = {4'b0,m1dclk[27:24]};
     m1_dclk_hi sel:       regdata = m1_dclk[23:16];
     m1_dclk_md_sel: regdata = m1_dclk[15:8];
     m1_dclk_lo_sel: regdata = m1_dclk[7:0];
     m1_amaddr_sel:  regdata = {5'b0, m1_amaddr};
     m1_fhsmisc_sel: regdata = m1_fhsmisc;
     m1_pmaddr_sel:        regdata = {5'b0,m1_pmaddr};
     m1_araddr_sel:        regdata = {5'b0,m1_araddr};
     m1_dsniff_hi_sel:     regdata = m1_dsniff[15:8];
     m1_dsniff_lo_sel:     regdata = m1_dsniff[7:0];
     m1_tsniff_hi_sel:     regdata = m1_tsniff[15:8];
    m1_tsniff_lo_sel:      regdata = m1_tsniff[7:0];
    m1_nsniffatt_hi_sel:   regdata = m1_nsniffatt[15:8];
    m1_nsniffatt_lo_sel:   regdata = m1_nsniffatt[7:0];
    m1_nsniff_timer_hi_sel:regdata = m1_nsniff_timer[15:8];
    m1_nsniff_timer_lo_sel:regdata = m1_nsniff_timer[7:0];
    m1_hold_timer_hi_sel:  regdata = m1_hold_timer[15:8];
    m1_hold_timer_lo_sel:  regdata = m1_hold_timer[7:0];
    m1_tbeacon_hi_sel:     regdata = m1_tbeacon[15:8];
    m1_tbeacon_lo_sel:     regdata = m1_tbeacon[7:0];
    m1_nb_hi_sel           regdata =m1_nb[ 15:8];
    m1_nb_lo_sel:          regdata = m1_nb[7:0];
    m1_db_hi_sel:          regdata = m1_db[15:8];
    m1_db_lo_sel:          regdata = m1_db[7:0];
    m1_tb_hi_sel:          regdata = m1_tb[15:8];
    m1_tb_lo_sel:          regdata = m1_tb[7:0];
    m1_maceess_hi_sel:     regdata = m1_maccess[15:8];
    m1_maccess_lo_sel:     regdata = m1_maccess[7:0];
    m1_taccess_hi_sel:     regdata = m1_taccess[15:8];
    m1_taceess_lo_sel:     regdata = m1_taccess[7:0];
    m1 daccess_hi_sel:     regdata = m1_daccess[15:8];
    m1_daccess_lo_sel:     regdata = m1_daccess[7:0];
    m1_nacc_ slot_hi_sel:  regdata = m1_nacc_slot[15:8];
    m1_nacc_slot_lo_sel:   regdata = m1_nacc_slot[7:0];
    m1_nb_sleep_hi sel:    regdata = m1_nb_sleep[15:8];
    m1_nb_sleep_lo_sel:    regdata = m1_nb_sleep[7:0];
    m1_db_sleep_hi_sel:    regdata = m1 _db_sleep[15:8];
   m1_db_sleep_lo_sel:     regdata = m1_db_sleep[7:0];
   m1_npoll_hi_sel:        regdata = m1_npoll[15:8];
   m1_npoll_lo_sel:        regdata = m1_npoll[7:0];
    security_index_sel:    regdata = security_index;
   authen_keyl_sel:  regdata = authen_key[127:120];
   authen_key2_sel:       regdata = authen_key[119:112];
   authen_key3_sel:       regdata = authen_key[111:104];
   authen_key4_sel:       regdata = authen_key[103:96];
   authen_key5_sel:       regdata = authen_key[95:88];
   authen_key6_sel:       regdata = authen_key[87:80];
   authen_key7_sel:       regdata = authen_key[79 72]
   authen_key8_sel:       regdata = authen_key[71:64];
   authen_key9_sel:       regdata = authen_key[63:56];
   authen_key10_sel:      regdata = authen_key[55:48];
   authen_keyll_sel:      regdata = authen_key[47:40];
   authen_key12_sel:      regdata = authen_key[39:32];
   authen_key13_sel:      regdata = authen_key[31:24];
   authen_key14_sel:      regdata = authen_key[23:16];
   authen_key15_sel:      regdata = authen_key[15:8];
   authen_key16_sel:      regdata =authen_key[7:0];
    encryp_keyl_sel: regdata = encryp_key[127:120];
    encryp_key2_sel:      regdata = encryp_key[119:112];
    encryp_key3_sel:      regdata = encryp_key[111:104];
    encryp_key4_sel:      regdata = encryp_key[103:96];
    encryp_key5 sel:      regdata = encryp_key[95:88];
    encryp_key6_sel:      regdata = encryp_key[87:80];
    encryp_key7_sel:      regdata = encryp_key[79:72];
    encryp_key8_ sel:     regdata =encryp_key[71:64];
    encryp_key9_sel:      regdata = encryp_key[63:56];
    encryp_key10_sel:     regdata = encryp_key[55:48];
    encryp_keyll_sel:     regdata = encryp_key[47:40];
    encryp_key12_sel:     regdata = encryp_key[39:32];
    encryp_key13_sel:     regdata = encryp_key[31:24];
    encryp_key14_sel:     regdata = encryp_key[23:16];
    encryp_key15_sel:     regdata = encryp_key[15:8];
    encryp_key16_sel:     regdata = encryp_key[7:0];
    encryp_length_sel:    regdata = encryp_length;
    encryp_rand_sel: regdata = encryp_rand;

    hop_index_sel:        regdata = hop_index;

    hopfreq_hi_sel[0]:    regdata = hopfreq_hi[0];
    hopfreq_lo_sel[0]     regdata = hopfreq_lo[0];
    hopfreq_hi_sel[1]:    regdata = hopfreq_hi[1];
    hopfreq_lo_sel[1]:    regdata = hopfreq_lo[1];
    hopfreq_hi_sel[2]:    regdata = hopfreq_hi[2];
    hopfreq_lo_sel[2]:    regdata = hopfreq_lo[2];
    hopfreq_hi_sel[3]:    regdata = hopfreq_hi[3];
    hopfreq_lo_sel[3]:    regdata = hopfreq_lo[3];
    hopfreq_hi_sel[4]:    regdata = hopfreq_hi[4];
    hopfreq_lo_sel[4]:    regdata = hopfreq_lo[4];
    hopfreq_hi_sel[5]:    regdata = hopfreq_hi[5];
    hopfreq_lo_sel[5]:    regdata = hopfreq_lo[5];
    hopfreq_hi_sel[6]:    regdata = hopfreq_hi[6];
    hopfreq_lo_sel[6]:    regdata = hopfreq_lo[6];
    hopfreq_hi_sel[7]:    regdata = hopfreq_hi[7];
    hopfreq_lo_sel[7]:    regdata = hopfreq_lo[7];
    hopfreq_hi_sel[8]:    regdata = hopfreq_hi[8];
    hopfreq_lo_sel[8]:    regdata = hopfreq_lo[8];
    hopfreq_hi_sel[9]:    regdata = hopfreq_hi[9];
    hopfreq_lo_sel[9]:    regdata = hopfreq_lo[9];

    hopfreq_hi_sel[10]:   regdata = hopfreq_hi[10];
    hopfreq_lo_sel[10]:   regdata = hopfreq_lo[10];
    hopfreq_hi_sel[11]:   regdata = hopfreq_hi[11];
    hopfreq_lo_sel[11]:   regdata = hopfreq_lo[11];
    hopfreq_hi_sel[12]:   regdata = hopfreq_hi[12];
    hopfreq_lo_sel[12]:   regdata = hopfreq_lo[12];
    hopfreq_hi_sel[13]:   regdata = hopfreq_hi[13];
    hopfreq_lo_sel[13]:   regdata = hopfreq_lo[13];
    hopfreq_hi -sel[14]:  regdata = hopfreq_hi[14];
    hopfreq_lo_sel[14]:   regdata = hopfreq_lo[14];
    hopfreq_hi_sel[15]:   regdata = hopfreq_hi[15];
    hopfreq_lo_sel[15]:   regdata = hopfreq_lo[15];
    hopfreq_hi_sel[16]:   regdata = hopfreq_hi[16];
    hopfreq_lo_sel[16]:   regdata = hopfreq_lo[16];
    hopfreq_hi_sel[17]:   regdata = hopfreq_hi[17];
   hopfreq_lo_ sel[17]:  regdata = hopfreq_lo[17];
   hopfreq_hi sel[18]:   regdata = hopfreq_hi[18];
   hopfreq_lo_sel[18]:   regdata = hopfreq_lo[18];
   hopfreq_hi_sel[19]:   regdata =hopfreq_hi[19];
   hopfreq_lo_sel[19]:   regdata = hopfreq_lo[19];

   hopfreq_hi_sel[20]:   regdata = hopfreq_hi[20];
   hopfreq_lo_sel[20]:   regdata = hopfreq_lo[20];
   hopfreq_hi_sel[21]:   regdata = hopfreq_hi[21];
   hopfreq_lo_sel[21]:   regdata = hopfreq_lo_[21];
   hopfreq_hi_sel[22]:   regdata = hopfreq_hi[22];
   hopfreq_lo_sel[22]:    regdata = hopfreq_lo[22];
   hopfreq_hi_sel[23]:   regdata = hopfreq_hi[23];
   hopfreq_lo_sel[23]:   regdata = hopfreq_lo[23];
   hopfreq_hi_sel[24]:   regdata = hopfreq_hi[24];
   hopfreq_lo_sel[24]:    egdata = hopfreq_lo[24];
   hopfreq_hi_sel[25]:   regdata = hopfreq_hi[25];
    hopfreq_lo_sel[25]:   regdata = hopfreq_lo[25];
    hopfreq_hi_sel[26]:   regdata = hopfreq_hi[26];
    hopfreq_lo_sel[26]:   regdata = hopfreq_lo[26];
    hopfreq_hi_sel[27]:   regdata = hopfreq_hi[27];
    hopfreq_lo_sel[27]:   regdata =hopfreq_lo[27];
    hopfreq_hi_sel[28]:   regdata = hopfreq_hi_[28];
    hopfreq_lo_sel[28]:   regdata = hopfreq_lo[28];
    hopfreq_hi_sel[29]:   regdata = hopfreq_hi[29];
    hopfreq_lo_sel[29]:   regdata = hopfreq_lo[29]:

    hopfreq_hi_ sel[30]:  regdata = hopfreq_hi[30];
    hopfreq_lo_sel[30]:    regdata =hopfreq_lo[30];
    hopfreq_hi_sel[31]:   regdata =hopfreq_hi[31];
    hopfreq_lo_sel[31]:   regdata =hopfreq_lo[31];
    hopfreq_hi_sel[32]:   regdata = hopfreq_hi [32];
    hopfreq_lo_sel[32]:   regdata = hopfreq_lo[32];
    hopfreq_hi_sel[33]:   regdata =hopfreq_hi[33];
    hopfreq_lo-sel[33]:   regdata = hopfreq_lo[33];
    hopfreq_hi_sel[34]:   regdata = hopfreq_hi[34];
    hopfreq_lo_sel[34]:   regdata = hopfreq_lo[34];
    hopfreq_hi-sel[35]:   regdata = hopfreq_hi[35];
    hopfreq_lo_sel[35]:   regdata = hopfreq_lo[35];
    hopfreq_hi_sel[36]:   regdata = hopfreq_hi[36];
    hopfreq_lo_sel[36]:   regdata = hopfreq_lo[36];
    hopfreq_hi_sel[37]:   regdata =hopfreq_hi[37];
    hopfreq_lo_sel[37]:   regdata = hopfreq_lo[37];
    hopfreq_hi_sel[38]:   regdata = hopfreq_hi 38 ;
    hopfreq lo_sel[38]:   regdata = hopfreq_lo[38];
    hopfreq_hi_sel[39]:   regdata = hopfreq_hi[39];
    hopfreq_lo_sel[39]:   regdata = hopfreq_lo[39];

    hopfreq_hi_sel[40]:   regdata = hopfreq_hi[40];
    hopfreq_lo_sel[40]:   regdata = hopfreq_lo[40];
    hopfreq_hi_sel[41]:   regdata = hopfreq_hi[41];
    hopfreq_lo_sel[41]:   regdata = hopfreq_lo[41];
    hopfreq_hi_sel[42]:   regdata = hopfreq_hi[42];
    hopfreq_lo_sel[42]:   regdata = hopfreq_lo 42 ;
    hopfreq_hi_sel[43]:   regdata =hopfreq_hi[43];
     hopfreq_lo_sel[43]:  regdata = hopfreq_lo[43];
     hopfreq_hi-sel[44]:  regdata = hopfreq_hi[44];
   hopfreq_lo_sel[44]:   regdata = hopfre_lo[44];
   hopfreq_hi _sel[45]:   regdata = hopfreq_hi[45];
   hopfreq_lo_sel[45]:   regdata = hopfreq_lo[45];
   hopfreq_hi_sel[46]:   regdata = hopfreq_hi[46];
   hopfreq_lo_sel[46]:   regdata = hopfreq_lo[46];
   hopfreq_hi_sel[47]:   regdata = hopfreq_hi[47];
   hopfreq_lo _sel[47]:  regdata = hopfreq_lo[47];
   hopfreq_hi_sel[48]:   regdata = hopfreq_hi[48];
   hopfreq_lo_sel[48]:   regdata = hopfreq_lo[48];
   hopfreq_hi_sel[49]:   regdata = hopfreq_hi[49];
   hopfreq_lo_sel[49]:   regdata = hopfreq_lo[49];

   hopfreq_hi _sel[50]:   regdata = hopfreq__hi[50]:
   hopfreq_lo_sel[50]:    regdata = hopfreq_lo[50]:
   hopfreq_hi sel[51]:    regdata =hopfreq_hi[51];
   hopfreq_lo_sel[51]:    regdata = hopfreq_lo[51]
   hopfreq_hi_sel[52]:    regdata = hopfreq_hi[52];
   hopfreq_lo_sel[52]:    regdata = hopfreq_lo[52];
   hopfreq_hi_sel[53]:    regdata = hopfreq_hi[53];
   hopfreq_lo_sel[53]:    regdata = hopfreq_lo_[53];
   hopfreq_hi_sel[54]:    regdata = hopfreq_hi[54];
   hopfreq_lo_sel[54]:    regdata = hopfreq_lo[54];
   hopfreq_hi_sel[55]:    regdata = hopfreq_hi[55];
   hopfreq_lo_sel[55]:    regdata = hopfreq_lo[55];
   hopfreq_hi_sel[56]:    regdata = hopfreq_hi[56];
   hopfreq_lo_sel[56]:    regdata = hopfreq_lo[56];
   hopfreq_hi_sel[57]:    regdata = hopfreq_hi[57];
   hopfreq_lo_sel[57]:    regdata = hopfreq_lo[57];
   hopfreq_hi_sel[58]:    regdata = hopfreq_hi[58];
   hopfreq_lo_sel[58]:    regdata = hopfreq_lo[58]:
    hopfreq_hi_sel[59]:   regdata = hopfreq_hi[59];
    hopfreq_lo_sel[59]:   regdata =hopfreq_lo[59];

    hopfreq_hi_sel[60]:   regdata = hopfreq_hi[60];
    hopfreq_lo_sel[60]:  regdata = hopfreq_lo[60];
    hopfreq_hi_sel[61]:   regdata =hopfreq_hi[61];
    hopfreq_lo_sel[61]:   regdata = hopfreq_lo[61];
    hopfreq_hi_sel[62]:   regdata = hopfreq_hi[62];
    hopfreq_lo_sel[62]:   regdata = hopfreq_lo[62];
    hopfreq_hi_sel[63]:   regdata = hopfreq_hi[63];
    hopfreq_lo_sel[63]:   regdata = hopfreq_lo[63];
    hopfreq_hi_sel[64]:   regdata = hopfreq_hi[64];
    hopfreq_lo_sel[64]:   regdata = hopfreq_lo_[64];
    hopfreq_hi_sel[65]:   regdata = hopfreq_hi[65];
    hopfreq_lo_sel[65]:   regdata = hopfreq_lo_[65];
    hopfreq_hi_sel[66]:   regdata = hopfreq_hi[66];
    hopfreq_lo_sel[66]:   regdata = hopfreq_lo_[66];
    hopfreq_hi_set[67]:   regdata = hopfreq_hi[67];
    hopfreq_lo_sel[67]:   regdata = hopfreq_lo[67];
    hopfreq_hi_sel[68]:   regdata = hopfreq_hi[68];
    hopfreq_lo_sel[68]:   regdata = hopfreq_lo[68];
    hopfreq_hi_sel[69]:   regdata = hopfreq_hi[69];
    hopfreq_lo_sel[69]:   regdata =hopfreq_lo[69];

    hopfreq_hi_sel[70]:   regdata = hopfreq_hi[70];
    hopfreq_lo_sel[70]:   regdata = hopfreq_lo[70];
    hopfreq_hi_sel[71]:   regdata = hopfreq_hi[11];
    hopfreq_lo_sel[71]:   regdata = hopfreq_lo[71];
   hopfreq_hi_sel[72]:    regdata = hopfreq_hi[72];
   hopfreq_lo_sel[72]:    regdata = hopfreq_lo[72];
   hopfreq_hi_sel[73]:    regdata = hopfreq_hi[73];
    hopfreq_lo_sel[73]:   regdata = hopfreq_lo[73];
    hopfreq_hi_sel[74]:   regdata = hopfreq_hi[74];
    hopfreq_lo_sel[74]:   regdata = hopfreq_lo[74];
    hopfreq_hi_sel[75]:   regdata = hopfreq_hi[75];
    hopfreq_lo_sel[75]:   regdata = hopfreq_lo[75];
    hopfreq_hi_sel[76]:   regdata = hopfreq_hi[76];
    hopfreq_lo_sel[76]:   regdata = hopfreq_lo[76];
    hopfreq_hi_sel[77]:   regdata = hopfreq_hi[77];
    hopfreq_lo_sel[77]:   regdata = hopfreq_lo[77];
    hopfreq_hi_sel[78]:   regdata = hopfreq_hi[78];
    hopfreq_lo_sel[78]:   regdata = hopfreq_l0[78];

    power_sel[0]:         regdata = power[0];
   power_sel[1]:          regdata = power[1];
    power_sel[2]:         regdata = power[2];
    power_sel[3]:         regdata = power[3];
    power_sel[4]:         regdata = power[4]
    power_sel[5]:         regdata = power[5];
    power_sel[6]:         regdata = power[6];
    power_sel[7]:         regdata = power[7];
    power_sel[8]:         regdata = power[8];
    power_sel[9]:         regdata = power[9];

    power_sel[10]:         regdata = power[10];
    power_sel[11]:         regdata = power[11];
    power_sel[12]:         regdata = power[12];
    power_sel[13]:         regdata = power[13];
    power_sel[14]:         regdata = power[14];
    power_sel[15]:         regdata = power[15];
    power_sel[16]:         regdata = power[16];
    power_sel[17]:         regdata = power[17]:
    power_sel[18]:         regdata = power[18];
    power_sel[19]:         regdata = power[19];

    power-sel[20]:         regdata = power[20];
    power_sel[21]:         regdata = power[21];
    power_sel[22]:         regdata = power[22];
    power_sel[23]:         regdata = power[23];
    power_sel[24]:         regdata = power[24];
    power_sel[25]:         regdata = power[25];
    power_sel[26]:         regdata = power[26];
    power_sel[27]:         regdata = power[27];
    power_sel[28]:         regdata = power[28];
    power_sel[29]:         regdata = power[29];

    power_sel[30]:         regdata = power[30];
    power_sel[31]:         regdata = power[31];
    power_sel[32]:         regdata = power[32];
    power_sel[33]:         regdata = power[33];
    power_sel[34]:         regdata = power[34];
    power_sel[35]:         regdata = power[35];
    power_sel[36]:         regdata = power[36];
    power_sel[37]:         regdata = power[37];
     power_sel[38]:        regdata = power[38];
     power_sel[39]:        regdata = power[39];

     power_sel[40]:        regdata = power[40];
    power_sel[41]:         regdata = power[41] ;
    power_sel[42]:         regdata = power[42];
    power_sel[43]:         regdata = power[43];
    power_sel[44]:         regdata = power[44];
    power_sel[45]:         regdata = power[45];
    power_sel[46]:         regdata = power[46];
    power_sel[47]:         regdata = power[47];
    power_sel[48]:         regdata = power[48];
    power_sel[49]:         regdata = power[49];

    power-sel[50]:         regdata = power[50];
    power_sel[51]:         regdata = power(51);
    power_sel[52]:         regdata = power[52];
    power_sel[53]:         regdata = power[53];
    power_sel[54]:         regdata = power[54];
    power_sel[55]:         regdata = power[55];
    power_sel[56]:         regdata = power[56];
    power_sel[57]:         regdata = power[57];
    power_sel[58]:         regdata = power[58];
    power_sel[59]:         regdata = power[59];

    power_sel[60]:         regdata = power[60];
    power_sel[61]:         regdata = power[61];
    power_sel[62]:         regdata = power[62];
    power_sel(63):         regdata = power[63];

    slave_index_sel:    regdata = slave_index;
    s1_nap_hi_sel:         regdata = s1_nap[15:8];
    s1_nap_lo_sel:      regdata = s1_nap[7:0];
    s1_uap_sel:           regdata = s1_uap;
    s1_lap_hi_sel:      regdata = s1_lap[23:16];
    s1_lap_md_sel:        regdata = s1_lap[15:8];
    s1_lap_lo_sel:      regdata = s1_lap[7:0];
    s1_class_hi_sel:        regdata = s1_class[23:16];
   s1_class_md_sel:         regdata = s1_class[15:8];
   s1_class_lo_sel:         regdata = s1_class[7:0];
   s1_dclk_up_sel:      regdata = {4'b0,sl_dclk[27:24]};
   s1_dclk_hi_sel:         regdata = s1_dclk[23:16];
   s1_dclk_md_sel:         regdata = s1_dclk[15:8];
   s1 _dclk_lo_sel:        regdata = s1_dclk[7:0];
   s1_amaddr_sel:      regdata = {5'b0,s1_amaddr};
   s1_fhsmisc_sel:         regdata = s1_fhsmisc;

   s2_nap_hi_sel:          regdata = s2_nap[15:8];
   s2_nap_lo_sel:      regdata = s2_nap[7:0];
   s2_uap_sel:             regdata = s2_uap;
   s2_lap_hi_sel:      regdata = s2_lap[23:16];
   s2_lap_md_sel:          regdata = s2_lap[15:8];
   s2_lap_lo -sel:     regdata = s2_lap[7:0];
   s2_class_hi_sel:        regdata = s2_class[23:16];
   s2_class_md_sel:        regdata = s2_class[15:8];
   s2_class_lo_sel:        regdata = s2_class[7:0];
   s2_dclk_up_sel:      regdata = {4'b0,s2_dclk[27:24]};
    s2_dclk_hi_sel:        regdata = s2_dclk[23:16];
    s2_dclk_md_sel:        regdata = s2_dclk[15:8];
    s2_dclk_lo_sel:        regdata = s2_dclk[7:0];
    s2_amaddr_sel:     regdata = (5'b0,s2_amaddr);
    s2_fhsmisc_sel:        regdata = s2_fhsmisc;

    s3_nap_hi_sel:         regdata = s3_nap[15:8];
    s3_nap_lo_sel:     regdata = s3_nap[7:0];
    s3_uap_sel:             regdata = s3_uap;
    s3_lap_hi_sel:     regdata = s3_lap[23:16];
    s3_lap_md_sel:         regdata = s3_lap[15:8];
    s3_lap_lo_sel:     regdata = s3_lap[7:0];
    s3_class_hi_sel:       regdata = s3_class[23:16];
    s3_class_md_sel:       regdata = s3_class[15:8];
    s3_class_lo_sel:       regdata = {4'b0,s3_dclk[27:24]};
    s3_dclk_hi_sel:     regdata = s3_dclk[23:16];
    s3_dclk_md_sel:        regdata = s3_dclk[15:8];
    s3_dclk_lo_sel:        regdata = s3_dclk[7:0];
    s3_amaddr_sel:         regdata = (5'b0,s3 amaddr);
    s3_fhsmisc_sel:        regdata = s3-fhsmisc;

    s4_nap_hi_sel:         regdata = s4_nap[15:8];
    s4_nap_lo_sel:     regdata = s4_nap[7:0];
    s4_uap_sel:            regdata = s4_uap;
    s4_lap_hi_sel:     regdata = s4_lap[23:16];
    s4_lap_md_sel:         regdata = s4_lap[15:8];
    s4_lap lo_sel:     regdata = s4_lap[7:0];
    s4_class_hi_sel:        regdata = s4_class[23:16];
    s4_class_md_sel:        regdata = s4_class[15:8];
    s4_class_lo_sel:        regdata = s4_class[7:0];
    s4_dclk_up_sel:     regdata = {4'b0,s4_dclk[27:24]};
    s4_dclk_hi_sel:         regdata = s4_dclk[23:16];
    s4_dclk_md_sel:         regdata = s4_dclk[15:8];
    s4_dclk_lo_sel:         regdata = s4_dclk[7:0];
    s4_amaddr_sel:     regdata = {5'b0,s4_amaddr};

    s4_fhsmisc_sel:         regdata = s4_fhsmisc;
    s5_nap_hi_sel:     regdata = s5_nap[15:8];
    s5_nap_lo_sel:          regdata = s5_nap[7:0];
    s5_uap_sel:        regdata = s5_uap;
    s5_lap_hi_sel:          regdata = s5_lap[23:16];
    s5_lap_md_sel:          regdata = s5_lap[15:8];
    s5_lap_lo sel:     regdata = s5_lap[7:0];
    s5_class_hi_sel:        regdata = s5_class[23:16];
    s5_class_md_sel:        regdata = s5_class[15:8];
    s5_class_lo_sel:        regdata = s5_class[7:0];
    s5_dclk_up_sel:    regdata = (4'b0,s5_dclk[27: 24]);
    s5_dclk_hi_sel:         regdata = s5_dclk[23:16];
    s5_dclk_md_sel:         regdata = s5_dclk[15:8];
    s5_dclk_lo_sel:         regdata = s5_dclk[7:0];
    s5_amaddr_sel:    regdata = {5'b0,s5_amaddr};
    s5_fhsmisc_sel:         regdata = s5_fhsmisc;

    s6_nap_hi_sel:         regdata = s6_nap[15:8];
    s6_nap_lo_sel:    regdata = s6_nap[7:0];
    s6_uap_sel:           regdata = s6_uap;
    s6_lap_hi_sel:    regdata = s6_lap[23:16];
    s6_lap_md_sel:        regdata = s6_lap[15:8];
    s6_lap_lo_sel:    regdata = s6_lap[7:0];
    s6_class_hi_sel:      regdata = s6_class[23:16];
    s6_class_md_sel:      regdata = s6_class[15:8];
    s6_class_lo_sel:      regdata = s6_class[7:0];
    s6_dclk_up_sel:   regdata = {4'b0,s6_dclk[27:24]};
    s6_dclk_hi_sel:       regdata = s6_dclk[23:16];
    s6_dclk_md_sel:       regdata = s6_dclk[15:8];
    s6_dclk_lo_sel:       regdata = s6_dclk[7:0];
    s6_amaddr_sel:    regdata = {15'b0,s6_amaddr};
    s6_fhsmisc_sel:       regdata = s6_fhsmisc;

    s7_nap_hi_sel:       regdata = s7_nap[15:8];
    s7_nap_lo_sel:    regdata = s7_nap[7:0];
    s7_uap_sel:       regdata = s7_uap;
    s7_lap_hi_sel:    regdata = s7_lap[23:16];
    s7_lap_md_sel:       regdata = s7_lap[15:8];
    s7_lap_lo_sel:    regdata = s7_lap[7:0];
    s7_class_hi_sel:     regdata = s7_class[23:16];
    s7_class_md_sel:     regdata = s7_class[15:8];
    s7_class_lo_sel:     regdata = s7_class[7:0];
    s7_dclk_up_sel:   regdata = {4'b0,s7_dclk[27:24]};
    s7_dclk_hi_sel:      regdata = s7_dclk[23:16];
   s7_dclk_md_sel:       regdata = s7_dclk[15:8];
    s7_dclk_lo_sel:      regdata = s7_dclk[7:0];
    s7_amaddr_sel:   regdata = {5'b0,s7_amaddr};
    s7_fhsmisc_sel:      regdata = s7_fhsmisc;

    s8_nap_hi_sel:       regdata = s8_nap[15:8];
    s8_nap_lo_sel:   regdata = s8_nap[7:0];
    s8_uap_sel:          regdata = s8_uap;
   s8_lap_hi_sel:    regdata = s8_lap[23:16];
   s8_lap_md_sel:        regdata = s8_lap[15:8];
    s8_lap_lo_sel:   regdata = s8_lap[7:0];
   s8_class_hi_sel:      regdata = s8_class[23:16];
   s8_class_md_sel:      regdata = s8_class[15:8];
   s8_class_lo_sel:      regdata = s8_class[7:0];
   s8_dclk_up_sel:   regdata = {4'b0,s8_dclk[27:24]};
   s8_dclk_hi_sel:       regdata = s8_dclk[23:16];
   s8_dclk_md_sel:       regdata = s8_dclk[15:8];
   s8_dclk_lo_sel:       regdata = s8_dclk[7:0];
   s8_amaddr_sel:   regdata = {5'b0,s8_amaddr};
   s8_fhsmisc_sel:       regdata = s8_fhsmisc;

   default:         regdata = 8'b0;

 endcase


 /*** reg address decode      ***/
 assign      revision_sel =          ioadr == 16'h0000;
 assign      stepping_sel =          ioadr == 16'h0001;
 assign      ownnap_hi_sel =    ioadr == 16'h0002;
 assign      ownnap_lo_sel =    ioadr == 16'h0003;
 assign      ownuap_sel =            ioadr == 16'h0004;
 assign      ownlap_hi_sel =    ioadr == 16'h0005;
 assign      ownlap_md_sel =    ioadr == 16'h0006;
 assign      ownlap_lo_sel =    ioadr == 16'h0007;
 assign      ownclass_hi_sel =       ioadr == 16'h0008;
 assign      ownclass_md_sel =   ioadr == 16'h0009;
 assign      ownclass_lo_sel =   ioadr == 16'h000a;
 assign      ownfhsmisc_sel =    ioadr == 16'h000b;
 assign      config_sel =       ioadr == 16'h000c;
 assign      rx_setup_sel =     ioadr == 16'h000d;
 assign      carrier_hi_sel =   ioadr == 16'h000e;
 assign      carrier_lo_sel =   ioadr == 16'h000f;

 assign      cmdl_sel =         ioadr == 16'h0010;
 assign      startcmd_sel =          ioadr == 16'h0011;
 assign      stopcmd sel =          ioadr == 16'h0012;
 assign      psaving_sel =          ioadr == 16'h0013;
 assign      glap_hi_sel =          ioadr == 16'h0014;
 assign      glap_md_sel =          ioadr == 16'h0015;
 assign      glap_lo_sel =          ioadr == 16'h0016;
 assign      dlap_hi_sel =          ioadr == 16'h0017;
 assign      dlap_md_sel =          ioadr == 16'h0018;
 assign      dlap_lo_sel =          ioadr == 16'h0019;
 assign      plap_hi_sel =          ioadr == 16'h001a;
 assign      plap_md_sel =          ioadr == 16'h001b;
 assign      plap_lo_sel =          ioadr == 16'h001c;
 assign      puap_sel =       ioadr == 16'h001d;
 assign      forced_rx_sel =       ioadr == 16'h001e;
 assign      dci_sel =        ioadr == 16'h001f;

 assign      pslave_clk1_sel = ioadr == 16'h0020;
 assign      pslave_clk2_sel = ioadr == 16'h0021;
 assign      pslave_clk3_sel = ioadr == 16'h0022;
 assign      pslave_clk4_sel = ioadr == 16'h0023;
 assign      txamaddr_sel =        ioadr = 16'h0024;
 assign      tx_length_hi_sel =    ioadr == 16'h0025;
 assign      tx_length_lo sel =    ioadr == 16'h0026;
 assign      tx_type_sel =         ioadr == 16'h0027;
 assign      isrand_seed_sel =     ioadr == 16'h0028;
 assign      mstates_sel =         ioadr == 16'h0029;
 assign      sstates_sel =         ioadr == 16'h002a;
 assign      intstat3_sel =        ioadr == 16'h002d;
 assign      intmask3_sel =        ioadr == 16'h002e;
 assign      intrst3_sel =         ioadr == 16'h002f;

 assign      intstat1_sel =        ioadr == 16'h0030;
 assign      intmask1_sel =        ioadr == 16'h0031;
 assign      intrst1_sel =         ioadr == 16'h0032;

 assign      intstat2_sel =        ioadr == 16'h0033;
 assign      intmask2_sel =        ioadr == 16'h0034;
 assign      intrst2_sel =         ioadr == 16'h0035;
 assign      iscanstat_sel =       ioadr == 16'h0036;
 assign      pscanstat_sel =       ioadr == 16'h0037;
 assign      pagestatus_sel =      ioadr == 16'h0038;
 assign      psavstat sel =    ioadr == 16'h0039;
 assign      recvdlap_up_sel =     ioadr == 16'h003a;
 assign      recvdlap_md_sel =     ioadr == 16'h003b;
 assign      recvdlap_lo_sel = ioadr == 16'h003c;
 assign      recvdamaddr_sel = ioadr == 16'h003d;
 assign      recvdstat_sel =       ioadr == 16'h003e;
 assign      tx_setup_sel =        ioadr == 16'h003f;

 assign      tbeacon_hi sel = ioadr == 16'h0040;
 assign      tbeacon_lo_sel = ioadr == 16'h0041;
 assign      nb_hi sel =      ioadr == 16'h0042;
 assign      nb_lo sel =      ioadr == 16'h0043;
 assign      db_hi_sel =      ioadr == 16'h0044;
 assign      db_lo_sel =      ioadr == 16'h0045;
 assign      tb_hi_sel =      ioadr == 16'h0046;
 assign      tb_lo_sel =      ioadr == 16'h0047;
 assign      maccess_hi_sel = ioadr == 16'h0048;
 assign      maccess_lo_sel = ioadr == 16'h0049;
 assign      taccess_hi_sel = ioadr == 16'h004a;
 assign      taccess_lo_sel = ioadr == 16'h004b;
 assign      daccess_hi_sel = ioadr == 16'h004c;
 assign      daccess_lo_sel = ioadr == 16'h004d;
 assign      nacc_slot_hi_sel =   ioadr == 16'h004e;
 assign      nacc_slot_lo_sel =   ioadr == 16'h004f;

 assign      nb_sleep_hi_sel = ioadr == 16'h0050;
 assign      nb_sleep_lo_sel = ioadr == 16'h0051;
 assign      db_sleep_hi_sel = ioadr == 16'h0052;
 assign      db_sleep_lo_sel = ioadr == 16'h0053;
 assign      npoll_hi sel =        ioadr == 16'h0054;
 assign      npoll_lo_sel =        ioadr == 16'h0055;
 assign      tiw_reg_hi_sel = ioadr == 16'h0056;
 assign      tiw_reg_lo_sel = ioadr == 16'h0057;
 assign      tii_reg_hi_sel = ioadr == 16'h0058;
 assign      tii_reg_lo_sel = ioadr == 16'h0059;
 assign      tpw_reg_hi_sel = ioadr == 16'h005a;
 assign      tpw_reg_lo_sel = ioadr == 16'h005b;
 assign      tpi_reg_hi_sel = ioadr == 16'h005c;
 assign      tpi_reg_lo_sel = ioadr == 16'h005d;
 assign      page_reg_hi_sel =ioadr == 16'h005e;
 assign      page_reg_lo_sel =ioadr == 16'h005f;

 assign      pageresp _reg_hi_sel  ioadr == 16'h0060;
 assign      pageresp_reg_lo_sel = ioadr == 16'h0061;
 assign      newconn_reg_hi_sel =  ioadr == 16'h0062;
 assign      newconn_reg_lo_sel =  ioadr == 16'h0063;
 assign      inquiry_reg_hi_sel =  ioadr == 16'h0064;
 assign      inquiry_reg_lo_sel =  ioadr == 16'h0065;
 assign      inqresp_reg_hi_sel =  ioadr == 16'h0066;
 assign      inqresp_reg_lo_sel =  ioadr == 16'h0067;
 assign      nbc_sel = ioadr == 16'h0068;
 assign      npage_sel =      ioadr == 16'h0069;
 assign      tx_reg_sel.=     ioadr == 16'h006a;
 assign      superv_reg_hi_sel =  ioadr == 16'h006e;
 assign      superv_reg_lo_sel =  ioadr == 16'h006f;
 assign      fifoadr_hi_sel =  ioadr == 16'h0070;
 assign      fifoadr_lo_sel =  ioadr == 16'h0071;
 assign      fifo_data_sel =   ioadr == 16'h0072;
 assign      fifo_status_sel = ioadr == 16'h0073;
 assign      tscol-sel =       ioadr == 16'h0075;
 assign      dscol_sel =       ioadr == 16'h0076;
 assign      airmodel_sel =        ioadr == 16'h0077;
 assign      tsco2_sel =      ioadr == 16'h0078;
 assign      dsco2 sel =      ioadr == 16'h0079;
 assign      airmode2_sel =        ioadr == 16'h007a;
 assign      tsco3_sel =      ioadr == 16'h007b;
 assign      dsco3_sel =      ioadr == 16'h007c;
 assign      airmode3_sel =        ioadr == 16'h007d;
 assign      piconetnum_sel = ioadr == 16'h0080;

 // value of 0x81 determines which piconet to program
 // current implementation: 00 only
 // future expansion to m2: 01, m3: 02, etc.
 assign      master_index_sel =    ioadr == 16'h0081;
 assign      m1_nap hi_sel =       ioadr == 16'h0082;
 assign      m1_nap_lo_sel =       ioadr == 16'h0083;
 assign      m1_uap_sel =          ioadr == 16'h0084;
 assign      m1_lap_hi_sel =       ioadr == 16'h0085;
 assign      m1_lap_md_sel =       ioadr == 16'h0086;
 assign      m1_lap_lo_sel =       ioadr == 16'h0087;
 assign      m1_class_hi_sel = ioadr == 16'h0088;
 assign      m1_class_md_sel = ioadr == 16'h0089;
 assign      m1_class_lo_sel = ioadr == 16'h008a;
 assign      m1_dclk_up_sel =  ioadr == 16'h008b;
 assign      m1_dclk_hi_sel =  ioadr == 16'h008c;
 assign      m1_dclk_md_sel =  ioadr == 16'h008d;
 assign      m1_dclk_lo_sel =  ioadr == 16'h008e;
 assign      m1_amaddr_sel =       ioadr == 16'h008f;
 assign      m1_fhsmisc_sel =  ioadr == 16'h0090;
 assign      m1_pmaddr_sel =       ioadr == 16'h0091;
 assign      m1_araddr_sel =       ioadr == 16'h0092;
 assign      m1_dsniff_hi_sel =    ioadr == 16'h0093;
 assign      m1_dsniff_lo_sel =    ioadr == 16'h0094;
 assign      m1_tsniff_hi_sel =    ioadr == 16'h0095;
 assign      m1_tsniff_lo_sel =    ioadr == 16'h0096;
 assign      m1_nsniffatt_hi_sel = ioadr == 16'h0097;
 assign      m1_nsniffatt_lo_sel =  ioadr== 16'h0098;
 assign      m1_nsniff_timer_hi_sel =ioadr == 16'h0099;
 assign      m1_nsniff_timer_lo_sel = ioadr == 16'h009a;
 assign      m1_hold_timer_hi_sel =  ioadr == 16'h009b;
 assign      m1_hold_timer_lo_sel =  ioadr == 16'h009c;
 assign      m1_tbeacon_hi_sel =     ioadr == 16'h009d;
 assign      m1_tbeacon_lo_sel =     ioadr == 16'h009e;
 assign      m1_nb_hi_sel =          ioadr == 16'h009f;
 assign      m1_nb_lo_sel =          ioadr == 16'h00a0;
 assign      m1_db_hi_sel =          ioadr == 16'h00al;
 assign      m1_db_lo_sel =          ioadr == 16'h00a2;
 assign      m1_tb_hi_sel =          ioadr == 16'h00a3:
 assign      m1_tb_lo_sel =          ioadr == 16'h00a4;
 assign      m1_maccess_hi_sel =     ioadr == 16'h00a5:
 assign      m1_maccess_lo_sel =     ioadr == 16'h00a6;
 assign      m1_taccess_hi_sel =     ioadr == 16'h00a7;
 assign      m1_taccess_lo_sel =     ioadr == 16'h00a8;
 assign      m1_daccess_hi_sel =     ioadr == 16'h00a9;
 assign      m1_daccess_lo_sel =     ioadr == 16'h00aa;
 assign      m1_nacc_slot_hi_sel =   ioadr == 16'h00ab;
 assign      m1_nacc_slot_lo_sel =   ioadr == 16'hOOac;
 assign      m1_nb_sleep_hi_sel =    ioadr == 16'h00ad;
 assign      m1_nb_sleep_lo_sel =    ioadr == 16'h00ae;
 assign      m1_db_sleep hi_sel =    ioadr == 16'h00af;
 assign      m1_db_sleep_lo_sel =    ioadr == 16'h00b0;
 assign      m1 npoll_hi sel =   ioadr == 16'h00b1;
 assign      m1_npoll_lo_sel =   ioadr == 16'h00b2;

 //security Ox7e, data reg Ox7f
 assign      security_index_sel =    ioadr == 16'h007e;
 assign      authen_key1_sel = ioadr == 16'h007f;
 assign      authen_key2_sel = ioadr == 16'h017f;
 assign      authen_key3_sel = ioadr == 16'h027f;
 assign      authen_key4_sel = ioadr == 16'h037f;
 assign      authen_key5_sel = ioadr == 16'h047f;
 assign      authen_key6_sel = ioadr == 16'h057f;
 assign      authen_key7_sel = ioadr == 16'h067f;
 assign      authen_key8_sel = ioadr == 16'h077f;
 assign      authen_key9_sel = ioadr == 16'h087f;
 assign      authen_key10_sel =       ioadr == 16'h097f;
 assign      authen_key11_sel =       ioadr == 16'h0a7f;
 assign      authen_key12_sel =       ioadr == 16'h0b7f;
 assign      authen_key13_sel =       ioadr == 16'h0c7f;
 assign      authen_key14_sel =       ioadr == 16'h0d7f;
 assign      authen_key15_sel =       ioadr == 16'h0e7f;
 assign      authen keyl6_sel =       ioadr == 16'h0f7f;
 assign      encryp_key1_sel = ioadr == 16'h107f;
 assign      encryp_key2_sel = ioadr == 16'h117f;
 assign      encryp_key3_sel = ioadr == 16'h127f;
 assign      encryp key4_sel = ioadr == 16'h137f;
 assign      encryp_key5_sel = ioadr == 16'h147f;
 assign      encryp_key6_sel = ioadr == 16'h157f;
 assign      encryp_key7_sel = ioadr == 16'h167f;
 assign      encryp_key8_sel = ioadr == 16'h177f;
 assign      encryp_key9_sel = ioadr == 16'h187f;
 assign      encryp_key10_sel =       ioadr = 16'h197f;
 assign      encryp_keyll_sel =       ioadr = 16'hla7f;
 assign      encryp_key12_sel =       ioadr == 16'h1b7f;
 assign      encryp_keyl3_sel =       ioadr = 16'hlc7f;
 assign      encryp_keyl4_sel =       ioadr == 16'hld7f
 assign      encryp_key15_sel =       ioadr == 16'h1e7f;
 assign      encryp_key16_sel =       ioadr == 16'hlf7f;
 assign      encryp_length_sel =      ioadr == 16'h207f;
 assign      encryp_rand_sel = ioadr == 16'h217f;

 //hop freq 0x2b
 assign      hop_index_sel =           ioadr == 16'h002b;
 assign      hopfreq_hi_sel[0] =       ioadr == 16'h002c;
 assign      hopfreq_lo_sel[0] =       ioadr == 16'h012c;
 assign      hopfreq_hi_sel[1] =       ioadr == 16'h022c;
 assign      hopfreq_lo_sel[1] =       ioadr == 16'h032c;
 assign      hopfreq_hi_sel[2] =       ioadr == 16'h042c;
 assign      hopfreq_lo_sel[2] =       ioadr == 16'h052c;
 assign      hopfreq_hi_sel[3] =       ioadr == 16'h062c;
 assign      hopfreq_lo_sel[3] =       ioadr == 16'h072c;
 assign      hopfreq_hi_sel[4] =       ioadr == 16'h082c;
 assign      hopfreq_lo_sel[4] =       ioadr == 16'h092c;
 assign      hopfreq_hi_sel[5] =       ioadr == 16'h0a2c;
 assign      hopfreq_lo_sel[5] =       ioadr == 16'hOb2c;
 assign      hopfreq_hi_sel[6] =       ioadr == 16'hOc2c;
 assign      hopfreq_lo_sel[6] =       ioadr == 16'hOd2c;
 assign      hopfreq_hi_sel[7] =       ioadr == 16'h0e2c;
 assign      hopfreq_lo_sel[7] =       ioadr == 16'hOf2c;

 assign      hopfreq_hi_sel[8] =       ioadr == 16'hl02c;
 assign      hopfreq_lo_sel[8] =       ioadr == 16'h112c;
 assign      hopfreq_hi_sel[9] =       ioadr == 16'h122c;
 assign      hopfreq_lo_sel[9] =       ioadr == 16'h132c;
 assign      hopfreq_hi_sel[10] =      ioadr == 16'h142c;
 assign      hopfreq_lo_sel[10] =      ioadr == 16'hl52c;
 assign      hopfreq_hi_sel[11] =      ioadr == 16'h162c;
 assign      hopfreq_lo_sel[11] =      ioadr == 16'h172c;
 assign      hopfreq_hi_sel[12] =      ioadr == 16'h182c;
 assign      hopfreq_lo_sel[12] =      ioadr == 16'h192c;
 assign      hopfreq_hi_sel[13] =      ioadr == 16'hla2c;
 assign      hopfreq_lo_sel[13] =      ioadr == 16'h1b2c;
 assign      hopfreq_hi_sel[14] =      ioadr == 16'hlc2c;
 assign      hopfreq_lo_sel[14] =      ioadr == 16'hld2c;
 assign      hopfreq_hi_sel[15] =      ioadr == 16'hle2c;
 assign      hopfreq_lo_sel[15] =      ioadr == 16'hlf2c;

 assign      hopfreq_hi_sel[16] =      ioadr == 16'h202c;
 assign      hopfreq_lo_sel[16] =      ioadr == 16'h212c;
 assign      hopfreq_hi_sel[17] =      ioadr == 16'h222c;
 assign      hopfreq_lo_sel[17] =      ioadr == 16'h232c;
 assign      hopfreq_hi_sel[18] =      ioadr == 16'h242c;
 assign      hopfreq_lo_sel[18] =      ioadr == 16'h252c;
 assign      hopfreq_hi_sel[19] =      ioadr == 16'h262c;
 assign      hopfreq_lo_sel[19] =      ioadr == 16'h272c;
 assign      hopfreq_hi_sel[20] =      ioadr == 16'h282c;
 assign      hopfreq_lo_sel[20] =      ioadr == 16'h292c;
 assign      hopfreq_hi_sel[21] =      ioadr == 16'h2a2c;
 assign      hopfreq_lo_sel[21] =      ioadr == 16'h2b2c;
 assign      hopfreq_hi_sel[22] =      ioadr == 16'h2c2c;
 assign      hopfreq_lo_sel[22] =      ioadr == 16'h2d2c;
 assign      hopfreq_hi_sel[23] =      ioadr == 16'h2e2c;
 assign      hopfreq_lo_sel[23] =      ioadr == 16'h2f2c;
 assign      hopfreq_hi_sel[24] =      ioadr == 16'h302c;
 assign      hopfreq_lo_sel[24] =      ioadr == 16'h312c;

 assign      hopfreq_hi_sel[25] =      ioadr == 16'h322c;
 assign      hopfreq_lo_sel[25] =      ioadr == 16'h332c;
 assign      hopfreq_hi_sel[26] =      ioadr == 16'h342c;
 assign      hopfreq_lo_sel[26] =      ioadr == 16'h352c;
 assign      hopfreq_hi_sel[27] =      ioadr == 16'h362c;
 assign      hopfreq_lo_sel[27] =      ioadr == 16'h372c;
 assign      hopfreq_hi_sel[28] =      ioadr == 16'h382c;
 assign      hopfreq_lo_sel[28] =      ioadr == 16'h392c;
 assign      hopfreq_hi_sel[29] =      ioadr == 16'h3a2c;
 assign      hopfreq_lo_sel[29] =      ioadr == 16'h3b2c;
 assign      hopfreq_hi_sel[30] =      ioadr == 16'h3c2c;
 assign      hopfreq_lo_sel[30] =      ioadr == 16'h3d2c;
 assign      hopfreq_hi_sel[31] =      ioadr == 16'h3e2c:
 assign      hopfreq_lo_sel[31] =      ioadr == 16'h3f2c;

 assign      hopfreq_hi_sel[32] =      ioadr == 16'h402c;
 assign      hopfreq_lo_sel[32] =      ioadr == 16'h412c;
 assign      hopfreq_hi _sel[33] =     ioadr == 16'h422c;
 assign      hopfreq_lo_sel[33] =      ioadr == 16'h432c;
 assign      hopfreq_hi_sel[34] =      ioadr == 16'h442c;
 assign      hopfreq_lo_sel[34] =      ioadr == 16'h452c;
 assign      hopfreq_hi_sel[35] =      ioadr == 16'h462c;
 assign      hopfreq_lo_sel[35] =      ioadr == 16'h472c;
 assign      hopfreq_hi_sel[36] =      ioadr == 16'h482c;
 assign      hopfreq_lo_sel[36] =      ioadr == 16'h492c;
 assign      hopfreq_hi_sel[37] =      ioadr == 16'h4a2c;
 assign      hopfreq_lo_sel[37] =      ioadr == 16'h4b2c;
 assign      hopfreq_hi_sel[38] =      ioadr == 16'h4c2c;
 assign      hopfreq_lo_sel[38] =      ioadr == 16'h4d2c;
 assign      hopfreq_hi sel[39] =      ioadr == 16'h4e2c;
 assign      hopfreq_lo_sel[39] =      ioadr == 16'h4f2c;

 assign      hopfreq_hi_sel[40] =      ioadr == 16'hS02c;
 assign      hopfreq_lo_sel[40] =      ioadr == 16'h512c;
 assign      hopfreq_hi_sel[41] =      ioadr == 16'h522c;
 assign      hopfreq_lo_sel[41] =      ioadr == 16'h532c;
 assign      hopfreq_hi_sel[42] =      ioadr == 16'h542c;
 assign      hopfreq_lo_sel[42] =      ioadr == 16'h552c;
 assign      hopfreq_hi_sel[43] =      ioadr == 16'h562c;
 assign      hopfreq_lo_sel[43] =      ioadr == 16'h572c;
 assign      hopfreq_hi_sel[44] =      ioadr == 16'h582c;
 assign      hopfreq_lo_sel[44] =      ioadr == 16'h592c;
 assign      hopfreq_hi_sel[45] =      ioadr == 16'h5a2c;
 assign      hopfreq_lo_sel[45] =      ioadr == 16'h5b2c;
 assign      hopfreq_hi_sel[46] =      ioadr == 16'h5c2c;
 assign      hopfreq_lo_sel[46] =      ioadr == 16'h5d2c;
 assign      hopfreq_hi_selt[47] =     ioadr == 16'h5e2c;
 assign      hopfreq_lo_sel[47] =      ioadr == 16'h5f2c;

 assign      hopfreq_hi_sel[48] =      ioadr == 16'h602c;
 assign      hopfreq_lo_sel[48] =      ioadr == 16'h612c;
 assign      hopfreq_hi_sel[49] =      ioadr == 16'h622c;
 assign      hopfreq_lo_sel[49] =      ioadr == 16'h632c;
 assign      hopfreq_hi _sel[50] =     ioadr == 16'h642c;
 assign      hopfreq_lo_sel[50] =      ioadr == 16'h652c;
 assign      hopfreq_hi _sel[51] =     ioadr == 16'h662c;
 assign      hopfreq_lo_sel[51] =      ioadr == 16'h672c;
 assign      hopfreq_hi_sel[52] =      ioadr == 16'h682c;
 assign      hopfreq_lo_sel[52] =      ioadr == 16'h692c;
 assign      hopfreq_hi_sel[53] =      ioadr ==16'h6a2c;
 assign      hopfreq_lo_sel[53] =      ioadr == 16'h6b2c;
 assign      hopfreq_hi_sel[54] =      ioadr == 16'h6c2c;
 assign      hopfreq_lo_sel[54] =      ioadr == 16'h6d2c;
 assign      hopfreq_hi_sel[55] =      ioadr == 16'h6e2c;
 assign      hopfreq_lo_sel[55] =      ioadr == 16'h6f2c;
 assign      hopfreq_hi_sel[56] =      ioadr == 16'h702c;
 assign      hopfreq_lo_sel[56] =      ioadr == 16'h712c;
 assign      hopfreq_hi_sel[57] =      ioadr == 16'h722c;
 assign      hopfreq_lo_sel[57] =      ioadr == 16'h732c;
 assign      hopfreq_hi_sel[58] =      ioadr == 16'h742c;
 assign      hopfreq_lo_sel[58] =      ioadr == 16'h752c;
 assign      hopfreq_hi_sel[59] =      ioadr == 16'h762c;
 assign      hopfreq_lo_sel[59] =      ioadr == 16'h772c;
 assign      hopfreq_hi_sel[60] =      ioadr == 16'h782c;
 assign      hopfreq_lo_sel[60] =      ioadr == 16'h792c;
 assign      hopfreq_hi_sel[61] =      ioadr == 16'h7a2c;
 assign      hopfreq_lo_sel[61] =      ioadr == 16'h7b2c;
 assign      hopfreq hi_sel[62] =      ioadr == 16'h7c2c;
 assign      hopfreq_lo_sel[62] =      ioadr == 16'h7d2c;
 assign      hopfreq_hi_sel[63] =      ioadr == 16'h7e2c;
 assign      hopfreq_lo_sel[63] =      ioadr == 16'h7f2c;

 assign      hopfreq_hi_sel[64] =      ioadr == 16'h802c;
 assign      hopfreq_lo_sel[64] =      ioadr == 16'h812c;
 assign      hopfreq_hi_sel[65] =      ioadr == 16'h822c;
 assign      hopfreq_lo_sel[65] =      ioadr == 16'h832c;
 assign      hopfreq_hi_sel[66] =      ioadr == 16'h842c;
 assign      hopfreq_lo_sel[66] =      ioadr == 16'h852c;
 assign      hopfreq_hi_sel[67] =      ioadr == 16'h862c;
 assign      hopfreq_lo_sel[67] =      ioadr == 16'h872c;
 assign      hopfreq_hi_sel[68] =      ioadr == 16'h882c;
 assign      hopfreq_lo_sel[68] =      ioadr == 16'h892c;
 assign      hopfreq_hi_sel[69] =      ioadr == 16'h8a2c;
 assign      hopfreq_lo_ sel[69] =     ioadr == 16'h8b2c;
 assign      hopfreq_hi_sel[70] =      ioadr == 16'h8c2c;
 assign      hopfreq_lo_sel[70] =      ioadr == 16'h8d2c;
 assign      hopfreq_hi_sel[71] =      ioadr == 16'h8e2c;
 assign      hopfreq_lo_sel[71] =      ioadr == 16'h8f2c;

 assign      hopfreq_hi_sel[72] =      ioadr == 16'h902c;
 assign      hopfreq_lo_sel[72] =      ioadr == 16'h912c;
 assign      hopfreq_hi_sel[73] =      ioadr = 16'h922c;
 assign      hopfreq_lo_ sel[73] =     ioadr == 16'h932c;
 assign      hopfreq_hi_sel[74] =      ioadr == 16'h942c;
 assign      hopfreq_lo_sel[74] =      ioadr == 16'h952c;
 assign      hopfreq_hi_sel[75] =      ioadr'== 16'h962c;
 assign      hopfreq_lo_sel[75] =      ioadr == 16'h972c;
 assign      hopfreq_hi_sel[76] =      ioadr == 16'h982c;
 assign      hopfreq_lo_sel[76] =      ioadr == 16'h992c;
 assign      hopfreq_hi_sel[77] =      ioadr == 16'h9a2c;
 assign      hopfreq_lo_sel[77] =      ioadr == 16'h9b2c;
 assign      hopfreq_hi_sel[78] =      ioadr == 16'h9c2c;
 assign      hopfreq_lo_sel[78] =      ioadr == 16'h9d2c;

 //power level
 assign      power_sel[0] =            ioadr == 16'ha02c;
 assign      power_sel[1] =            ioadr == I6'ha12c;
 assign      power_sel[3] =            ioadr == 16'ha32c;
 assign      power_sel[4] =            ioadr == 16'ha42c;
 assign      power_sel[5] =            ioadr == 16'ha52c;
 assign      power_sel[6] =            ioadr == 16'ha62c;
 assign      power_sel[7] =            ioadr == 16'ha72c;
 assign      power_sel[8] =            ioadr == 16'ha82c;
 assign      power_sel[9] =            ioadr == 16'ha92c;
 assign      power_sel[10] =           ioadr == 16'haa2c;
 assign      power_sel[11] =           ioadr == 16'hab2c;
 assign      power_sel[12] =           ioadr == 16'hac2c:
 assign      power_sel[13] =           ioadr == 16'had2c;
 assign      power_sel[14] =           ioadr == 16'hae2c;
 assign      power_sel[15] =           ioadr == 16'haf2c;
 assign      power_sel[16] =           ioadr == 16'hb02c;
 assign      power_sel[17] =           ioadr == 16'hb12c;
 assign      power_sel[18] =           ioadr == 16'hb22c;
 assign      power_sel[19] =           ioadr == 16'hb32c;
 assign      power_sel[20] =           ioadr == 16'hb42c;
 assign      power _sel[21] =          ioadr == 16'hb52c;
 assign      power_sel[22] =           ioadr == 16'hb62c;
 assign      power_sel[23] =           ioadr == 16'hb72c;
 assign      power_sel[24] =           ioadr == 16'hb82c;
 assign      power_sel[25] =           ioadr == 16'hb92c;
 assign      power _sel[26] =          ioadr == 16'hba2c;
 assign      power_sel[27] =           ioadr == 16'hbb2c;
 assign      power_sel[29] =           ioadr == 16'hbd2c;
 assign      power_sel[30] =           ioadr == 16'hbe2c;
 assign      power_sel[31] =           ioadr == 16'hbf2c;
 assi        power_sel[32] =           ioadr == 16'hc02c;
 assign      power_sel[33] =           ioadr == 16'hc12c;
 assign      power_sel[34] =           ioadr == 16'hc22c;
 assign      power sel[35] =           ioadr == 16'hc32c;
 assign      power_sel[36] =           ioadr == 16'hc42c;
 assign      power_sel[37] =           ioadr == 16'hc52c;
 assign      power_sel[38] =           ioadr == 16'hc62c;
 assign      power_sel[39] =           ioadr == 16'hc72c;
 assign      power_sel[40] =           ioadr == 16'hc82c;
 assign      power_sel[41] =           ioadr == 16'hc92c;
 assign      power_sel[42] =           ioadr == 16'hca2c;
 assign      power_sel[43] =           ioadr == 16'hcb2c;
 assign      power _sel[44] =          ioadr = 16'hcc2c;
 assign      power_sel[45] =           ioadr == 16'hcd2c;
 assign      power sel[46] =           ioadr == 16'hce2c;
 assign      power_sel[47] =           ioadr == 16'hcf2c;
 assign      power_sel[48] =           ioadr == 16'hd02c;
 assign      power sel[49] =           ioadr == 16'hd12c;
 assign      power sel[50] =           ioadr == 16'hd22c;
 assign      power_sel[51] =           ioadr == 16'hd32c;
 assign      power_sel[52] =           ioadr == 16'hd42c;
 assign      power_sel[53] =           ioadr == 16'hd52c;
 assign      power_sel[54] =           ioadr == 16'hd62c;
 assign      power_sel[55] =           ioadr == 16'hd72c;
 assign      power_sel[56] =           ioadr == 16'hd82c;
 assign      power_sel[57] =           ioadr == 16'hd92c;
 assign      power_sel[58] =           ioadr == 16'hda2c;
 assign      power_sel[59] =           ioadr == 16'hdb2c;
 assign      power_sel[60] =           ioadr == 16'hdc2c;
 assign      power_sel[61] =           ioadr == 16'hdd2c;
 assign      power_sel[62] =           ioadr == 16'hde2c;
 assign      power_sel[63] =           ioadr == 16'hdf2c;

 //external slavel-slave256 index 0xc0, data 0xcl
 assign      slave_index_sel =         ioadr == 16'h00c0;
 assign      sl_nap_hi_sel =           ioadr == 16'h00c1;

 assign      sl_nap_lo_sel =           ioadr == 16'h00c2;
 assign      sl_uap_sel =              ioadr == 16'h00c3;
 assign      sl_lap_hi_sel =           ioadr == 16'h00c4;
 assign      sl_lap_md_sel =           ioadr == 16'h00c5;
 assign      sl_lap_lo_sel =           ioadr == 16'h00c6;
 assign      s1_class_hi_sel = ioadr == 16'h00c7;
 assign      s1_class_md_sel = ioadr == 16'h00c8;
 assign      s1_class_10_sel = ioadr == 16'h00c9;
 assign      s1_dclk_up_sel = ioadr == 16'h00ea;
 assign      s1_dclk_hi_sel = ioadr == 16'h00cb;
 assign      sl_dclk_md_sel = ioadr == 16'h00cc;
 assign      sl_dclk_lo_sel = ioadr == 16'h00cd;
 assign      sl_amaddr_ sel =             ioadr == 16'h00ce;
 assign      sl_fhsmisc_sel = ioadr == 16'h00cf;

 assign      s2_nap_hi_sel =           ioadr == 16'h01c1;
 assign      s2_nap_lo_sel =           ioadr == 16'h01c2;
 assign      s2_uap_sel =              ioadr == 16'h01c3;
 assign      s2_lap_hi_sel =           ioadr == 16'h01c4;
 assign      s2_lap_md_sel =           ioadr == 16'h01c5;
 assign      s2_class_hi_sel =         ioadr == 16'h01c7;
 assign      s2_class_md_sel = ioadr == 16'h01c8;
 assign      s2_class_lo_sel = ioadr == 16'h01c9;
 assign      s2_dclk_up_sel = ioadr == 16'h01ca;
 assign      s2_dclk_hi_sel = ioadr == 16'h01cb;
 assign      s2_dclk_md_sel = ioadr == 16'h01cc;
 assign      s2_dclk_lo_sel = ioadr == 16'hOlcd;
 assign      s2_amaddr_sel =            ioadr == 16'hOlce;
 assign      s2_fhsmisc_sel = ioadr == 16'h01cf;

 assign      s3_nap_hi_sel =           ioadr == 16'h02c1;
 assign      s3_nap_lo_sel =           ioadr == 16'h02c2;
 assign      s3_uap_sel =              ioadr == 16'h02c3
 assign      s3_lap_ hi_sel =          ioadr == 16'h02c4;
 assign      s3_lap_md_sel =           ioadr == 16'h02c5;
 assign      s3_lap_lo_sel =           ioadr == 16'h02c6;
 assign      s3_class_hi_sel = ioadr == 16'h02c7;
 assign      s3_class_md_sel = ioadr == 16'h02c8;
 assign      s3_class_lo_sel = ioadr == 16'h02c9;
 assign      s3_dclk_up_sel = ioadr == 16'h02ca;
 assign      s3_dclk_hi_sel = ioadr == 16'h02cb;
 assign      s3_dclk_md_sel = ioadr == 16'h02cc;
 assign      s3_dclk_lo_sel = ioadr == 16'h02cd;
 assign      s3_amaddr_sel =              ioadr == 16'h02ce;
 assign s3_fhsmisc_sel = ioadr == 16'h02cf;

 assign           s4_nap_hi_sel =       ioadr == 16'h03cl;
 assign      s4_nap_lo_sel =            ioadr == 16'h03c2;
 assign      s4_uap_sel =               ioadr == 16'h03c3;
 assign      s4_lap_hi_sel =            ioadr == 16'h03c4;
 assign      s4_lap_md_sel =            ioadr == 16'h03c5:
 assign      s4_lap_lo_sel =            ioadr == 16'h03c6;
 assign      s4_class_hi_sel = ioadr == 16'h03c7;
 assign      s4_class_md_sel = ioadr == 16'h03c8;
 assign      s4_class_lo_sel = ioadr == 16'h03c9;
 assign      s4_dclk_up_sel = ioadr == 16'h03ca;
 assign      s4_dclk_hi_sel = ioadr == 16'h03cb;
 assign      s4_dclk_md_sel = ioadr == 16'h03cc;
 assign      s4_dclk_lo_sel =            ioadr == 16'h03cd;
 assign      s4_fhsmisc_sel = ioadr == 16'h03cf;

 assign      s5_nap_hi_sel =             ioadr == 16'h04cl;
 assign      s5_nap_lo_sel =             ioadr == 16'h04c2;
 assign      s5_uap_sel =                ioadr == 16'h04c3;
 assign      s5_lap_hi_sel =             ioadr == 16'h04c4;
 assign      s5_lap_md_sel =             ioadr == 16'h04c5;
 assign      s5_lap_lo_sel =             ioadr == 16'h04c6;
 assign      s5_class_hi_sel = ioadr == 16'h04c7;
 assign      s5_class_md_sel = ioadr == 16'h04c8;
 assign      s5_class_lo_sel = ioadr == 16'h04c9;
 assign      s5_dclk_up_sel = ioadr == 16'h04ca;
 assign      s5_dclk_hi_sel = ioadr == 16'h04cb;
 assign      s5_dclk_md_sel = ioadr == 16'h04cc;
 assign-      s5_dclk_lo_sel =           ioadr == 16'h04cd;
 assign      s5_amaddr_sel = ioadr == 16'h04ce;
 assign      s5_fhsmisc_sel =           ioadr == 16'h04cf;

 assign      s6_nap_hi_sel =             ioadr == 16'h05c1;
 assign      s6_nap_lo_sel =             ioadr == 16'h05c2;
 assign      s6_uap_sel =                ioadr == 16'h05c3;
 assign      s6_lap_hi_sel =             ioadr == 16'h05c4;
 assign      s6_lap_md_sel =             ioadr == 16'h05c5;
 assign      s6_lap_lo_sel =             ioadr == 16'h05c6;
 assign      s6_class_hi_sel = ioadr == 16'h05c7;
 assign      s6_class_md_sel = ioadr == 16'h05c8;
 assign      s6_class_lo_sel = ioadr == 16'h05c9;
 assign      s6_dclk_up_sel = ioadr == 16'h05ca;
 assign      s6_dclk_hi_sel = ioadr == 16'h05cb;
 assign      s6_dclk_md_sel = ioadr == 16'h05cc;
 assign      s6_dclk_lo_sel = ioadr == 16'h05cd;
 assign      s6_amaddr_sel =             ioadr == 16'h05ce;
 assign      s6_fhsmisc_sel = ioadr == 16'h05cf;

 assign      s7_nap_hi_sel =             ioadr == 16'h06c1;
 assign      s7_nap_lo_sel =             ioadr == 16'h06c2;
 assign      s7_uap_sel =                ioadr == 16'h06c3;
 assign       s7_lap_hi_sel =            ioadr == 16'h06c4;
 assign     s7_lap_md_sel =             ioadr == 16'h06c5;
 assign      s7_lap_lo_sel =             ioadr == 16'h06c6;
 assign      s7_class_hi_sel = ioadr == 16'h06c7;
 assign      s7_class_md_sel = ioadr == 16'h06c8;
 assign      s7_class_lo_sel = ioadr == 16'h06c9;
 assign s7_dclk_up_sel = ioadr == 16'h06ca;
 assign      s7_dclk_hi_sel = ioadr == 16'h06cb;
 assign      s7_dclk_md_sel = ioadr == 16'h06cc;
 assign      s7_dclk_lo_sel = ioadr == 16'h06cd;
 assign      s7_amaddr_sel =             ioadr == 16'h06ce;
 assign      s7_fhsmisc_sel = ioadr == 16'h06cf;

 assign      s8_nap_hi_sel =             ioadr == 16'h07c1;
 assign      s8_nap_lo_sel =             ioadr == 16'h07c2;
 assign      s8_uap_sel =                ioadr == 16'h07c3;
 assign      s8_1ap_hi_sel =             ioadr == 16'h07c4;
 assign      s8_lap_md_sel =             ioadr == 16'h07c5;
 assign      s8_lap_lo_sel =             ioadr == 16'h07c6;
 assign      s8_class_hi_sel = ioadr == 16'h07c7;
 assign      s8_class_md_sel = ioadr == 16'h07c8;
 assign      s8_class_lo_sel = ioadr == 16'h07c9;
 assign      s8_dclk_up_sel = ioadr ==  16'h07ca;
 assign      s8_dclk_hi_sel = ioadr ==  16'h07cb;
 assign      s8_dclk_md_sel = ioadr ==  16'h07cc;
 assign      s8_dclk_lo_sel = ioadr ==  16'h07cd;
 assign      s8_amaddr_sel =             ioadr == 16'h07ce;
 assign      s8_fhsmisc_sel = ioadr ==  16'h07cf;
```

## Claims

1. A method of performing a context switch operation, **characterized by**:
accessing context by the host computer data in a first register (46a) of a peripheral system (972), said first register (46a) being associated with a first index value, when a context index register (42) is set to said first index value;
receiving, by said peripheral system (972), a second index value from the host computer (970) associated with said peripheral system (972);
setting said context index register (42) to said second index value to perform a context, switching by
accessing context data in a second register (46b) of said peripheral system (972), said second register (46b) being associated with said second index value, when said context index register (42) is set to said second index value,
wherein said first (46a) and second (46b) registers are collocated with said peripheral system (972).

2. The method recited in claim 1**,** wherein said context data further is **characterized by**:
a device address for one of a plurality of network devices;
a class value;
a clock offset value; and
an active member address.

3. The method recited in claim 1, wherein the step of accessing context data in a second register (46b) further is **characterized by**:
receiving, by said peripheral system (972), an address value that identifies an address within said second register (46b);
receiving, by said peripheral system (972), a control input that identifies at least one of a plurality of functions, said plurality of functions including a read function and a write function;
receiving, by said peripheral system (972), if said control input identifies said write function, a data value; and
if said control input identifies said write function, writing said data value to said second register (46b) at the address identified by said address value.

4. The method recited in claim 1, wherein the step of accessing context data in a second register (46b) further is **characterized by**:
receiving, by said peripheral system (972), an address value that identifies an address within said second register (46b);
receiving, by said peripheral system (972), a read control input; and
providing the contents of said second register at the address identified by said address value to the host computer (970).

5. The method recited in claim 1, wherein the step of accessing context data in a second register (46b) further is **characterized by**:
receiving, by said peripheral system (972), an address value that identifies an address within said second register (46b);
receiving, by said peripheral system (972), a data value;
receiving, by said peripheral system (972), a write control input; and
writing said data value to said second register (46b) at the address identified by said address value.

6. The method recited in claim 1, wherein the step of accessing context data in a second register (46b) further is **characterized by**:
receiving, by said peripheral system (972), an address value that identifies an address within said second register (46b);
receiving, by said peripheral system (972), a control input that identifies one of a plurality of functions, said plurality of functions including a read function and a write function; and
if said control input identifies said read function, providing the contents of said second register at the address identified by said address value to said host computer (970).

7. A system, **characterized by**:
a host computer (970), said host computer (970) including a microprocessor;
at least one peripheral system (972) coupled to said host processor, said peripheral system (972) including a first register (46a), said first register (46a) being associated with a first index value, a second register (46b), said second register (46b) being associated with a second index value, wherein said first (46a) and second (46b) registers are collocated with said peripheral system (972), and a context index register (42);
a receiving circuit being included in said at least one peripheral system (972), said receiving circuit being configured to receive said second index value from said host computer (970),
a setting circuit being configured to set said context index register (42) to said second index value to perform a context switching;
a register access circuit coupled to the host computer, said register access circuit being configured to perform said context switching by accessing context data in said first register (46a) when said context index register (42) is set to said first index value, and by accessing context data in said second register (46b) when said context index register (42) is set to said second index value.

8. The system recited in claim 7 wherein said peripheral system (972) includes a state machine module, said state machine module being **characterized by**:
an address portion;
a control portion; and
a data portion, wherein said first register (46a) and said second register (46b) being included in said data portion.

9. The system recited in claim 8 wherein said address portion is **characterized by** said register access circuit.

10. The system recited in claim 7 wherein said peripheral system (972) is **characterized by** a plurality of context registers, wherein each of said plurality of context registers is associated with one of a plurality of index values.

## Patentansprüche

1. Verfahren zum Durchführen einer Kontextumschalte-Operation, **gekennzeichnet durch**:
Zugreifen auf Kontextdaten in einem ersten Register (46a) eines peripheren Systems (972) **durch** den Host-Computer, wobei das erste Register (46a) einem ersten Indexwert zugeordnet ist, wenn ein Kontextindex-Register (42) auf den ersten Indexwert gesetzt ist;
Empfangen eines zweiten Indexwertes von dem Host-Computer (970), der dem peripheren System (972) zugeordnet ist, **durch** das periphere System (972); Setzen des Kontextindex-Registers (42) auf den zweiten Indexwert, um eine Kontextumschaltung durchzuführen mittels
Zugreifen auf Kontextdaten in einem zweiten Register (46b) des peripheren Systems (972), wobei das zweite Register (46b) dem zweiten Indexwert zugeordnet ist, wenn das Kontextindex-Register (42) auf den zweiten Indexwert gesetzt ist,
wobei das erste (46a) und das zweite (46b) Register zusammen mit dem peripheren System (972) angeordnet sind.

2. Verfahren nach Anspruch 1, wobei die Kontextdaten ferner **gekennzeichnet sind durch**:
eine Vorrichtungsadresse für eine von einer Mehrzahl von Netzwerkvorrichtungen;
einen Klassenwert;
einen Taktversatzwert; und
eine Active Member Address.

3. Verfahren nach Anspruch 1, wobei der Schritt des Zugreifens auf Kontextdaten in einem zweiten Register (46b) ferner **gekennzeichnet ist durch**:
Empfangen eines Adresswertes, der eine Adresse in dem zweiten Register (46b) identifiziert, **durch** das periphere System (972);
Empfangen eines Steuereingangs, der zumindest eine von einer Mehrzahl von Funktionen identifiziert, **durch** das periphere System (972), wobei die Mehrzahl von Funktionen eine Lesefunktion und eine Schreibfunktion umfasst;
Empfangen eines Datenwertes **durch** das periphere System (972), falls der Steuereingang die Schreibfunktion identifiziert; und
falls der Steuereingang die Schreibfunktion identifiziert, Schreiben des Datenwertes in das zweite Register (46b) an der **durch** den Adresswert identifizierten Adresse.

4. Verfahren nach Anspruch 1, wobei der Schritt des Zugreifens auf Kontextdaten in einem zweiten Register (46b) ferner **gekennzeichnet ist durch**:
Empfangen eines Adresswertes, der eine Adresse in dem zweiten Register (46b) identifiziert, **durch** das periphere System (972);
Empfangen eines Lese-Steuereingangs **durch** das periphere System (972); und
Bereitstellen der Inhalte des zweiten Registers an der **durch** den Adresswert identifizierten Adresse für den Host-Computer (970).

5. Verfahren nach Anspruch 1, wobei der Schritt des Zugreifens auf Kontextdaten in einem zweiten Register (46b) ferner **gekennzeichnet ist durch**:
Empfangen eines Adresswertes, der eine Adresse in dem zweiten Register (46b) identifiziert, **durch** das periphere System (972);
Empfangen eines Datenwertes **durch** das periphere System (972);
Empfangen eines Schreib-Steuereingangs **durch** das periphere System (972); und
Schreiben des Datenwertes in das zweite Register (46b) an der **durch** den Adresswert identifizierten Adresse.

6. Verfahren nach Anspruch 1, wobei der Schritt des Zugreifens auf Kontextdaten in einem zweiten Register (46b) ferner **gekennzeichnet ist durch**:
Empfangen eines Adresswertes, der eine Adresse in dem zweiten Register (46b) identifiziert, **durch** das periphere System (972);
Empfangen eines Steuereingangs, der eine von einer Mehrzahl von Funktionen identifiziert, **durch** das periphere System (972), wobei die Mehrzahl von Funktionen eine Lesefunktion und eine Schreibfunktion umfasst; und
falls der Steuereingang die Lesefunktion identifiziert, Bereitstellen des Inhalts des zweiten Registers an der **durch** den Adresswert identifizierten Adresse für den Host-Computer (970).

7. System, **gekennzeichnet durch**:
einen Host-Computer (970), wobei der Host-Computer (970) einen Mikroprozessor aufweist;
zumindest ein mit dem Host-Prozessor gekoppeltes peripheres System (972), wobei das periphere System (972) aufweist: ein erstes Register (46a), wobei das erste Register (46a) einem ersten Indexwert zugeordnet ist, ein zweites Register (46b), wobei das zweite Register (46b) einem zweiten Indexwert zugeordnet ist, wobei das erste (46a) und das zweite (46b) Register zusammen mit dem peripheren System (972) angeordnet sind, und ein Kontextindex-Register (42);
wobei eine Empfangsschaltung in dem zumindest einen peripheren System (972) enthalten ist, wobei die Empfangsschaltung dafür konfiguriert ist, den zweiten Indexwert von dem Host-Computer (970) zu empfangen,
eine Einstellschaltung, die dafür konfiguriert ist, das Kontextindex-Register (42) auf den zweiten Iridexwert zu setzen, um eine Kontextumschaltung durchzuführen;
eine mit dem Host-Computer gekoppelte Registerzugriffsehaltung, wobei die Registerzugriffschaltung dafür konfiguriert ist, die Kontextumschaltung **durch** Zugreifen auf Kontextdaten in dem ersten Register (46a) durchzuführen, wenn das Kontextindex-Register (42) auf den ersten Indexwert gesetzt ist, und **durch** Zugreifen auf Kontextdaten in dem zweiten Register (46b) durchzuführen, wenn das Kontextindex-Register (42) auf den zweiten Indexwert gesetzt ist.

8. System nach Anspruch 7, wobei das periphere System (972) ein Zustandsmaschinen-Modul aufweist, wobei das Zustandsmaschinen-Modul **gekennzeichnet ist durch**:
einen Adressenabschnitt;
einen Steuerabschnitt; und
einen Datenabschnitt, wobei das erste Register (46a) und das zweite Register (46b) in dem Datenabschnitt enthalten sind.

9. System nach Anspruch 8, wobei der Adressenabschnitt durch die Registerzugriffschaltung **gekennzeichnet** ist.

10. System nach Anspruch 7, wobei das periphere System (972) durch eine Mehrzahl von Kontextregistem **gekennzeichnet** ist, wobei jedes der Mehrzahl von Kontextregistem einem von einer Mehrzahl von Indexwerten zugeordnet ist.

## Revendications

1. Procédé pour effectuer une opération de commutation de contexte, **caractérisé par** :
l'accession à des données de contexte par l'ordinateur serveur dans un premier registre (46a) d'un système périphérique (972), ledit premier registre (46a) étant associé à une première valeur d'index lorsqu'un registre d'index de contexte (42) est fixé sur ladite première valeur d'index ;
la réception, par ledit système périphérique (972), d'une seconde valeur d'index à partir de l'ordinateur serveur (970) associé audit système périphérique (972) ;
la fixation dudit registre d'index de contexte (42) à ladite seconde valeur d'index pour effectuer une commutation de contexte par
l'accession à des données de contexte dans un second registre (46b) dudit système périphérique (972), ledit second registre (46b) étant associé à ladite seconde valeur d'index, lorsque ledit registre d'index de contexte (42) est fixé sur ladite seconde valeur d'index,
dans lequel lesdits premier (46a) et second (46b) registres sont co-situés avec ledit système périphérique (972) .

2. Procédé selon la revendication 1, dans lequel lesdites données de contexte sont, de plus, **caractérisées par** :
une adresse de dispositif pour l'un d'une pluralité de dispositifs de réseau ;
une valeur de classe ;
une valeur de décalage d'horloge ; et
une adresse d'élément actif.

3. Procédé selon la revendication 1, dans lequel l'étape d'accession aux données de contexte dans un second registre (46b) est, de plus, **caractérisée par** :
la réception, par ledit système périphérique (972), d'une valeur d'adresse qui identifie une adresse à l'intérieur dudit second registre (46b) ;
la réception, par ledit système périphérique (972), d'une entrée de commande qui identifie au moins l'une d'une pluralité de fonctions, ladite pluralité de fonctions comprenant une fonction de lecture et une fonction d' écriture ;
la réception, par ledit système périphérique (972), si ladite entrée de commande identifie ladite fonction d'écriture, d'une valeur de données ; et
si ladite entrée de commande identifie ladite fonction d'écriture, écriture de ladite valeur de données sur ledit second registre (46b) à l'adresse identifiée par ladite valeur d'adresse.

4. Procédé selon la revendication 1, dans lequel l'étape d'accession aux données de contexte dans un second registre (46b) est, de plus, **caractérisée par** :
la réception, par ledit système périphérique (972), d'une valeur d'adresse qui identifie une adresse à l'intérieur dudit second registre (46b) ;
la réception, par ledit système périphérique (972), d'une entrée de commande de lecture ; et
la mise à disposition des contenus dudit second registre à l'adresse identifiée par ladite valeur d'adresse à l'ordinateur serveur (970).

5. Procédé selon la revendication 1, dans lequel l'étape d'accession aux données de contexte dans un second registre (46b) est, de plus, **caractérisée par** :
la réception, par ledit système périphérique (972), d'une valeur d'adresse qui identifie une adresse à l'intérieur dudit second registre (46b) ;
la réception, par ledit système périphérique (972), d'une valeur de données ;
la réception, par ledit système périphérique (972), d'une entrée de commande d'écriture ; et
l'écriture de ladite valeur de donnée sur ledit second registre (46b) à l'adresse identifiée par ladite valeur d'adresse.

6. Procédé selon la revendication 1, dans lequel l'étape d'accession aux données de contexte dans un second registre (46b) est, de plus, **caractérisée par** :
la réception, par ledit système périphérique (972), d'une valeur d'adresse qui identifie une adresse à l'intérieur dudit second registre (46b) ;
la réception, par ledit système périphérique (972), d'une entrée de commande qui identifie l'une d'une pluralité de fonctions, ladite pluralité de fonctions comprenant une fonction de lecture et une fonction d'écriture ; et
si ladite entrée de commande identifie ladite fonction de lecture, la mise à disposition des contenus dudit second registre à l'adresse identifiée par ladite valeur d'adresse sur ledit ordinateur serveur (970).

7. Système **caractérisé par** :
un ordinateur serveur (970), ledit ordinateur serveur (970) comprenant un microprocesseur ;
au moins un système périphérique (972) couplé audit processeur serveur, ledit système périphérique (972) comprenant un premier registre (46a), ledit premier registre (46a) étant associé à une première valeur d'index, un second registre (46b), ledit second registre (46b) étant associé à une seconde valeur d'index, dans lequel lesdits premier (46a) et second (46b) registres sont co-situés avec ledit système périphérique (972), et un registre d'index de contexte (42) ;
un circuit de réception étant incorporé dans ledit au moins un système périphérique (972), ledit circuit de réception étant configuré pour recevoir ladite seconde valeur d'index en provenance dudit ordinateur serveur (970),
un circuit de fixation étant configuré pour fixer ledit registre d'index de contexte (42) sur ladite seconde valeur d'index pour effectuer une commutation du contexte ;
un circuit d'accès de registre couplé à l'ordinateur serveur, ledit circuit d'accès de registre étant configuré pour effectuer ladite commutation de contexte par accession des données de contexte dans ledit premier registre (46a) lorsque ledit registre d'index de contexte (42) est fixé sur ladite première valeur d'index, et par accession des données de contexte dans ledit second registre (46b) lorsque ledit registre d'index de contexte (42) est fixé sur ladite seconde valeur d'index.

8. Système selon la revendication 7, dans lequel ledit système périphérique (972) comprend un module de machine d'état, ledit module de machine d'état étant **caractérisé par** :
une partie d'adresse ;
une partie de commande ; et
une partie de données, dans lequel ledit premier registre (46a) et ledit second registre (46b) sont incorporés dans ladite partie de données.

9. Système selon la revendication 8, dans lequel ladite partie d'adresse est **caractérisée par** ledit circuit d'accès de registre.

10. Système selon la revendication 7, dans lequel ledit système périphérique (972) est **caractérisé par** une pluralité de registres de contexte, dans lequel chacune de ladite pluralité de registres de contexte est associée à l'une d'une pluralité de valeurs d'index.
